# EUROPÄISCHE PATENTSCHRIFT

(11) **EP 0 755 948 B1**
(45) Veröffentlichungstag und Bekanntmachung des Hinweises auf die Patenterteilung: **04.07.2001**
(21) Anmeldenummer: 96810404.2
(22) Anmeldetag: 18.06.1996
(51) Int. Cl.: C08F 2/44, C08K 5/00, C08F 10/00, C08F 4/64

(54) **Verfahren zur Herstellung von stabilisierten Olefinpolymeren**
Process for the manufacture of stabilised olefin polymers
Procédé pour la fabrication de polymères oléfiniques stabilisés

(30) Priorität: 29.06.1995 CH 191295
(43) Veröffentlichungstag der Anmeldung: 29.01.1997
(73) Patentinhaber: Ciba Specialty Chemicals Holding Inc., 4057 Basel (CH)
(72) Erfinder: Rotzinger, Bruno, Dr., 4127 Birsfelden (CH); Schmutz, Thomas, 4125 Riehen (CH); Brunner, Martin, 1723 Marly (CH); Stauffer, Werner, 1700 Fribourg (CH)

(56) Entgegenhaltungen:
- EP-A- 0 003 836
- EP-A- 0 076 576
- EP-A- 0 192 987
- EP-A- 0 511 665
- EP-A- 0 544 308
- EP-A- 0 630 910
- EP-A- 0 644 206
- WO-A-96/04318
- WO-A-96/13531
- C.-E. WILEN ET AL.: "polar activation in copolymerization of propylene and 6-tert-butyl-2-(1,1-dimethylhept-6-enyl)-4 -methylphenol over..." MACROMOLECULES, Bd. 27, Nr. 15, 1994, Seiten 4051-4057, XP002045523

## Beschreibung

Die vorliegende Erfindung betrifft ein Verfahren zur Herstellung von stabilisierten Olefinpolymeren, wobei während der Polymerisation eine Phosphor(III)-verbindung und ein sterisch gehindertes Phenol zugegeben werden.

Die Polymerisation von Olefinen mittels metallorganischen Komplexkatalysatoren (z.B. Ziegler-Natta- Katalysatoren) führt üblicherweise zu einem feinpulverigen Polymerisat, das vor der formgebenden Verarbeitung in einem Extruder granuliert wird. Bei dieser Granulierung werden dem Polymeren Substanzen wie z.B. Stabilisatoren, korrosionsverhindernde Verbindungen, Farbverbesserer, Antistatika oder sonstige Verarbeitungshilfsmittel zugesetzt. Bei dieser Granulierung wird das Polymer thermisch und frikativ belastet, was zu Schädigungen führen kann. Auch ist eine Granulierung nicht immer möglich, wie z.B. bei hochmolekularen Polymeren. Daher besteht der Wunsch, Zusätze, die für die Verarbeitung bzw. die Langzeitstabilität wichtig sind, bereits bei der Polymerisation zuzugeben. Hierzu gehören auch Zusätze, die die korrosive Wirkung des Polymerisats gegenüber Metalloberflächen, im allgemeinen auf Katalysatorreste oder Abbauprodukte des Katalysatorsystems zurückgeführt, vermindern.

Es ist bekannt (EP-A-192 987 oder US-5,244,948), dass bei einer Polymerisation an Trägerkatalysatoren sterisch gehinderte Aminstabilisatoren vom Typ der Polyalkylpiperidine eingesetzt werden können.

Es wurde weiterhin für Polymerisationen an Trägerkatalysatoren vorgeschlagen (EP-A-0 254 348), organische Phosphite oder Phosphonite während der Polymerisation als Antioxidantien zuzusetzen.

Neuerdings erlauben Katalysatorsysteme basierend auf einem Übergangsmetallocenkomplex die Herstellung von Polymeren mit einer besonders engen Molekulargewichtsverteilung oder von (Co)Polymeren, welche einen besonderen Aufbau aufweisen. Diese Systeme können entweder als homogene Katalysatorsysteme vorliegen oder als Trägerkatalysatoren. Nähere Ausführungen zu den möglichen Katalysatorsystemen finden sich beispielsweise in EP-A-0 563 917, EP-A-0 578 838, US-4,659,685, US-5,240,894 und WO 92/00333. Zur Erzielung der technisch erforderlichen Stabilität gegenüber vor allem Wärme und Licht werden auch diese Polymere üblicherweise unter Zusatz diverser Additive granuliert.

Überraschend wurde nunmehr gefunden, dass der Zusatz von Phosphor(III)-verbindungen, sterisch gehinderten Aminen, sterisch gehinderten Phenolen oder Säurefängern die Polymerisation von Olefinen mit Hilfe von Metallocenkomplexen von Übergangsmetallen nicht beeinträchtigt. Die so erhaltenen Polymere weisen eine ausgezeichneten Stabilität auf.

Die Erfindung betrifft daher ein Verfahren zur Herstellung von Olefinpolymeren durch Polymerisation an einem Übergangsmetallocenkatalysator, dadurch gekennzeichnet, dass man die Polymerisation in Gegenwart einer Phosphor(III)-verbindung und eines sterisch gehinderten Phenols durchführt, wobei die Zugabe erst erfolgt, wenn mindestens 0,1 % des Gesamtumsatzes bereits erfolgt sind.

Die mit diesem Verfahren polymerisierbaren Olefine sind Ethylen und α-Olefine, wie z.B. Propylen, 1-Buten, 4-Methylpenten-1, 5-Methylhexen-1, i-Hexen, i-Octen, Cycloolefine (Cyclopentadien (monomer oder dimer) oder Norbornen) oder Styrol, sowie Gemische von Olefinen wie z.B. Ethylen-Propylen oder Propylen im Gemisch mit kleineren Mengen höherer α-Olefine. Bevorzugt sind hierbei C₂- oder C₃-Olefine, deren Copolymere und Styrol. Von besonderem Interesse ist das Verfahren für die Polymerisation und Copolymerisation von Ethylen und Propylen, insbesondere für hochmolekulares PE oder PP. Unter hochmolekularem PE ist ein PE mit einem hohen Molekulargewicht d.h. MW grösser 250000 beziehungsweise Schmelzindex kleiner 1g/10min bei 5kg und 190°C zu verstehen.

Bei den Übergangsmetallocenkatalysatoren handelt es sich beispielsweise um Verbindungen der Formel {[(R₁)(R₂M)ₐ]^{an+} an/q[LQₘ]^{q-}} (A), worin a 1 oder 2 sowie n und q unabhängig voneinander je eine ganze Zahl von 1 bis 4 sind, M das Kation eines einwertigen bis vierwertigen Metalls aus Gruppe IVb bis Vllb, VIII oder Ib des Periodensystems der Elemente darstellt, m eine der Wertigkeit von L + q entsprechende ganze Zahl ist und Q ein Halogenatom, L ein zweiwertiges bis siebenwertiges Metall oder Nichtmetall, R₁ ein π-Aren und R₂ ein π-Aren oder das Anion eines π-Arens bedeuten. Als π-Arene R₁ und R₂ kommen insbesondere aromatische Gruppen mit 6 bis 24 Kohlenstoffatomen oder heteroaromatische Gruppen mit 3 bis 30 Kohlenstoffatomen in Betracht, wobei diese Gruppen gegebenenfalls durch gleiche oder verschiedene einwertige Reste wie Halogenatome, vorzugsweise Chlor- oder Bromatome, oder C₁-C₈-Alkyl-, C₁-C₈-Alkoxy-, Cyan-, C₁-C₈-Alkylthio-, C₂-C₆-Monocarbonsäurealkylester-, Phenyl-, C₂-C₅- Alkanoyl- oder Benzoylgruppen einfach oder mehrfach substituiert sein können. Diese π-Arengruppen können einkernige, kondensierte mehrkernige oder unkondensierte mehrkernige Systeme darstellen, wobei in den zuletzt genannten Systemen die Kerne direkt oder über Brückenglieder wie -S- oder -O- verknüpft sein können. R₂ als Anion eines π-Arens kann ein Anion eines π-Arens der obengenannten Art sein, zum Beispiel das Indenylanion und insbesondere das Cyclopentadienylanion, wobei auch diese Anionen gegebenenfalls durch gleiche oder verschiedene einwertige Reste wie C₁-C₈-Alkyl-, C₂-C₆-Monocarbonsäurealkylester-, Cyan-, C₂-C₅-Alkanoyl- oder Benzoylgruppen einfach oder mehrfach substituiert sein können.

Die Alkyl-, Alkoxy-, Alkylthio-, Monocarbonsäurealkylester und Alkanoylsubstituenten können dabei geradkettig oder verzweigt sein. Als typische Alkyl-, Alkoxy-, Alkylthio-, Monocarbonsäurealkylester- bzw. Alkanoylsubstituenten seien Methyl, Ethyl, n-Propyl, Isopropyl, n-Butyl, sek.-Butyl, tert.-Butyl, n-Pentyl, n-Hexyl und n-Octyl, Methoxy, Ethoxy, n-Propoxy, Isopropoxy, n-Butoxy, n-Hexyloxy und n-Octyloxy, Methylthio, Aethylthio, n-Propylthio, Isopropylthio, n-Butylthio, n-Pentylthio und n-Hexylthio, Carbonsäuremethyl-, -ethyl-, -n-propyl-, -isopropyl-, -n-butyl- und -n-pentylester bzw. Acetyl, Propionyl, Butyryl und Valeroyl genannt. Dabei sind Alkyl-, Alkoxy-, Alkylthio und Monocarbonsäurealkylestergruppen mit 1 bis 4 und insbesondere 1 oder 2 Kohlenstoffatomen in den Alkylteilen sowie Alkanoylgruppen mit 2 oder 3 Kohlenstoffatomen bevorzugt. Als substituierte π-Arene oder Anionen von substituierten π-Arenen werden solche bevorzugt, die einen oder zwei der obengenannten Substituenten, insbesondere Chlor- oder Bromatome, Methyl-, Ethyl-, Methoxy-, Ethoxy-, Cyan-, Carbonsäuremethyl- oder -ethylestergruppen und Acetylgruppen, enthalten.

Als R₁ und R₂ können gleiche oder verschiedene π-Arene vorliegen. Als heteroaromatische p-Arene eignen sich S-, N und/oder O-Atome enthaltende Systeme. Heteroaromatische π-Arene, die S- und/oder O-Atome enthalten, sind bevorzugt.

Beispiele für geeignete π-Arene sind Benzol, Toluol, Xylole, Aethylbenzol, Methoxybenzol, Aethoxybenzol, Dimethoxybenzol, p-Chlortoluol, Chlorbenzol, Brombenzol, Dichlorbenzol, Acetylbenzol, Trimethylbenzol, Trimethoxybenzol, Naphthalin, 1,2-Dihydronaphthalin, 1,2,3,4-Tetrahydronaphthalin, Methylnaphthaline, Methoxynaphthaline, Aethoxynaphthaline, Chlornaphthaline, Bromnaphthaline, Biphenyl, Inden, Biphenylen, Fluoren, Phenanthren, Anthracen, 9,10-Dihydroanthracen, Triphenylen, Pyren, Naphthacen, Coronen, Thiophen, Chromen, Xanthen, Thioxanthen, Benzothiophen, Naphthothiophen, Thianthren, Diphenylenoxyd, Diphenylsulfid, Acridin und Carbazol.

Wenn a 2 ist, stellt R₂ vorzugsweise je das Anion eines π-Arens dar, und M ist jeweils das gleiche Metallatom.
Beispiele für Anionen substituierter π-Arene sind die Anionen des Methyl-, Ethyl-, n-Propyl- und n-Butylcyclopentadiens, die Anionen des Dimethylcyclopentadiens, der Cyclopentadiencarbonsäuremethyl-und ethylester sowie des Acetylcyclopentadiens, Propionylcyclopentadiens, Cyancyclopentadiens und Benzoylcyclopentadiens. Bevorzugte Anionen sind das Anion des unsubstituierten Indens und insbesondere des unsubstituierten Cyclopentadiens.

Bevorzugt hat a den Wert 1, und R₂ steht für Benzol, Toluol, Xylol, Methoxybenzol, Chlorbenzol, p-Chlortoluol, Naphthalin, Methylnaphthalin, Chlornaphthalin, Methoxynaphthalin, Biphenyl, Inden, Pyren oder Diphenylensulfid, und R₂ steht für das Anion des Cyclopentadiens, Acetylcyclopentadiens oder Indens oder für Benzol, Toluol, Xylol, Trimethylbenzol, Naphthalin oder Methylnaphthalin.

Besonders bevorzugt sind solche Komplexe der Formel (A), worin a 1 ist, R₁ für η⁶-Pyren oder η⁶-Naphthalin und R₂ für das Anion des η⁵-Cyclopentadiens stehen, n vorzugsweise 1 oder 2, insbesondere 1, and q vorzugsweise 1 sind. M ist beispielsweise Ti²⁺, Ti³⁺, Ti⁴⁺, Zr⁺, Zr²⁺, Zr³⁺, Zr⁴⁺, Hf⁺, Hf²⁺, Hf³⁺, Hf⁴⁺, Nb⁺, Nb²⁺, Nb³⁺, Cr⁺, Mo⁺, Mo²⁺, W⁺, W²⁺, Mn⁺, Mn²⁺, Re⁺, Fe²⁺, Co²⁺, Co³⁺, Ni²⁺ oder Cu²⁺. Vorzugsweise ist M ein Titan-, Zirkon- oder Hafniumkation, insbesondere Titan- oder Zirkonkation, und besonders bevorzugt Ti⁴⁺ oder Zr⁴⁺.

Beispiele für geeignete Metalle oder Nichtmetalle L sind Sb, Fe, Sn, Bi, Al, Ga, In, Ti, Zr, Sc, V, Cr, Mn und Cu; Lanthanide wie Ce, Pr und Nd oder Actinide wie Th, Pa, U oder Np. Geeignete Nichtmetalle sind insbesondere B, P und As. L ist vorzugsweise P, As, B oder Sb, wobei P besonders bevorzugt wird.

Komplexe Anionen [LQm]^{q-} sind beispielsweise BF₄⁻, PF₆⁻, AsF₆⁻, SbF₆⁻, FeCl₄⁻, SnCl₆⁻, SbCl₆⁻, und BiCl₆⁻. Die besonders bevorzugten komplexen Anionen sind SbF₆⁻, BF₄⁻, AsF₆⁻ und PF₆⁻.

Die Verbindungen der Formel (A) lassen sich nach an sich bekannten Methoden herstellen, zum Beispiel durch Umsetzung einer Verbindung der Formel {[(R₁)(R₂M)ₐ]^{an+} an/q[X]^{q-} } (B) mit einem Salz eines Anions [Lqₘ]^{q-}, worin a, m, n, q, R₁, R₂, M und L die unter der Formel (A) angegebenen Bedeutungen haben und [X]^{q-} ein von [LQₘ]^{q-} verschiedenes Anion darstellt.

Sowohl die Verbindungen der Formel (B) als auch die Verbindungen der Formel {[(R'₁)(R₂M)ₐ]} (C), worin a und M die oben angegebenen Bedeutungen haben und R'₁ ein π-Aren oder das Anion eines π-Arens und R₂ ein Anion eines π-Arens darstellen, lassen sich durch Umsetzung gleicher oder verschiedener π-Arene in Gegenwart einer Lewis-Säure mit einem Salz eines Metalls aus der Gruppe IVb bis Vllb, VIII oder Ib des Periodensystems herstellen. Die Verbindungen der Formeln (A), (B) und (C) eignen sich auch zur Durchführung eines Ligandenaustauschs, indem man diese Verbindungen in Gegenwart einer Lewis-Säure mit einem von R₁ und/oder R₂ bzw. R'₁ verschiedenen π-Aren umsetzt. In diesen Fällen ist n vorzugsweise 2 und besonders bevorzugt 1.

Verbindungen der Formel(A) worin L ein Metall ist, lassen sich durch Umsetzung gleicher oder verschiedener π-Arene in Gegenwart einer Lewis-Säure mit einem geeigneten Salz eines Metalls aus der Gruppe IVb bis Vllb, VIII oder Ib des Periodensystems der Elemente, z.B. einem Titan-, Zirkon-, Chrom-, Mangan und insbesondere einem Eisensalz, herstellen. Schliesslich kann man auch Verbindungen der Formel (A) in herkömmlicher Weise durch Anionenaus-tausch in Komplexe der Formel (A) mit einem verschiedenen Anion [LQₘ]^{q-} umwandeln.

Bei einer bevorzugten Ausführungsform werden ungeladene π-Komplexe der Formel (C), z.B. Ferrocen oder Bis-(η⁵-indenyl)-eisen(II) als Ausgangsstoffe eingesetzt, und diese werden durch Ligandenaustausch in einen Komplex der Formel (B) umgewandelt, der anschliessend mit einem Salz eines Anions [LQₘ]^{q-} zur Reaktion gebracht wird. Der dabei als Zwischenprodukt erhaltene Komplex der Formel (B) wird üblicherweise nicht isoliert.

Als Salze von Anionen [LQₘ]^{q-} eignen sich beispielsweise Alkali-, Erdalkali- oder Ammoniumsalze. Es wird bevorzugt, Alkalisalze und besonders bevorzugt Natrium- und Kaliumsalze zu verwenden.

Als Lewis-Säuren für die oben beschriebenen Reaktionen eignen sich beispielsweise AlCl₃, AlBr₃, BF₃, SnCl₄ und TiCl₄, wobei AlCl₃ bevorzugt ist. Es kann vorteilhaft sein, die Ligandenaustauschreaktionen unter Zusatz eines Reduktionsmittels, z.B. Aluminium oder Magnesium, zum Reaktionsgemisch durchzuführen, oder nachträglich dem Reaktionsgemisch ein Reduktionsmittel, z.B. Na₂SO₃ oder Ascorbinsäure, zuzusetzen. Aluminium wird als Reduktionsmittel bevorzugt. Die Ligandenaustauschreaktionen werden zweckmässig in einem inerten organischen Lösungsmittel durchgeführt. Geeignete Lösungsmittel sind beispielsweise aliphatische oder cycloaliphatische Kohlenwasserstoffe wie Octan, Nonan, Decan und Cyclohexan. Gewünschtenfalls kann man auch einen Überschuss π-Aren als Lösungsmittel einsetzen.

Die Umsetzung der Verbindungen der Formel (B) mit einem Salz eines Anions [LQₘ]-q und die Anionenaustauschumwandlung von Verbindungen der Formel (A) werden zweckmässig in einem wässrigen oder wässrig-alkoholischen Medium durchgeführt, z.B. in Gemischen aus Wasser und Methanol oder Ethanol. Die Salze der Anionen [LQm]-q werden in mindestens stöchiometrischen Mengen, aber vorzugsweise im Überschuss eingesetzt.

Weiterhin lässt sich im erfindungsgemässen Verfahren ein aus zwei Hauptkomponenten (A-1 und A-2) bestehender Metallocen-Katalysator verwenden.

**Komponente A-1** ist dabei eine Metallocenverbindung. Einsetzbar ist grundsätzlich jedes Metallocen unabhängig von Struktur und Zusammensetzung. Die Metallocene können sowohl verbrückt als auch unverbrückt sein, gleiche oder verschiedene Liganden aufweisen. Es handelt sich um Verbindungen der Metalle der Gruppen IVb, Vb oder Vlb des Periodensystems, z.B. Verbindungen von Titan, Zirkonium, Hafnium, Vanadium, Niob, Tantal, Chrom, Molybdän, Wolfram, bevorzugt von Zirkonium, Hafnium und Titan, insbesondere Zirkonium.

Solche Metallocene sind bekannt und beispielsweise in folgenden Dokumenten beschrieben: EP-A-0 336 127, EP-A-0 336 128, EP-A-0 387 690, EP-A-0 387 691, EP-A-0 302 424, EP-A-0 129 368, EP-A-0 320 762, EP-A-0 284 707, EP-A-0 316 155, EP-A-0 351 392, US 5,017,714, J. Organomet. Chem., 342 (1988) 21.

Hervorzuheben sind Metallocene der allgemeinen Struktur 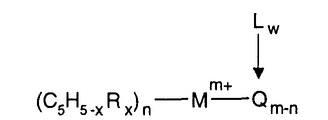 wobei
M^{m+} ein m-wertiges Kation eines Metalls der Gruppen IVb, Vb oder Vlb des Periodensystems, z.B. Titan, Zirkonium, Hafnium, Vanadium, Niob, Tantal, Chrom, Molybdän, Wolfram, bevorzugt Zirkonium, Hafnium und Titan, insbesondere Zirkonium ist;
(C₅H₅₋ₓRₓ) ein Cyclopentadienylring, welcher mit null bis fünf Substituenten R substituiert ist; x eine Zahl null, eins, zwei, drei, vier oder fünf;
n eins oder zwei;
R, unabhängig voneinander, einen C₁-C₂₀-Kohlenwasserstoffrest, einen durch ein oder mehrere Halogenatome substituierten C₁-C₂₀-Kohlenwasserstoffrest, einen metalloidsubstituierten C₁-C₂₀-Kohlenwasserstoffrest oder Halogen; oder zwei benachbarte Reste R einen C₄-C₂₀-Ring; oder, wenn n 1 ist, auch einen Rest B_{y}-JR'_{z-1-y}, worin
J ein Element der Gruppe VA des Periodensystems mit der Koordinationszahl 3 oder ein Element der Gruppe VIA des Periodensystems mit der Koordinationszahl 2, vorzugsweise N, P, O oder S;
R', unabhängig voneinander, einen C₁-C₂₀-Kohlenwasserstoffrest oder einen durch ein oder mehrere Halogenatome substituierten C₁-C₂₀-Kohlenwasserstoffrest;
z die Koordinationszahl des Elementes J;
y null oder eins;
B, wenn y eins ist, ein Brückenglied enthaltend ein Element der Gruppe IVA oder VA des Periodensystems, beispielsweise C₁-C₂₀-Alkylen, einen Di-C₁-C₂₀-alkyl-, C₇-C₂₀-Alkylaryl- oder Di-C₆-C₂₀-aryl-Silicium- oder -Germaniumrest oder einen Alkyl- oder Aryl-Phosphin- oder Aminrest;
oder R, wenn n zwei ist, eine Gruppe ausgewählt aus -M₂(R₁₀)(R₁₁)-,
-M₂(R₁₀)(R₁₁)-M₂(R₁₀)(R₁₁)-, -C(R₁₀)(R₁₁)-C(R₁₀)(R₁₁)-, -O-M₂(R₁₀)(R₁₁)-O-, -C(R₁₀)(R₁₁)-, -O-M₂(R₁₀)(R₁₁)-, -C(R₁₀)(R₁₁)-M₂(R₁₀)(R₁₁)-, -B(R₁₀)-, -Al(R₁₀)- -Ge-, -Sn-, -O-, -S-, -S(O)-, -S(O)₂-, -N(R₁₀)-, -C(O)-, -P(R₁₀)- oder -P(O)(R₁₀)- ist;
wobei
R₁₀ und R₁₁ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R₁₀ und R₁₁ jeweils mit den sie verbindenden Atomen einen Ring bilden und
M₂ Silizium, Germanium oder Zinn ist,
Q, unabhängig voneinander, Wasserstoff, einen C₁-C₅₀-Kohlenwasserstoffrest, einen mit einer oder mehreren elektronenziehenden Gruppen, beispielsweise Halogen oder Alkoxy, substituierter C₁-C₅₀-Kohlenwasserstoffrest oder einen metalloidsubstituierten C₁-C₅₀-Kohlenwasserstoffrest, wobei das Metalloid ein Element der Gruppe IVA des Periodensystems ist, ausgenommen Kohlenwasserstoffreste der Formel (C₅H₅₋ₓRₓ); oder zwei Reste Q Alkyliden, Olefin, Acetylen oder einen cyclometallierten Kohlenwasserstoffrest;
L eine neutrale Lewisbase, beispielsweise Diethylether, Tetrahydrofuran, Dimethylanilin, Anilin, Trimethylphosphin oder n-Butylamin; und
w eine Zahl von 0 bis 3 bedeutet.

Unter Metalloid sind beispielsweise die Elemente Silicium, Germanium, Zinn und Blei zu verstehen.

Ein bevorzugter Metallocentyp entspricht dabei der folgenden Struktur: 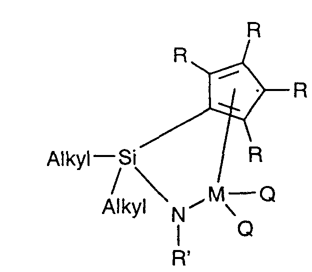 wobei M Ti oder Zr bedeutet und die weiteren Substituenten wie oben angegeben sind.

Weitere Erläuterungen zu Metallocenen des vorstehenden Typs finden sich auch in WO 92/00333.

Für die isospezifische Polymerisation von substituierten Olefinen, z.B. Propen, Buten, Styrol und deren Copolymerisation, auch mit anderen Olefinen, sind Metallocene von Interesse, speziell Zirkonocene, die Indenylderivate als Liganden tragen. Es handelt sich dabei bevorzugt um die Verbindungen der nachstehenden Formel I 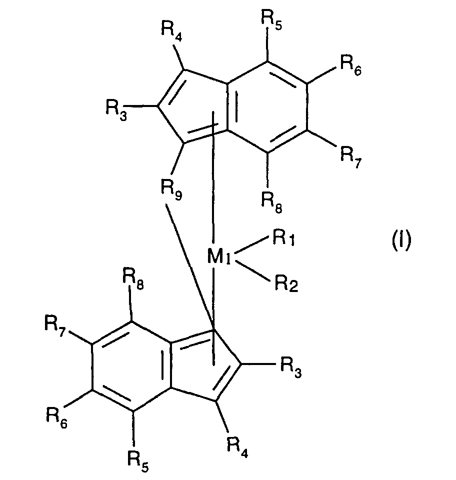 worin
M₁ ein Metall der Gruppe IVb, Vb oder Vlb des Periodensystems ist;
R₁ und R₂ gleich oder verschieden sind und ein Wasserstoffatom, eine C₁-C₁₀-Alkylgruppe, C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe, eine OH-Gruppe oder ein Halogenatom bedeuten,
die Reste R₃ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂, -SR, -OSiR₃, -SiR₃ oder PR₂-Rest bedeuten, worin R ein Halogenatom, eine C₁-C₁₀-Alkylgruppe oder eine C₆-C₁₀-Arylgruppe ist.
R₄ bis R₈ die für R₃ genannten Bedeutungen besitzen oder benachbarte Reste R₄ bis R₈ mit den sie verbindenden Atomen einen aromatischen oder aliphatischen Ring bilden,
R₉ eine Gruppe ausgewählt aus -M₂(R₁₀)(R₁₁)-, -M₂(R₁₀)(R₁₁)-M₂(R₁₀)(R₁₁)-,
-C(R₁₀)(R₁₁)-C(R₁₀)(R₁₁)-, -O-M₂(R₁₀)(R₁₁)-O-, -C(R₁₀)(R₁₁)-, -O-M₂(R₁₀)(R₁₁)-, -C(R₁₀)(R₁₁)-M2(R₁₀)(R₁₁)-, -B(R₁₀)-, -Al(R₁₀)- -Ge-, -Sn-, -O-, -S-, -S(O)-, -S(O)₂-, -N(R₁₀)-, -C(O)-, -P(R₁₀)- oder -P(O)(R₁₀)- ist; wobei
R₁₀ und R₁₁ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R₁₀ und R₁₁ jeweils mit den sie verbindenden Atomen einen Ring bilden und
M₂ Silizium, Germanium oder Zinn ist.

Die den Verbindungen der Formel (I) entsprechenden 4,5,6,7-Tetrahydroindenylanaloga sind ebenfalls von Bedeutung.

In Formel (I) gilt bevorzugt, dass
M₁ Zirkonium ist,
R₁ und R₂ gleich sind und für Methyl oder Chlor, insbesondere Chlor, stehen,
R₃ bis R₈ Wasserstoff oder C₁-C₄-Alkyl bedeuten,
R₉-Si(R₁₀)(R₁₁)-, -C(R₁₀)(R₁₁)- oder -C(R₁₀)(R₁₁)-C(R₁₀)(R₁₁)- bedeutet und
R₁₀ und R₁₁ gleich oder verschieden sind und C₁-C₄-Alkyl oder C₆-C₁₀-Aryl bedeuten.
Insbesondere sind R₁₀ und R₁₁ gleich oder verschieden und bedeuten Methyl oder Phenyl.

Die Indenyl- bzw. Tetrahydroindenylliganden in Formel (I) sind bevorzugt in 2-, 2,4-, 4,7-, 2,6-, 2,4,6-, 2,5,6-, 2,4,5,6- und 2,4,5,6,7-Stellung, insbesondere in 2,4,6-Stellung, substituiert. Die Substitution erfolgt bevorzugt durch eine C₁-C₄-Alkylgruppe wie z.B. Methyl, Ethyl oder Isopropyl. Die 2-Stellung ist bevorzugt durch Methyl substituiert.

Von besonderer Bedeutung sind weiterhin solche Verbindungen der Formel (I), bei denen die Substituenten in 4- und 5-Stellung der Indenylreste (R₅ und R₆) zusammen mit den sie verbindenden Atomen einen Benzolring bilden. Dieses kondensierte Ringsystem kann ebenfalls durch Reste in der Bedeutung von R₃-R₈ substituiert sein. Beispielhaft für solche Verbindungenl ist Dimethylsilandiylbis(2-methyl-4,5-benzoindenyl)-zirkondichlorid zu nennen.

Die Metallocene der Formel (I) sind insbesondere zur Herstellung von hochmolekularen Polyolefinen mit hoher Stereoregularität geeignet.

Von besonderer Bedeutung sind auch Verbindungen der Formel (I) mit (subst.) Phenyl, Naphthyl substituiert in 4-Stellung.

Für die syndiospezifische Polymerisation von substituierten Olefinen, z.B. Propen, Buten, Styrol und deren Copolymerisation, auch mit anderen Olefinen, sind Metallocene der Formel (II) von Interesse: 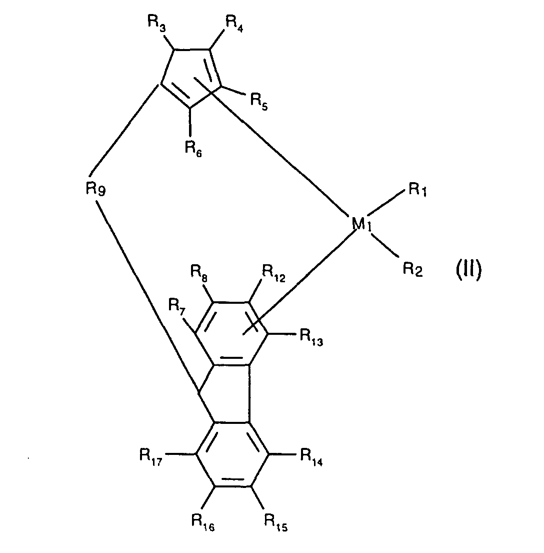 worin
M₁ ein Metall der Gruppe IVb, Vb oder Vlb des Periodensystems ist;
R₁ und R₂ gleich oder verschieden sind und ein Wasserstoffatom, eine C₁-C₁₀-Alkylgruppe, C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe, eine OH-Gruppe oder ein Halogenatom bedeuten,
die Reste R₃ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂, -SR, -OSiR₃, -SiR₃ oder PR₂-Rest bedeuten, worin R ein Halogenatom, eine C₁-C₁₀-Alkylgruppe oder eine C₆-C₁₀-Arylgruppe ist.
R₄ bis R₈ die für R₃ genannten Bedeutungen besitzen oder benachbarte Reste R₄ bis R₈ mit den sie verbindenden Atomen einen aromatischen oder aliphatischen Ring bilden,
R₉ eine Gruppe ausgewählt aus -M₂(R₁₀)(R₁₁)-, -M₂(R₁₀)(R₁₁)-M₂(R₁₀)(R₁₁)-,
-C(R₁₀)(R₁₁)-C(R₁₀)(R₁₁)-, -O-M₂(R₁₀)(R₁₁)-O-, -C(F₁₀)(R₁₁)-, -O-M₂(R₁₀)(R₁₁)-,
-C(R₁₀)(R₁₁)-M₂(R₁₀)(R₁₁)-, -B(R₁₀)-, -Al(R₁₀)- -Ge-, -Sn-, -O-, -S-, -S(O)-, -S(O)₂-, -N(R₁₀)-, -C(O)-, -P(R₁₀)- oder -P(O)(R₁₀)- ist; wobei
R₁₀ und R₁₁ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R₁₀ und R₁₁ jeweils mit den sie verbindenden Atomen einen Ring bilden und
M₂ Silizium, Germanium oder Zinn ist; und
R₁₂ bis R₁₇ die für R₃ genannten Bedeutungen besitzen.

Beispielhaft für erfindungsgemäss verwendbare Metallocene seien die folgenden Verbindungen genannt:
Biscyclopentadienylzirkoniumdichlorid, Biscyclopentadienylzirkoniumdimethyl, Biscyclopentadienylzirkoniumdiphenyl, Biscyclopentadienylzirkoniumdibenzyl, Biscyclopentadienylzirkoniumbistrimethylsilyl, Bis(methylcyclopentadienyl)zirkoniumdichlorid, Bis(1,2-dimethylcyclopentadienyl)zirkoniumdichlorid, Bis(1,3-dimethylcyclopentadienyl)zirkoniumdichlorid, Bis(1,2,4-trimethylcyclopentadienyl)zirkoniumdichlorid, Bis(1,2,3-trimethylcyclopentadienyl)zirkoniumdichlorid, Bis(pentamethylcyclopentadienyl)zirkoniumdichlorid, Bisindenylzirkoniumdichlorid, Bis(tetrahydroindenyl)zirkoniumdichlorid, Dimethylsilyl-bis-1-tetrahydroindenylzirkoniumdichlorid, Dimethylsilyl-bis-1-(2-methyltetrahydroindenyl)-zirkoniumdichlorid, Dimethylsilyl-bis-1-(2,3,5-trimethyl-cyclopentadienyl)zirkoniumdichlorid, Dimethylsilyl-bis-1-(2,4-dimethyl-cyclopentadienyl)-zirkoniumdichlorid, Dimethylsilyl-bis-1-indenylzirkoniumdichlorid, Dimethylsilyl-bis-1-indenylzirkoniumdimethyl, Dimethylgermyl-bis-1-indenylzirkoniumdichlorid, Dimethylsilyl-bis-1-(2-methyl-indenyl)zirkoniumdichlorid, Dimethylsilyl-bis-1-(2-methyl-4-isopropylindenyl)-zirkoniumdichlorid, Phenylmethylsilyl-bis-1-(2-methyl-indenyl)-zirkoniumdichlorid, Dimethylsilyl-bis-1 -(2-methyl-4-ethylindenyl)-zirkoniumdichlorid, Ethylen-bis-1-(4,7-dimethyl-indenyl)-zirkoniumdichlorid, Phenyl(methyl)silyl-bis-1-indenylzirkoniumdichlorid, Phenyl(vinyl)silyl-bis-1-indenylzirkoniumdichlorid, Diphenylsilyl-bis-1-indenylzirkoniumdichlorid, Dimethylsilylbis(1-(2-methyl-4-tertiärbutylindenyl))-zirkondichlorid, Methylphenylsilylbis(1-(2-methyl-4-isopropylindenyl))-zirkondichlorid, Dimethylsilylbis(1-(2-ethyl-4-methylindenyl))-zirkondichlorid, Dimethylsilylbis(1-(2,4-dlmethyllndenyl))-zlrkondichlorid, Dimethylsilylbis(1-(2-methyl-4-ethylindenyl))-zirkondichlorid, Dimethylsilylbis(2-methyl-4,6-diisopropylindenyl)-zirkondichlorid, Dimethylsilylbis-(2,4,6-trimethylindenyl)-zirkondichlorid, Methylphenylsilylbis(2-methyl-4,6-diisopropylindenyl)-zirkondichlorid, 1,2-Ethandiylbis(2-methyl-4,6-diisopropylindenyl)-zirkondichlorid, Dimethylsilyl-(9-fluorenyl)-(cyclopentadienyl)-zirkondichlorid, Diphenylsilyl-(9-fluorenyl)-(cyclopentadienyl)-zirkondichlorid, Diphenylmethylen-(9-fluorenyl)-cyclopentadienyl-zirkondichlorid, Isopropyliden-(9-fluorenyl)-cyclopentadienyl-zirkondichlorid, Phenylmethylmethylen-(9-fluorenyl)-cyclopentadienyl-zirkondichlorid, Isopropyliden-(9-fluorenyl)-(1-(3-isopropyl)cyclopentadienyl)-zirkondichlorid, Isopropyliden-(9-fluorenyl)-(1-(3-methyl)cyclopentadienyl)-zirkondichlorid, Diphenylmethylen-(9-fluorenyl)(1-(3-methyl)cyclopentadienyl)-zirkondichlorid, Methylphenylmethylen-(9-fluorenyl)(1-(3-methyl)cyclopentadienyl)-zirkondichlorid, Dimethylsilyl-(9-fluorenyl)-(1-(3-methyl)-cyclopentadienyl)-zirkondichlorid, Diphenylsilyl-(9-fluorenyl)-(1-(3-methyl)cyclopentadienyl)-zirkondichlorid, Diphenylmethylen-(9-fluorenyl)(1-(3-tert.-butyl)cyclopentadienyl)-zirkondichlorid und lsopropyliden-(9-fluorenyl)(1-(3-tert.-butyl)cyclopentadienyl)-zirkondichlorid.

Chirale Metallocene werden bei der Herstellung des Katalysators bevorzugt als Racemat eingesetzt. Verwendet werden kann aber auch die reine R- oder S-Form. Mit diesen reinen stereoisomeren Formen ist optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochtaktisches Polymeres erzeugen kann. Wird die meso-Form nicht abgetrennt, entsteht neben isotaktischen bzw. syndiotaktischen Polymeren auch ataktisches Polymer. Für bestimmte Anwendungen - weiche Formkörper beispielsweise - oder für die Herstellung von Polyethylentypen kann dies durchaus wünschenswert sein. Die Tren-nung der Stereoisomeren erfolgt nach literaturbekannten Verfahren.

Als **Komponente A-2** kommen beispielsweise die folgenden Verbindungen in Frage.

### a) Aluminoxane

Als Aluminoxan wird bevorzugt eine Verbindung der Formel (III) 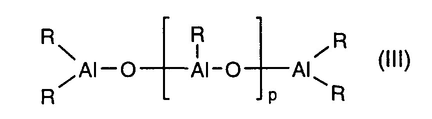 für den linearen Typ und/oder der Formel (IV) 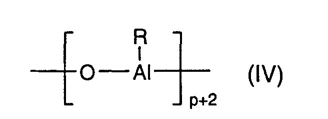 für den cyclischen Typ verwendet, wobei in den Formeln (III) und (IV) die Reste R gleich oder verschieden sein können und eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeutet.

Bevorzugt sind Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40% (Zahl der Reste R) enthalten sind.

Das Aluminoxan kann auf verschiedene Arten nach bekannten Verfahren hergestellt werden. Eine der Methoden ist beispielsweise, dass eine Aluminiumkohlenwasserstoffverbindung und/oder eine Hydridoaliminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R werden entsprechend der gewünschten Zusammensetzung und Reaktivität zwei verschiedene Aluminiumtrialkyle (AIR₃ + AIR'₃) mit Wasser umgesetzt (vgl. S.Pasynkiewicz, Polyhedron 9 (1990) 429 und EP-A-302 424)

Die genaue Struktur der Aluminoxane der Formel (III) und (IV) ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

### b) lonenaustauschverbindungen

lonenaustauschverbindungen sind Verbindungen, welche ein Kation, was irreversibel mit einem Liganden der Komponente A-1 reagiert und ein nichtkoordinierendes Anion enthalten, welches sterisch anspruchsvoll, labil und chemisch inert ist. Durch das Zusammengeben der Komponenten A-1 und A-2 entsteht ein lonenpaar aus dem Kation von A-2 und einem Liganden von A-1. Beispiele für Kationen der Komponente A-2 sind: Bronsted Säuren, wie Ammoniumionen, oder reduzierbare Lewis Säuren, wie Ag⁺ oder Ferrocenionen.

Das als Komponente A-2 verwendbare Aluminoxan kann auch bei der Herstellung eines Trägerkatalysators aus Trimethylaluminium entstehen.

Neben homogenen Katalysatorsystemen können die Metallocene auch als heterogene Katalysatoren verwendet werden. Nach dem Fachmann aus der Literatur bekannten Verfahren wird dabei der Katalysator auf einen anorganischen oder organischen Träger gebracht. Bei den anorganischen Trägermaterialien handelt es sich bevorzugt um Kieselgele; nähere Ausführungen hierzu finden sich beispielsweise in US 5,240,894.

Beispiele für organische Trägermaterialien sind mikroporöse polymere Träger, welche im Handel erhältlich sind (z.B. die ®Accurel-Typen der Fa. AKZO wie ®Accurel-PE, ®Accurel-PP, ® Accurel-PA-6 oder ® Accurel-PA-12 mit einem Holhraumanteil von ca. 75Vol.-%). Die Porengrösse der ®Accurel-Materialien beträgt 0,5-5µm (PP), 1,0-5µm (HDPE), 0,5-3µm (PA-6 und PA-12).

Vorteilhafter Weise wird der mikroporöse, polymere Träger zuvor getrocknet, z.B. durch Behandeln mit Aluminiumalkyl-Lösungen, anschliessend gewaschen und unter Schutzgas inertisiert.

Dies geschieht bevorzugt in der Weise, dass man zunächst das Aluminoxan in einem geeigneten Lösungsmittel, z.B. Pentan, Hexan, Heptan, Toluol oder Dichlormethan, mit mindestens einem Metallocen durch intensive Mischung, z.B. durch Verrühren, zur Reaktion bringt. Die Reaktionstemperatur beträgt bevorzugt -20 bis +120°C, insbesondere 15-40°C. Das molare Verhältnis Aluminium zu Übergangsmetall M des Metallocens liegt bevorzugt zwischen 10:1 und 10.000:1, insbesondere zwischen 100:1 und 2000:1. Die Reaktionszeit beträgt allgemein zwischen 5 und 120 Minuten, bevorzugt 10-30 Minuten. Man arbeitet vorzugsweise bei einer Aluminium-Konzentration von grösser 0,01 mol/Liter, insbesondere grösser 0,5 mol/Liter. Die Reaktion wird unter Inertbedingungen durchgeführt.

Anstelle des Aluminoxans kann auch ein Gemisch eines Aluminoxans mit einer weiteren Aluminiumalkylverbindung wie z.B. Trimethyl-, Triethyl- oder Triisobutylaluminium für die beschriebene Reaktion mit dem Metallocen verwendet werden.

Nach erfolgter Reaktion kann z.B. im Vakuum das Lösungsmittel teilweise entfernt oder nach Aufkonzentrieren durch ein anderes Lösungsmittel ersetzt werden. Die so hergestellte Lösung wird in geeigneter Weise mit dem mikroporösen, polymeren Träger umgesetzt. Dabei wird der Träger mindestens in einer Menge zugesetzt, deren Poren-Gesamtvolumen die Lösung aus der Vorreaktion aufnehmen kann. Diese Umsetzung erfolgt bevorzugt bei Temperaturen zwischen -20 und +20°C, insbesondere 15-40°C, durch intensive Mischung z.B. durch Verrühren oder Behandlung mit Ultraschall. Es sollte eine gute Homogenisierung erfolgen. Dabei kann der Austausch des Inertgases des Porenvolumens z.B. durch kurzzeitiges Evakuieren beschleunigt werden.

Prinzipiell kann die Herstellung des geträgerten Katalysators auch in einer Eintopfreaktion erfolgen, d.h. alle 3 Ausgangskomponenten werden gleichzeitig in einem geeigneten Lösungs-/Suspensionsmittel miteinander umgesetzt. Dabei sollte die Menge des polymeren Trägers vorzugsweise so bemessen sein, dass er das gesamte Flüssigkeitsvolumen aufnehmen kann.

Der Katalysator kann in einem inerten Suspensionsmittel wie z.B. Heptan, n-Decan, Hexan oder Dieselöl suspendiert oder auch trocken, evtl. nach dem Entfernen des restlichen Lösungsmittels durch einen Trocknungsschritt z.B. im Vakuum, in das Polymerisationssystem eindosiert werden.

Der Katalysator kann vorteilhaft in der Gasphase, im flüssigen Monomer oder in Suspension vorpolymerisiert werden, wobei auf einen Zusatz einer weiteren aluminiumorganischen Verbindung verzichtet werden kann.

Die Polymerisation mit diesen Katalysatoren kann nach bekannten Methoden in flüssiger oder gasförmiger Phase durchgeführt werden. Die flüssige Phase kann z.B. ein aliphatischer Kohlenwasserstoff sein oder das flüssige Monomer selbst. Die Metallocenkatalysatoren können auch in Mischung mit anderen Katalysatorentypen eingesetzt werden, wie beispielsweise Ziegler- oder Phillips-Katalysatoren. Am Ende der Polymerisation wird der Katalysator zerstört, z.B. durch Zugabe von Wasser(dampf), feuchtem Stickstoff, Kohlendioxid oder Alkohol.

Erfindungsgemäss wird die Phosphor(III)-verbindung und das sterisch gehinderte Phenol am Beginn, während oder gegen Ende vor dem Abbruch der Polymerisation dem Polymerisationsmedium zugesetzt. Bei Batchpolymerisationen werden die genannten Verbindungen und gegebenenfalls die weiteren Zusätze vorzugsweise am Beginn zugesetzt. Bei den häufig grosstechnisch durchgeführten kontinuierlichen Polymerisationen werden die genannten Verbindungen und gegebenenfalls die weiteren Zusätze ebenfalls kontinuierlich zugegeben; entweder separat oder gemeinsam mit den Monomeren.

Bevorzugt ist ein verfahren, welches dadurch gekennzeichnet ist, dass als weitere Komponenten sterisch gehindertes Amin un/oder ein Säurefänger zugesetzt werden.

Die erfindungsgemäss zu verwendenden Phosphor(III)-verbindungen sind für sich bekannt als Polymerstabilisatoren; man bezeichnet sie häufig auch als Phosphite und Phosphonite.

Phosphite entsprechen beispielsweise den Formeln V-IX 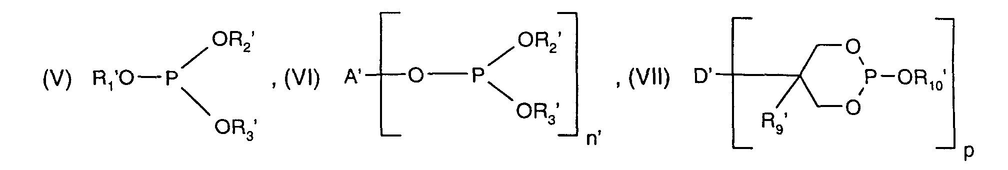 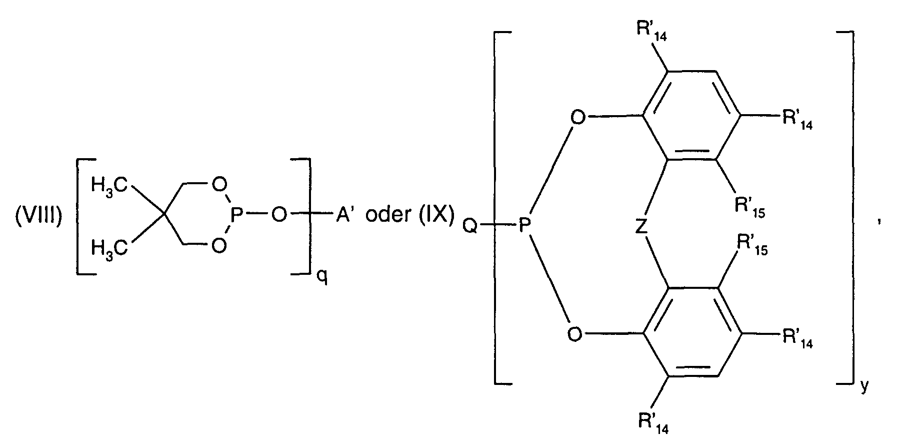 worin
R'₁, R'₂ und R'₃ unabhängig voneinander Alkyl mit 1 bis 18 Kohlenstoffatomen, mit Halogen, -COOR'₄, -CN oder -CONR'₄R'₄ substituiertes Alkyl mit 1 bis 18 Kohlenstoffatomen, durch -S-, -O- oder -NR'₄- unterbrochenes Alkyl mit 2 bis 18 Kohlenstoffatomen, Cycloalkyl mit 5 bis 8 Kohlenstoffatomen, Phenyl oder Naphthyl, mit Halogen, 1 bis 3 Alkylresten oder Alkoxyresten mit insgesamt 1 bis 18 Kohlenstoffatomen substituiertes Phenyl oder Naphthyl, 2,2,6,6-Tetramethylpiperid-4-yl, N-Allyl- oder N-Benzyl- oder N-Alkyl-2,2,6,6-tetramethylpiperid-4-yl mit 1 bis 4 Kohlenstoffatomen im Alkylteil oder N-Alkanoyl-2,2,6,6-tetramethylpiperid-4-yl mit 1 bis 4 Kohlenstoffatomen im Alkylteil, oder N-Alkylen-2,2,6,6-tetramethylpiperidyl oder N-Alkylen-4-alkoxy-2,2,6,6-tetramethylpiperidyl mit 1 bis 3 Kohlenstoffatomen im Alkylenteil und 1 bis 18 Kohlenstoffatomen im Alkoxyteil sind,
R'₄ beziehungsweise die Reste R'₄ unabhängig voneinander Wasserstoff, Alkyl mit 1 bis 18 Kohlenstoffatomen, Cycloalkyl mit 5 bis 12 Kohlenstoffatomen oder Phenylalkyl mit 1 bis 4 Kohlenstoffatomen im Alkylteil,
n' 2, 3 oder 4,
A', wenn n' oder q 2 ist, Alkylen mit 2 bis 12 Kohlenstoffatomen, durch -S-, -O- oder -NR'₄-unterbrochenes Alkylen mit 2 bis 12 Kohlenstoffatomen, worin R'₄ die angegebene Bedeutung hat, oder ein Rest der Formel 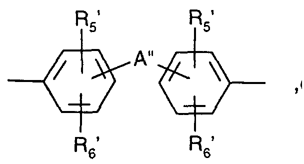 oder 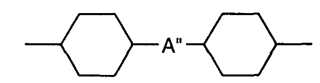 ist,
A', wenn n' oder q 3 ist, ein Rest der Formel CᵣH₂ᵣ₋₁- oder N(CH₂CH₂-)₃,
r 5 oder 6 ist,
A', wenn n' 4 ist, den Rest der Formel C(CH₂-)₄ bedeutet,
R'₅ und R'₆ unabhängig voneinander Wasserstoff oder Alkyl mit 1 bis 8 Kohlenstoffatomen sind,
A" ein Rest der Formel -CH₂-, -CHR'₄-, -CR'₁R'₄-, -S- oder eine direkte Bindung, worin R'₁ und R'₄ die angegebenen Bedeutungen haben,
p 1 oder 2,
D', wenn p 1 ist, Methyl und wenn p 2 ist, -CH₂OCH₂- ist,
R'₉ Methyl ist, und R'₁₀ die Bedeutung von R'₁ hat,
q 2 oder 3 ist,
y 1, 2 oder 3,
Q, wenn y 1 ist, Alkyl mit 1 bis 18 Kohlenstoffatomen, ein Rest der Formel -OR'₁₆, -NR'₁₇R'₁₈ oder Fluor ist,
Q, wenn y 2 ist, ein Rest der Formel -O-A"'-O- oder 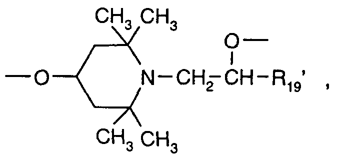 ist,
Q, wenn y 3 ist, ein Rest der Formel R'₄C(CH₂O-)₃, N(C₂H₄O-)₃ oder N(C₃H₆O-)₃ ist, worin
R'₄ die angegebene Bedeutung hat,
R'₁₆ die Bedeutung von R'₁ hat,
R'₁₇ und R'₁₈ unabhängig voneinander Alkyl mit 1 bis 18 Kohlenstoffatomen, Benzyl, Cyclohexyl, ein 2,2,6,6-Tetra- oder 1,2,2,6,6-Pentamethylpiperid-4-ylrest sind, oder R'₁₇ und R'₁₈ zusammen Butylen, Pentylen, Hexylen oder den Rest der Formel -CH₂CH₂-O-CH₂CH₂-bilden,
A"' die Bedeutung von A', wenn n' 2 ist, hat,
R'₁₉ Wasserstoff oder Methyl ist,
die Substituenten R'₁₄ unabhängig voneinander Wasserstoff, Alkyl mit 1 bis 9 Kohlenstoffatomen oder Cyclohexyl sind,
R'₁₅ Wasserstoff oder Methyl und
Z eine direkte Bindung, -CH₂-, -C(R'₁₄-)₂ oder -S- ist, worin die Substituenten R'₁₄ gleich oder verschieden sind und die angegebene Bedeutung haben.

Besonders geeignete Phosphite der Formel (V) sind solche, worin R'₁, R'₂ und R'₃ unabhängig voneinander Alkyl mit 1 bis 18 Kohlenstoffatomen, Phenyl, mit 1 bis 3 Alkylresten mit insgesamt 1 bis 18 Kohlenstoffatomen substituiertes Phenyl oder 2,2,6,6-Tetramethylpiperid-4-yl, insbesondere unabhängig voneinander mit 1 bis 3 Alkylresten mit insgesamt 1 bis 12 Kohlenstoffatomen substituiertes Phenyl sind.

Besonders geeignete Phosphite der Formel (Vl) sind solche, worin A' vorzugsweise, wenn n' 2 ist, Alkylen mit 2 bis 12 Kohlenstoffatomen, -CH₂CH₂-O-CH₂CH₂-,
-CH₂CH₂-O-CH₂CH₂O-CH₂CH₂- oder -CH₂CH₂-NR'₄-CH₂CH₂- ist, oder A', wenn n' 3 ist,
N(CH₂CH₂-)₃ ist, wobei R'₄ Alkyl mit 1 bis 4 Kohlenstoffatomen ist.

Besonders geeignete Phosphite der Formel (VII) sind solche, worin p 1, D' Methyl, R'₉ Methyl und R'₁₀ mit 1 bis 3 Alkylresten mit insgesamt 1 bis 18 Kohlenstoffatomen substituiertes Phenyl ist.

Besonders geeignete Phosphite der Formel (IX) sind solche, worin Q, wenn y 1 ist, ein Rest der Formel -OR'₁₆, -NR'₁₇R'₁₈ oder Fluor ist, oder Q, wenn y 2 ist, ein Rest der Formel -O-CH₂CH₂-NR'₄-CH₂CH₂-O- ist, oder W, wenn y 3 ist, ein Rest der Formel N(CH₂CH₂O-)₃ ist, wobei R'₁₆ Alkyl mit 1 bis 18 Kohlenstoffatomen ist, R'₁₇ und R'₁₈ unabhängig voneinander Alkyl mit 1 bis 18 Kohlenstoffatomen, Cyclohexyl oder Benzyl sind, oder R'₁₇ und R'₁₈ zusammen einen Piperidyl-, Morpholinyl- oder Hexamethyleniminorest bilden, und R'₄ die angegebene Bedeutung hat, Z eine direkte Bindung, -CH₂- oder -CH(CH₃)- ist, und die beiden Substituenten R'₁₄ unabhängig voneinander Alkyl mit 1 bis 4 Kohlenstoffatomen sind, und insbesondere, wenn y 1 ist, Q 2-Ethylhexyloxy oder Fluor, R'₁₄ tert. Butyl, R'₁₅ Wasserstoff und Z -CH₂- oder -CH(CH₃)- ist, oder Q, wenn y 2 ist, ein Rest der Formel -O-CH₂CH₂₋NCH₃-CH₂CH₂-O- ist.

Bevorzugte Phosphite sind beispielsweise Trilaurylphosphit, Trioctadecylphosphit, Distearylpentaerythritdiphosphit oder Tristearyl-sorbit-triphosphit.

Weiterhin sind aromatische Phosphite bevorzugt. Als aromatische Phosphite werden jene bezeichnet, die einen aromatischen Kohlenwasserstoffrest aufweisen, wie beispielsweise einen Phenylrest. Beispiele hierfür sind Triphenylphosphit, Diphenylalkylphosphite, Phenyldialkylphosphite und im einzelnen Tris-(nonylphenyl)-phosphit, Tris-(2,4-di-tert.butylphenyl)-phosphit, Bis-(2,4-di-tert.butylphenyl)-pentaerythritdiphosphit und 2,2'-Ethyliden-bis-(4,6-di-tert.butylphenyl)-fluorophosphit.

Von besonderem Interesse sind Phosphite, welche als Strukturelement die Gruppierung P-O-Ar enthalten, wobei Ar für einen aromatischen Rest, vorzugsweise einen alkylsubstituierten Phenylrest, steht. Als Alkylsubstituenten kommen C₁-C₁₈-Alkylreste oder auch C₅-C₇-Cycloalkylreste in Frage; bevorzugt sind C₁-C₄-Alkylreste und insbesondere tert.-Butyl (in den Formeln als 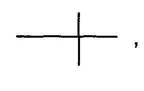 wiedergegeben).

Besonders bevorzugt werden die folgenden Phosphite verwendet:
Tris-(2,4-di-tert.butylphenyl)-phosphit; 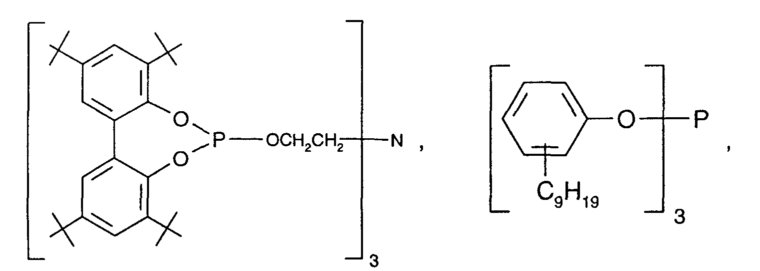 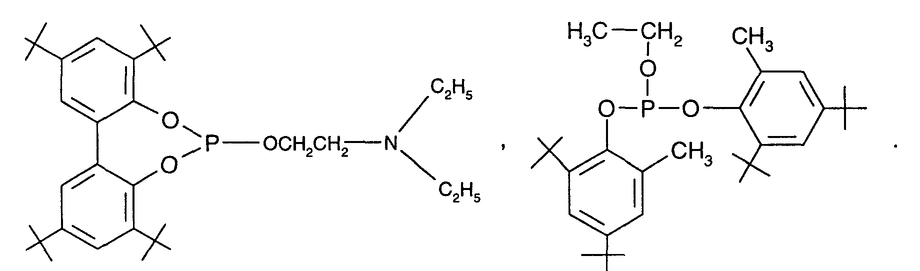
Ganz besonders bevorzugt verwendet man Tris-(2,4-di-tert.butylphenyl)-phosphit oder 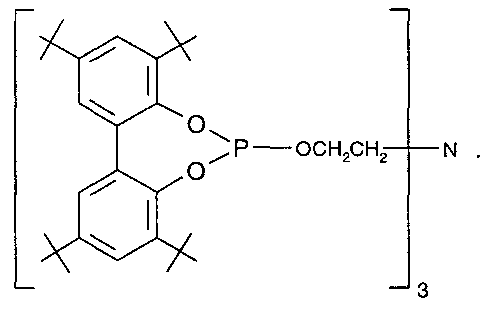
Phosphonite im Sinne dieser Erfindung können beispielsweise durch die Formel X 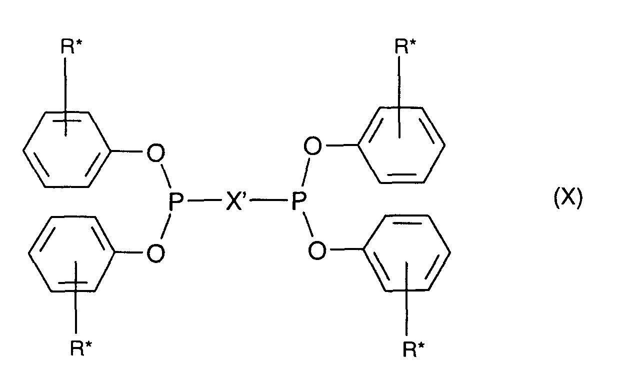
dargestellt werden, wobei R^{*} ein bis fünf C₁-C₈-Alkylreste;
X' ein Rest 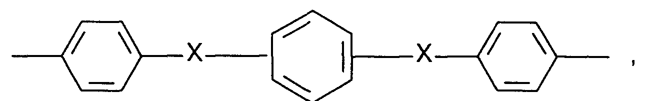 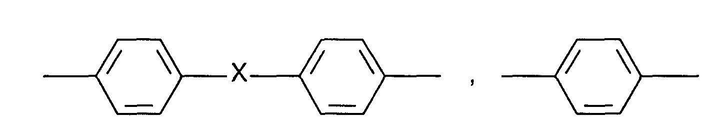 oder 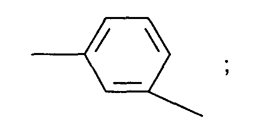
und X eine direkte Bindung, -(O)S(O)-, -C(O)-, -S-, -O- oder Arylen bedeutet.

Arylen bedeutet beispielsweise Naphthylen, m-Phenylen oder p-Phenylen.

Insbesondere bedeutet R^{*} ein bis drei tert.-Butyl- oder Methylgruppen. Insbesondere bedeutet X' einen 4,4'-Biphenyldiylrest.

Ganz besonders bevorzugt ist Tetrakis-(2,4-di-tert-butylphenyl)-4,4'-biphenylendiphosphonit (Irgafos PEPQ).

Anstelle einer einzelnen Phosphor(III)-verbindung kann im Rahmen der vorliegenden Erfindung auch ein Gemisch verschiedener Phosphor(III)-verbindungen verwendet werden.

Die Menge des Zusatzes der Phosphor(III)-verbindung richtet sich nach dem gewünschten Grad der Stabilisierung. Im allgemeinen setzt man 0,01 bis 0,5 Gew.-%, insbesondere 0,05 bis 0,5 Gew.-%, bezogen auf das Polymer, zu.

Die erfindungsgemäss verwendbaren sterisch gehinderten Phenole sind ebenfalls bekannte Stabilisatoren gegen die thermisch-oxidative Alterung von Kunststoffen, insbesondere von Polyolefinen. Beispielsweise enthalten die sterisch gehinderten Phenole mindestens eine Gruppe der Formel XI 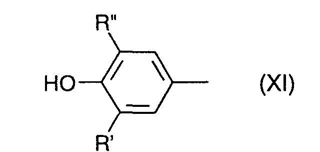 worin R' Wasserstoff, Methyl oder tert.Butyl; und
R" gegebenenfalls substituiertes Alkyl oder gegebenenfalls substituiertes Alkylthioalkyl bedeutet.

Besonders geeignet ist als sterisch gehindertes Phenol eine Verbindung der Formel XII 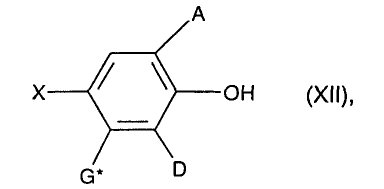 worin
- A: Wasserstoff, C₁-C₂₄-Alkyl, C₅-C₁₂-Cycloalkyl, Phenyl-C₁-C₄-alkyl, Phenyl oder eine Gruppe -CH₂-S-R₂₅ oder 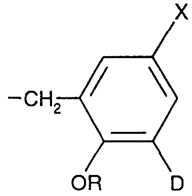 bedeutet,
- D: C₁-C₂₄-Alkyl, C₅-C₁₂-Cycloalkyl, Phenyl-C₁-C₄-alkyl, Phenyl oder eine Gruppe -CH₂-S-R₂₅ bedeutet,
- X: Wasserstoff, C₁-C₁₈-Alkyl oder eine der Gruppen -CₐH₂ₐ-S_{q}-R₂₆, -C_{b}H_{2b}-CO-OR₂₇, -C_{b}H_{2b}-CO-N(R₂₉)(R₃₀), -CH₂N(R₃₄)(R₃₅). 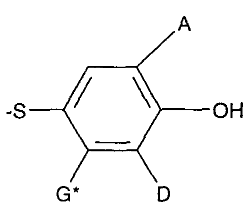 oder 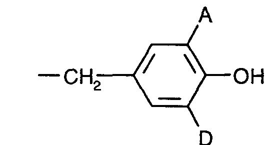 ist,
- R: Wasserstoff oder eine Gruppe der Formel -CO-CH=CH₂ ist,
- G^{*}: für Wasserstoff oder C₁-C₁₂-Alkyl steht,
- R₂₅: C₁-C₁₈-Alkyl, Phenyl oder eine Gruppe -(CH₂)_{c}-CO-OR₂₈ oder -CH₂CH₂OR₃₃ bedeutet,
- R₂₆: Wasserstoff, C₁-C₁₈-Alkyl, Phenyl, Benzyl oder eine Gruppe 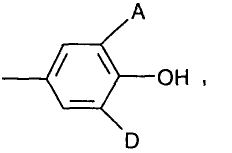 oder -(CH₂)_{c}-CO-OR₂₈ oder -CH₂-CH₂-OR₃₃ bedeutet,
- R₂₇: C₁-C₃₀-Alkyl oder eine der Gruppen -CHR₃₁-CH₂-S-R₃₂, 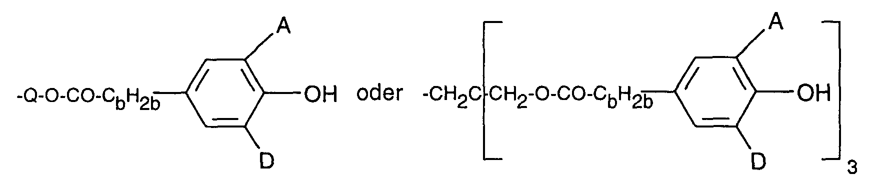 bedeutet, worin Q C₂-C₈-Alkylen, C₄-C₆-Thiaalkylen oder eine Gruppe -CH₂CH₂(OCH₂CH₂)_{d}- ist,
- R₂₈: C₁-C₂₄-Alkyl bedeutet,
- R₂₉: Wasserstoff, C₁-C₁₈-Alkyl oder Cyclohexyl bedeutet,
- R₃₀: C₁-C₁₈-Alkyl, Cyclohexyl, Phenyl, durch C₁-C₁₈-Alkyl substituiertes Phenyl oder eine der Gruppen 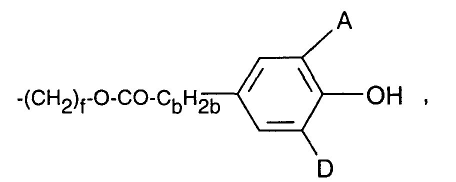 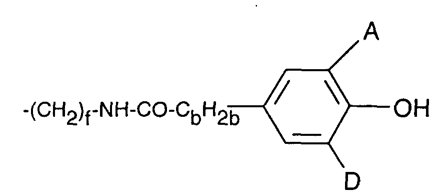 oder 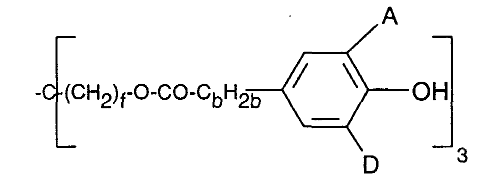 bedeutet, oder R₂₉ und R₃₀ zusammen C₄-C₈-Alkylen, das durch -O- oder -NH-unterbrochen sein kann, bedeuten,
- R₃₁: Wasserstoff, C₁-C₄-Alkyl oder Phenyl bedeutet,
- R₃₂: C₁-C₁₈-Alkyl bedeutet,
- R33: Wasserstoff, C₁-C₂₄-Alkyl, Phenyl, C₂-C₁₈-Alkanoyl oder Benzoyl bedeutet,
- R₃₄: C₁-C₁₈-Alkyl, Cyclohexyl, Phenyl, durch C₁-C₁₈-Alkyl substituiertes Phenyl oder eine Gruppe 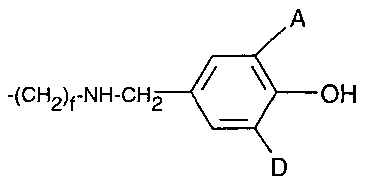 bedeutet,
- R₃₅: Wasserstoff, C₁-C₁₈-Alkyl, Cyclohexyl, oder eine Gruppe 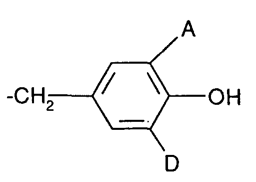 ist, oder
- R₃₄ und R₃₅: zusammen C₄-C₈-Alkylen, das durch -O- oder -NH-unterbrochen sein kann, bedeuten,
a 0, 1, 2 oder 3 ist, b 0, 1, 2 oder 3 ist, c 1 oder 2 ist, d 1 bis 5 ist, f 2 bis 8 ist und q 1, 2, 3 oder 4 ist.

Bevorzugt ist eine Verbindung der Formel XII, worin
- A: Wasserstoff, C₁-C₈-Alkyl, Cyclohexyl, Phenyl oder eine Gruppe -CH₂-S-C₁-C₁₈-Alkyl 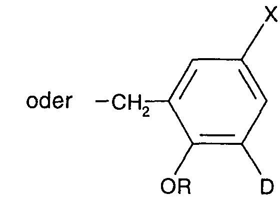 bedeutet,
- D: C₁-C₈-Alkyl, Cyclohexyl, Phenyl oder eine Gruppe -CH₂-S-C₁-C₁₈-Alkyl bedeutet,
- X: Wasserstoff, C₁-C₈-Alkyl oder eine der Gruppen -CₐH₂ₐ-S_{q}-R₂₆, -C_{b}H_{2b}-CO-OR₂₇, -CH₂N(R₃₄)(R₃₅), 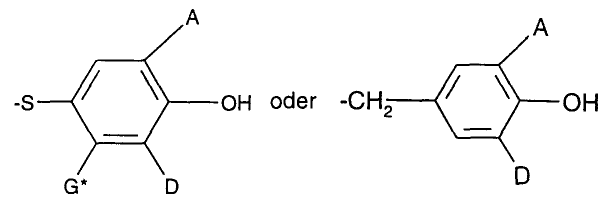 ist,
- R₂₆: C₁-C₁₂-Alkyl, Phenyl oder eine Gruppe -(CH₂)_{c}-CO-OR₂₈ bedeutet,
- R₂₇: C₁-C₁₈Alkyl oder eine Gruppe 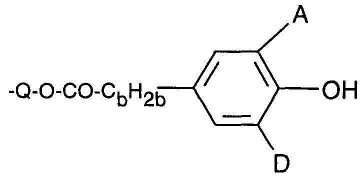 oder 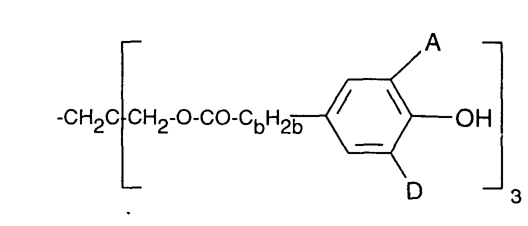 bedeutet, worin Q C₂-C₈-Alkylen, -CH₂-CH₂-S-CH₂CH₂- oder eine Gruppe -CH₂CH₂(OCH₂CH₂)_{d}-ist,
- R₂₈: C₁-C₁₈-Alkyl bedeutet,
- R₃₄ und R₃₅: unabhängig voneinander Wasserstoff oder C₁-C₁₂-Alkyl sind oder
- R₃₄ und R₃₅: zusammen C₄-C₈-Alkylen, das durch -O- oder -NH-unterbrochen sein kann, bedeuten,
a 1 oder 2 ist, b 1 oder 2 ist, c 1 oder 2 ist und d 1, 2 oder 3 ist.

Beispiele für bevorzugte sterisch gehinderten Phenole sind:
2,6-Di-tert.butyl-4-methylphenol, 2-Tert.butyl-4,6-dlmethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(a-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol, 2,6-Di-tert.butyl-4-methoxyphenol, 2,5-Di-tert.butyl-hydrochinon, 2,5-Di-tert.amyl-hydrochinon, 2,6-Di-phenyl-4-octadecyloxyphenol, 2,2'-Thio-bis-(6-tert.butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol), 2,2'-Methylen-bis-(6-tert.butyl-4-methylphenol), 2,2'-Methylen-bis-(6-tert.butyl-4-ethylphenol), 2,2'-Methylen-bis-[4-methyl-6-(a-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methylbenzyl)-6-tert.butyl-4-methyl-phenyl]-terephthalat, 1,3,5-Tris-(3,5-di-tert.butyl-4-hydroxybenzyl)-2,4,6-trimethylbenzol, Bis-(3,5-di-tert.butyl-4-hydroxybenzyl)sulfid, 3,5-Di-tert.butyl-4-hydroxybenzylmercaptoessigsäure-iso-octylester, Bis-(4-tert.butyl-3-hydrox-2,6-dimethylbenzyl)dithiolterephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzylphosphonsäure-dioctadecylester und das Ca-Salz des 3,5-Di-tert.butyl-4-hydroxybenzylphosphonsäure-monoethylester.

Besonders bevorzugt als sterisch gehinderte Phenole sind Verbindungen, die mindestens eine Gruppe der Formel 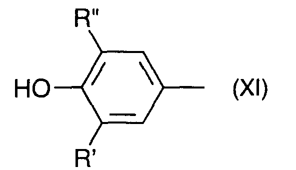 enthalten, worin R' Methyl oder tert.Butyl; und
R" gegebenenfalls substituiertes Alkyl oder gegebenenfalls substituiertes Alkylthioalkyl bedeutet.

Beispiele für solche sterisch gehinderten Phenole sind die Ester von β-(3,5-Di-tert.butyl-4-hydroxyphenyl)-propionsäure und der β-(5-tert.Butyl-4-hydroxy-3-methylphenyl)-propionsäure mit ein- oder mehrwertigen Alkoholen, wie z.B. mit Methanol, Octanol, Octadecanol, 1,6-Hexandiol, Neopentylglycol, Thiodiethylenglycol, Diethylenglycol, Triethylenglycol, Pentaerythrit, Tris-(hydroxyethyl)-iso-cyanurat, N,N'-Bis-(hydroxyethyl)-oxalsäurediamid, sowie die Amide dieser Säuren, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin und N,N'-Bis-(3,5-di-tert.butyl-4-hydroxyphenylpropionyl)-hydrazin.

Ganz besonders bevorzugt als sterisch gehindertes Phenol sind β-(3,5-Di-tert.butyl-4-hydroxyphenyl)-propionsäureoctadecylester, 1,3,5-Tris-(3,5-di-tert.butyl-4-hydroxybenzyl)-2,4,6-trimethylbenzol, 1,1,3-Tris-(5-tert.butyl-4-hydroxy-2-methylphenyl)-butan und Tocopherole (Vitamin E).

Anstelle eines einzelnen sterisch gehinderten Phenols kann im Rahmen der vorliegenden Erfindung auch ein Gemisch verschiedener sterisch gehinderter Phenole verwendet werden.

Die Menge des Zusatzes des sterisch gehinderten Phenols richtet sich nach dem gewünschten Grad der Stabilisierung. Im allgemeinen setzt man 0,01 bis 0,5 Gew.-%, insbesondere 0,05 bis 0,5 Gew.-%, bezogen auf das Polymer, zu.

Die erfindungsgemäss verwendbaren sterisch gehinderten Amine, vorzugsweise Piperidinverbindungen, sind vor allem als Lichtschutzmittel bekannt. Diese Verbindungen enthalten eine Gruppe der Formel XIII 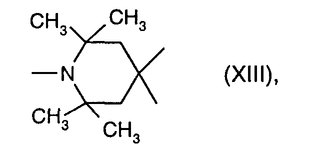 einmal oder mehrmal. Es können Verbindungen von relativ niedrigem Molekulargewicht (<700) oder von höherem Molekulargewicht sein. In letzterem Fall kann es sich auch um oligomere oder polymere Produkte handeln. Bevorzugt sind Tetramethylpiperidinverbindungen mit einem Molekulargewicht grösser als 700, welche keine Estergruppen enthalten.

Von Bedeutung als Stabilisatoren sind insbesondere die folgenden Klassen von Tetramethylpiperidinverbindungen.
a) Verbindungen der Formel XIV 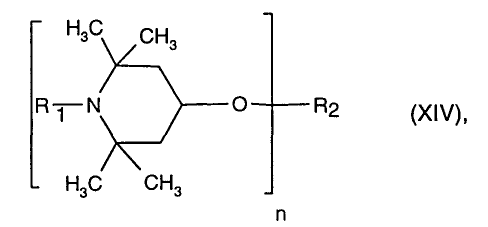 worin n eine Zahl von 1 bis 4, vorzugsweise 1 oder 2 bedeutet, R₁ Wasserstoff, Oxyl, C₁-C₁₂-Alkyl, C₃-C₈-Alkenyl, C₃-C₈-Alkinyl, C₇-C₁₂-Aralkyl, C₁-C₈-Alkanoyl, C₃-C₅-Alkenoyl, Glycidyl oder eine Gruppe -CH₂CH(OH)-Z, worin Z Wasserstoff, Methyl oder Phenyl ist, bedeutet, wobei R₁ vorzugsweise C₁-C₄-Alkyl, Allyl, Benzyl, Acetyl oder Acryloyl ist und R₂, wenn n 1 ist, Wasserstoff, gegebenenfalls durch ein oder mehrere Sauerstoffatome unterbrochenes C₁-C₁₈-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer α,β-ungesättigten Carbonsäure mit 3 bis 5 C-Atomen oder einer aromatischen Carbonsäure mit 7 bis 15 C-Atomen bedeutet, wenn n 2 ist, C₁-C₁₂-Alkylen, C₄-C₁₂-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.
   Bedeuten etwaige Substituenten C₁-C₁₂-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.
   In der Bedeutung von C₁-C₁₈-Alkyl kann R₂ z.B. die oben angeführten Gruppen und dazu noch beispielsweise n-Tridecyl, n-Tetradecyl, n-Hexadecyl oder n-Octadecyl darstellen.
   Wenn R₁ C₃-C₈-Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.
   R₁ ist als C₃-C₈-Alkinyl bevorzugt Propargyl.
   Als C₇-C₁₂-Aralkyl ist R₁ insbesondere Phenethyl und vor allem Benzyl.
   R₁ ist als C₁-C₈-Alkanoyl beispielsweise Formyl, Propionyl, Butyryl, Octanoyl, aber bevorzugt Acetyl und als C₃-C₅-Alkenoyl insbesondere Acryloyl.
   Bedeutet R₂ einen einwertigen Rest einer Carbonsäure, so stellt es beispielsweise einen Essigsäure-, Capronsäure-, Stearinsäure-, Acrylsäure-, Methacrylsäure-, Benzoe- oder β-(3,5-Di-tert.-butyl-4-hydroxyphenyl)-propionsäurerest dar.
   Bedeutet R₂ einen zweiwertigen Rest einer Dicarbonsäure, so stellt es beispielsweise einen Malonsäure-, Bernsteinsäure-, Glutarsäure-, Adipinsäure-, Korksäure-, Sebacinsäure-, Maleinsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.
   Stellt R₂ einen dreiwertigen Rest einer Tricarbonsäure dar, so bedeutet es z.B. einen Trimellitsäure- oder einen Nitrilotriessigsäurerest.
   Stellt R₂ einen vierwertigen Rest einer Tetracarbonsäure dar, so bedeutet es z.B. den vierwertigen Rest von Butan-1,2,3,4-tetracarbonsäure oder von Pyromellitsäure.
   Bedeutet R₂ einen zweiwertigen Rest einer Dicarbaminsäure, so stellt es beispielsweise einen Hexamethylendicarbaminsäure- oder einen 2,4-Toluylen-dicarbaminsäurerest dar.
   Beispiele für Polyalkylpiperidin-Verbindungen dieser Klasse sind folgende Verbindungen:
   1) 4-Hydroxy-2,2,6,6-tetramethylpiperidin
   2) 1-Allyl-4-hydroxy-2,2,6,6-tetramethylpiperidin
   3) 1 -Benzyl-4-hydroxy-2,2,6,6-tetramethylpiperidin
   4) 1-(4-tert.-Butyl-2-butenyl)-4-hydroxy-2,2,6,6-tetramethylpiperidin
   5) 4-Stearoyloxy-2,2,6,6-tetramethylpiperidin
   6) 1-Ethyl-4-salicyloyloxy-2,2,6,6-tetramethylpiperidin
   7) 4-Methacryloyloxy-1,2,2,6,6-pentamethylpiperidin
   8) 1,2,2,6,6-Pentamethylpiperidin-4-yl-β-(3,5-di-tert.-butyl-4-hydroxyphenyl)-propionat
   9) Di-(1-benzyl-2,2,6,6-tetramethylpiperidin-4-yl)-maleinat
   10) Di-(2,2,6,6-tetramethylpiperidin-4-yl)-succinat
   11) Di-(2,2,6,6-tetramethylpiperidin-4-yl)-glutarat
   12) Di-(2,2,6,6-tetramethylpiperidin-4-yl)-adipat
   13) Di-(2,2,6,6-tetramethylpiperidin-4-yl)-sebacat
   14) Di-(1,2,2,6,6-pentamethylpiperidin-4-yl)-sebacat
   15) Di-(1,2,3,6-tetramethyl-2,6-diethyl-piperidin-4-yl)-sebacat
   16) Di-(1-allyl-2,2,6,6-tetramethylpiperidin-4-yl)-phthalat
   17) 1-Propargyl-4-β-cyanoethyloxy-2,2,6,6-tetramethylpiperidin
   18) 1-Acetyl-2,2,6,6-tetramethylpiperidin-4-yl-acetat
   19) Trimellithsäure-tri-(2,2,6,6-tetramethylpiperidin-4-yl)-ester
   20) 1-Acryloyl-4-benzyloxy-2,2,6,6-tetramethylpiperidin
   21) Diethylmalonsäure-di(2,2,6,6-tetramethylpiperidin-4-yl)-ester
   22) Dibutyl-malonsäure-di-(1,2,2,6,6-pentamethylpiperidin-4-yl)-ester
   23) Butyl-(3,5-di-tert.-butyl-4-hydroxybenzyl)-malonsäure-di-(1,2,2,6,6-pentamethylpiperidin-4-yl)-ester
   24) Dibenzyl-malonsäure-di-(1,2,2,6,6-pentamethylpiperidin-4-yl)-ester
   25) Dibenzyl-malonsäure-di-(1,2,3,6-tetramethyl-2,6-diethyl-piperidin-4-yl)ester
   26) Hexan-1',6'-bis-(4-carbamoyloxy-1-n-butyl-2,2,6,6-tetramethyl-piperidin)
   27) Toluol-2',4'-bis-(4-carbamoyloxy-1-n-propyl-2,2,6,6-tetramethyl-piperidin)
   28) Dimethyl-bis-(2,2,6,6-tetramethylpiperidin-4-oxy)-silan
   29) Phenyl-tris-(2,2,6,6-tetramethylpiperidin-4-oxy)-silan
   30) Tris-(1-propyl-2,2,6,6-tetramethylpiperidin-4-yl)-phosphit
   31) Tris-(1-propyl-2,2,6,6-tetramethylpiperidin-4-yl)phosphat
   32) Phenyl-[bis-(1,2,2,6,6-pentamethylpiperidin-4-yl)]-phosphonat
   33) 4-Hydroxy-1,2,2,6,6-pentamethylpiperidin
   34) 4-Hydroxy-N-hydroxyethyl-2,2,6,6-tetramethylpiperidin
   35) 4-Hydroxy-N-(2-hydroxypropyl)-2,2,6,6-tetramethylpiperidin
   36) 1-Glycidyl-4-hydroxy-2,2,6,6-tetramethylpiperidin
b) Verbindungen der Formel (XV) 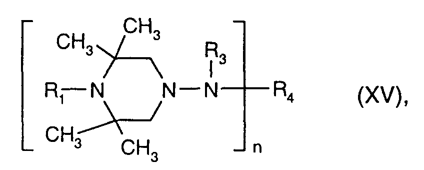 worin n die Zahl 1 oder 2 bedeutet, R₁ die unter a) angegebene Bedeutung hat, R₃ Wasserstoff, C₁-C₁₂-Alkyl, C₂-C₅-Hydroxyalkyl, C₅-C₇-Cycloalkyl, C₇-C₈-Aralkyl, C₂-C₁₈-Alkanoyl, C₃-C₅-Alkenoyl oder Benzoyl ist und R₄ wenn n 1 ist, Wasserstoff, C₁-C₁₈-Alkyl, C₃-C₈-Alkenyl, C₅-C₇-Cycloalkyl, mit einer Hydroxy-, Cyano-, Alkoxycarbonyl- oder Carbamidgruppe substituiertes C₁-C₄-Alkyl, Glycidyl, eine Gruppe der Formel -CH₂-CH(OH)-Z oder der Formel -CONH-Z ist, worin Z Wasserstoff, Methyl oder Phenyl bedeutet; wenn n 2 ist, C₂-C₁₂-Alkylen, C₆-C₁₂-Arylen, Xylylen, eine -CH₂-CH(OH)-CH₂-Gruppe oder eine Gruppe -CH₂-CH(OH)-CH₂-O-D-O- bedeutet, worin D C₂-C₁₀-Alkylen, C₆-C₁₅-Arylen, C₆-C₁₂-Cycloalkylen ist, oder vorausgesetzt, dass R₃ nicht Alkanoyl, Alkenoyl oder Benzoyl bedeutet, R₄ auch einen zweiwertigen Rest einer aliphatischen, cycloaliphatischen oder aromatischen Dicarbonsäure oder Dicarbaminsäure oder auch die Gruppe -CO- bedeuten kann, oder R₃ und R₄ zusammen, wenn n 1 ist, den zweiwertigen Rest einer aliphatischen, cycloaliphatischen oder aromatischen 1,2- oder 1,3-Dicarbonsäure bedeuten können.
   Stellen etwaige Substituenten C₁-C₁₂- oder C₁-C₁₈-Alkyl dar, so haben sie die bereits unter a) angegebene Bedeutung.
   Bedeuten etwaige Substituenten C₅-C₇-Cycloalkyl, so stellen sie insbesondere Cyclohexyl dar.
   Als C₇-C₈-Aralkyl ist R₃ insbesondere Phenylethyl oder vor allem Benzyl. Als C₂-C₅-Hydroxyalkyl ist R₃ insbesondere 2-Hydroxyethyl oder 2-Hydroxypropyl.
   R₃ ist als C₂-C₁₈-Alkanoyl beispielsweise Propionyl, Butyryl, Octanoyl, Dodecanoyl, Hexadecanoyl, Octadecanoyl, aber bevorzugt Acetyl und als C₃-C₅-Alkenoyl insbesondere Acryloyl.
   Bedeutet R₄ C₂-C₈-Alkenyl, dann handelt es sich z.B. um Allyl, Methallyl, 2-Butenyl, 2-Pentenyl, 2-Hexenyl oder 2-Octenyl.
   R₄ als mit einer Hydroxy-, Cyano-, Alkoxycarbonyl- oder Carbamidgruppe substituiertes C₁-C₄-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.
   Stellen etwaige Substituenten C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.
   Bedeuten etwaige Substituenten C₆-C₁₅-Arylen, so stellen sie z.B. o-, m- oder p-Phenylen, 1,4-Naphthylen oder 4,4'-Diphenylen dar.
   Als C₆-C₁₂-Cycloalkylen ist D insbesondere Cyclohexylen.
   Beispiele für Polyalkylpiperidin-Verbindungen dieser Klasse sind folgende Verbindungen:
   37) N,N'-Bis-(2,2,6,6-tetramethylpiperidin-4-yl)-hexamethylen-1,6-diamin
   38) N,N'-Bis-(2,2,6,6-tetramethylpiperidin-4-yl)-hexamethylen-1,6-diacetamid
   39) 1-Acetyl-4-(N-cyclohexylacetamido)-2,2,6,6-tetramethylpiperidin
   40) 4-Benzoylamino-2,2,6,6-tetramethylpiperidin
   41) N,N'-Bis-(2,2,6,6-tetramethylpiperidin-4-yl)-N,N'-dibutyl-adipamid
   42) N,N'-Bis-(2,2,6,6-tetramethylpiperidin-4-yl)-N,N'-dicyclohexyl-2-hydroxypropylen-1,3-diamin
   43) N,N'-Bis-(2,2,6,6-tetramethylpiperidin-4-yl)-p-xylylen-diamin
   44) N,N'-Bis-(2,2,6,6-tetramethylpiperidin-4-yl)-succindiamid
   45) N-(2,2,6,6-Tetramethylpiperidin-4-yl)-β-aminodipropionsäure-di-(2,2,6,6-tetramethylpiperidin-4-yl)-ester
   46) Die Verbindung der Formel 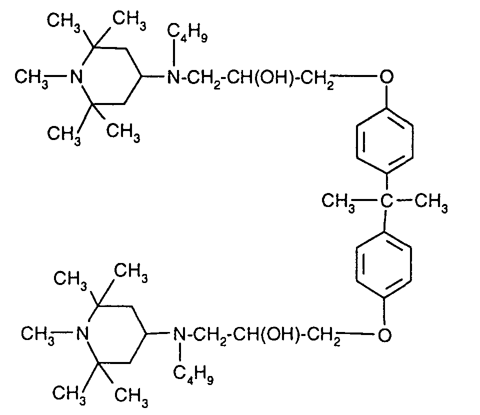
   47) 4-(Bis-2-hydroxyethyl-amino)-1,2,2,6,6-pentamethylpiperidin
   48) 4-(3-Methyl-4-hydroxy-5-tert.-butyl-benzoesäureamido)-2,2,6,6-tetramethylpiperidin
   49) 4-Methacrylamido-1,2,2,6,6-pentamethylpiperidin
c) Verbindungen der Formel (XVI) 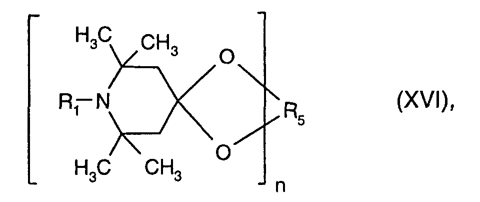 worin n die Zahl 1 oder 2 bedeutet, R₁ die unter a) angegebene Bedeutung hat und R₅, wenn n 1 ist, C₂-C₈-Alkylen oder C₂-C₈-Hydroxyalkylen oder C₄-C₂₂-Acyloxyalkylen, und wenn n 2 ist, die Gruppe (-CH₂)₂C(CH₂-)₂ bedeutet.
   Bedeutet R₅ C₂-C₈-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.
   Als C₄-C₂₂-Acyloxyalkylen bedeutet R₅ z.B. 2-Ethyl-2-acetoxymethylpropylen.
   Beispiele für Polyalkylpiperidin-Verbindungen dieser Klasse sind folgende Verbindungen:
   50) 9-Aza-8,8,10,10-tetramethyl-1,5-dioxaspiro[5.5]undecan
   51) 9-Aza-8,8,10,10-tetramethyl-3-ethyl-1,5-dioxaspiro[5.5]undecan
   52) 8-Aza-2,7,7,8,9,9-hexamethyl-1,4-dioxaspiro[4.5]decan
   53) 9-Aza-3-hydroxymethyl-3-ethyl-8,8,9,10,10-pentamethyl-1,5-dioxaspiro[5.5]undecan
   54) 9-Aza-3-ethyl-3-acetoxymethyl-9-acetyl-8,8,10,10-tetramethyl-1,5-dioxaspiro[5.5]-undecan
   55) 2,2,6,6-Tetramethylpiperidin-4-spiro-2'-(1',3'-dioxan)-5'-spiro-5"-(1",3"-dioxan)-2"-spiro-4"'-(2"',2"',6"',6"'-tetramethylpiperidin).
d) Verbindungen der Formeln XVla, XVlb und XVIc 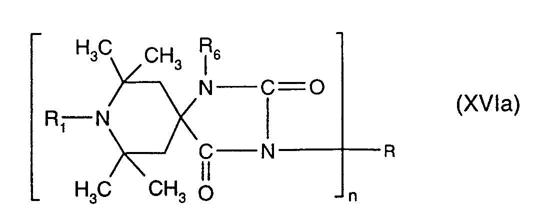 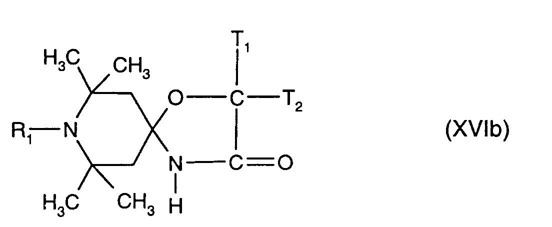 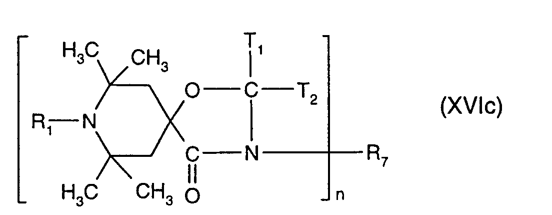 worin n die Zahl 1 oder 2 bedeutet, R₁ die unter a) angegebene Bedeutung hat, R₆ Wasserstoff, C₁-C₁₂-Alkyl, Allyl, Benzyl, Glycidyl oder C₂-C₆-Alkoxyalkyl ist und R₇, wenn n 1 ist, Wasserstoff, C₁-C₁₂-Alkyl, C₃-C₅-Alkenyl, C₇-C₉-Aralkyl, C₅-C₇-Cycloalkyl, C₂-C₄-Hydroxyalkyl, C₂-C₆-Alkoxyalkyl, C₆-C₁₀-Aryl, Glycidyl oder eine Gruppe der Formel -(CH₂)ₚ-COO-Q oder der Formel -(CH₂)ₚ-O-CO-Q ist, worin p 1 oder 2 und Q C₁-C₄-Alkyl oder Phenyl sind, wenn n 2 ist, C₂-C₁₂-Alkylen, C₄-C₁₂-Alkenylen, C₆-C₁₂-Arylen, eine Gruppe -CH₂-CH(OH)-CH₂-O-D-O-CH₂-CH(OH)-CH₂-, worin D C₂-C₁₀-Alkylen, C₆-C₁₅-Arylen, C₆-C₁₂-Cycloalkylen ist, oder eine Gruppe -CH₂CH(OZ')CH₂-(OCH₂-CH(OZ')CH₂)₂- bedeutet, worin Z' Wasserstoff, C₁-C₁₈-Alkyl, Allyl, Benzyl, C₂-C₁₂-Alkanoyl oder Benzoyl ist, T₁ und T₂ unabhängig voneinander Wasserstoff, C₁-C₁₈-Alkyl oder gegebenenfalls durch Halogen oder C₁-C₄-Alkyl substituiertes C₆-C₁₀-Aryl oder C₇-C₉-Aralkyl bedeuten oder T₁ und T₂ zusammen mit dem sie bindenden C-Atom einen C₅-C₁₂-Cycloalkanring bilden.
   Bedeuten etwaige Substituenten C₁-C₁₂-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.
   Etwaige Substituenten in der Bedeutung von C₁-C₁₈-Alkyl können z.B. die oben angeführten Gruppen und dazu noch beispielsweise n-Tridecyl, n-Tetradecyl, n-Hexadecyl oder n-Octadecyl darstellen.
   Bedeuten etwaige Substituenten C₂-C₆-Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.
   Stellt R₇ C₃-C₅-Alkenyl dar, so bedeutet es z.B. 1-Propenyl, Allyl, Methallyl, 2-Butenyl oder 2-Pentenyl.
   Als C₇-C₉-Aralkyl sind R₇, T₁ und T₂ insbesondere Phenethyl oder vor allem Benzyl. Bilden T₁ und T₂ zusammen mit dem C-Atom einen Cycloalkanring, so kann dies z.B. ein Cyclopentan-, Cyclohexan-, Cyclooctan- oder Cyclododecanring sein.
   Bedeutet R₇ C₂-C₄-Hydroxyalkyl, so stellt es z.B. 2-Hydroxyethyl, 2-Hydroxypropyl, 2-Hydroxybutyl oder 4-Hydroxybutyl dar.
   Als C₆-C₁₀-Aryl bedeuten R₇, T₁ und T₂ insbesondere Phenyl, α- oder β-Naphthyl, die gegebenenfalls mit Halogen oder C₁-C₄-Alkyl substituiert sind.
   Stellt R₇ C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.
   Als C₄-C₁₂-Alkenylen bedeutet R₇ insbesondere 2-Butenylen, 2-Pentenylen oder 3-Hexenylen.
   Bedeutet R₇ C₆-C₁₂-Arylen, so stellt es beispielsweise o-, m- oder p-Phenylen, 1,4-Naphthylen oder 4,4'-Diphenylen dar.
   Bedeutet Z' C₂-C₁₂-Alkanoyl, so stellt es beispielsweise Propionyl, Butyryl, Octanoyl, Dodecanoyl, aber bevorzugt Acetyl dar.
   D hat als C₂-C₁₀-Alkylen, C₆-C₁₅-Arylen oder C₆-C₁₂-Cycloalkylen die unter b) angegebene Bedeutung.
   Beispiele für Polyalkylpiperidin-Verbindungen dieser Klasse sind folgende Verbindungen:
   56) 3-Benzyl-1,3,8-triaza-7,7,9,9-tetramethylspiro[4.5]decan-2,4-dion
   57) 3-n-Octyl-1,3,8-triaza-7,7,9,9-tetramethylspiro[4.5]decan-2,4-dion
   58) 3-Allyl-1,3,8-triaza-1,7,7,9,9-pentamethylspiro[4.5]decan-2,4-dion
   59) 3-Glycidyl-1,3,8-triaza-7,7,8,9,9-pentamethylspiro[4.5]decan-2,4-dion
   60) 1,3,7,7,8,9,9-Heptamethyl-1,3,8-triazaspiro[4.5]decan-2,4-dion
   61) 2-lso-propyl-7,7,9,9-tetramethyl-1 -oxa-3,8-diaza-4-oxo-spiro-[4.5]-decan
   62) 2,2-Dibutyl-7,7,9,9-tetramethyl-1-oxa-3,8-diaza-4-oxo-spiro-[4.5]-decan
   63) 2,2,4,4-Tetramethyl-7-oxa-3,20-diaza-21-oxo-dispiro-[5.1.11.2]-heneicosan
   64) 2-Butyl-7,7,9,9-tetramethyl-1-oxa-4,8-diaza-3-oxo-spiro-[4,5]decan
   65) 8-Acetyl-3-dodecyl-1,3,8-triaza-7,7,9,9-tetramethylspiro[4,5]-decan-2,4-dion
   oder die Verbindungen der folgenden Formeln:
   66) 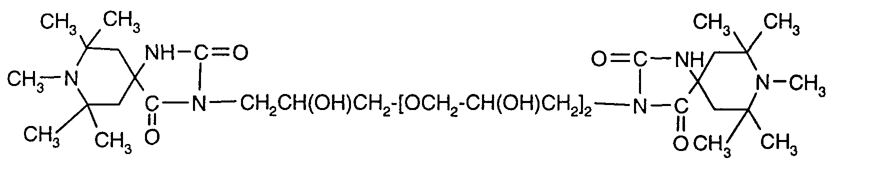
   67) 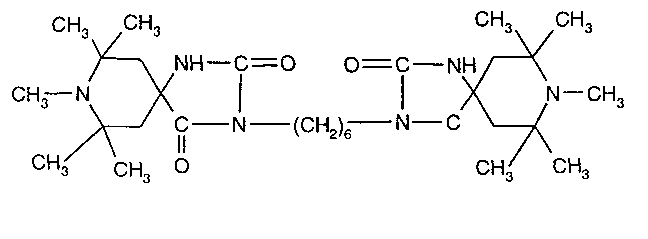
   68) 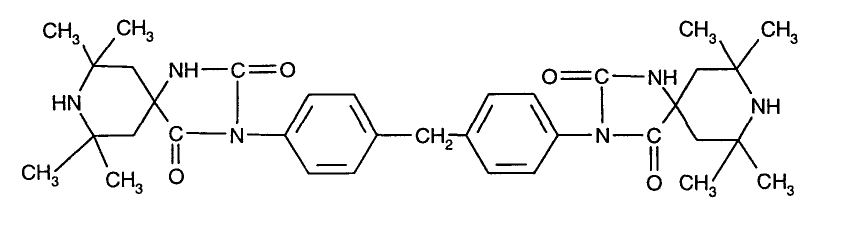
   69) 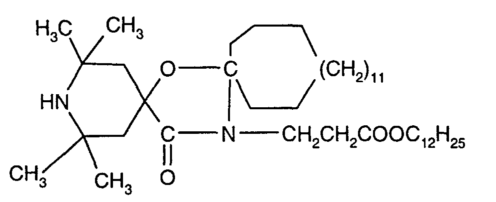
e) Verbindungen der Formel XVII 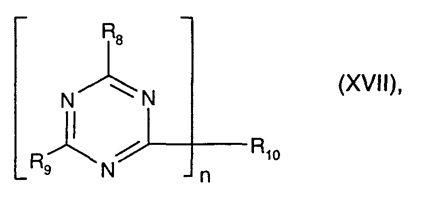 worin n die Zahl 1 oder 2 ist und R₈ eine Gruppe der Formel 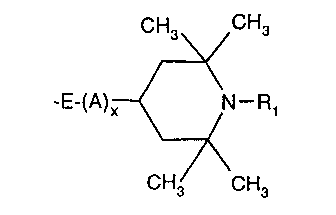 bedeutet, worin R₁ die unter a) angegebene Bedeutung hat, E -O- oder -NR₁₁- ist, A C₂-C₆-Alkylen oder -(CH₂)₃-O- und x die Zahlen O oder 1 bedeuten, R₉ gleich R₈ oder eine der Gruppen -NR₁₁R₁₂, -OR₁₃, -NHCH₂OR₁₃ oder -N(CH₂OR₁₃)₂ ist, R₁₀, wenn n = 1 ist, gleich R₈ oder R₉, und wenn n = 2 ist, eine Gruppe -E-B-E- ist, worin B gegebenenfalls durch -N(R₁₁)-unterbrochenes C₂-C₆-Alkylen bedeutet, R₁₁ C₁-C₁₂-Alkyl, Cyclohexyl, Benzyl oder C₁-C₄-Hydroxyalkyl oder eine Gruppe der Formel 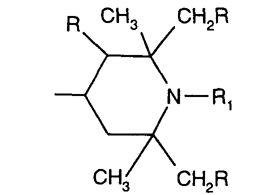 ist, R₁₂ C₁-C₁₂-Alkyl, Cyclohexyl, Benzyl, C₁-C₄-Hydroxyalkyl und R₁₃ Wasserstoff, C₁-C₁₂-Alkyl oder Phenyl bedeuten oder R₁₁ und R₁₂ zusammen C₄-C₅-Alkylen oder -Oxaalkylen, beispielsweise eine Gruppe der Formel 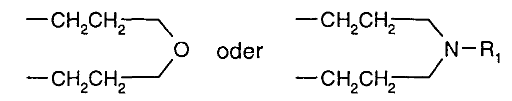 sind oder auch R¹¹ und R¹² jeweils eine Gruppe der Formel 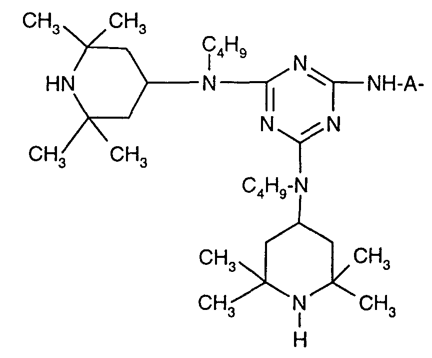 bedeuten.
   Bedeuten etwaige Substituenten C₁-C₁₂-Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.
   Bedeuten etwaige Substituenten C₁-C₄-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.
   Bedeutet A C₂-C₆-Alkylen, so stellt es beispielsweise Ethylen, Propylen, 2,2-Dimethylpropylen, Tetramethylen oder Hexamethylen dar.
   Stellen R₁₁ und R₁₂ zusammen C₄-C₅-Alkylen oder -oxaalkylen dar, so bedeutet dies z.B. Tetramethylen, Pentamethylen oder 3-Oxapentamethylen.
   Beispiele für Polyalkylpiperidin-Verbindungen dieser Klasse sind die Verbindungen der folgenden Formeln:
   70) 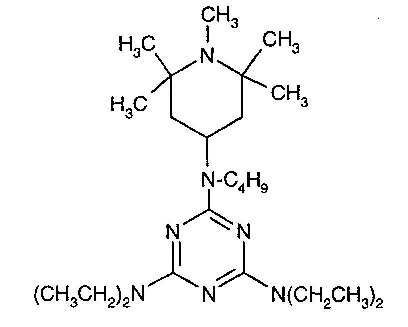
   71) 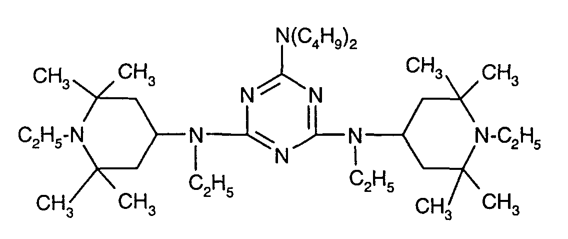
   72) 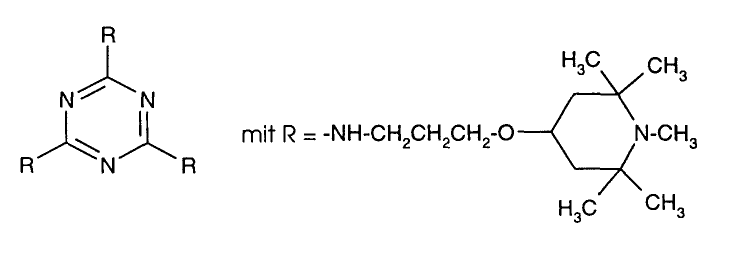
   73) 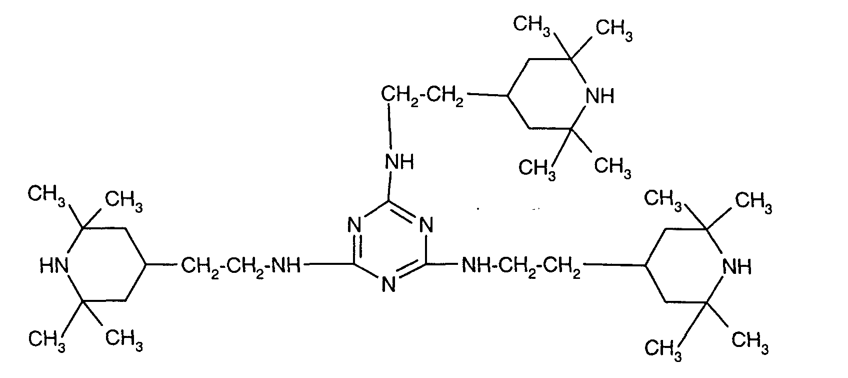
   74) 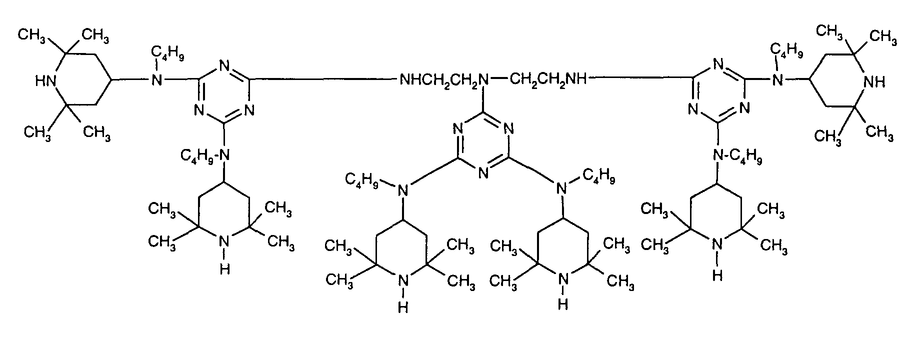
   75) 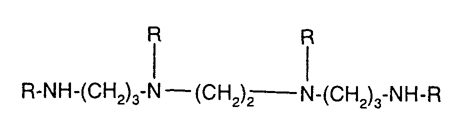 mit 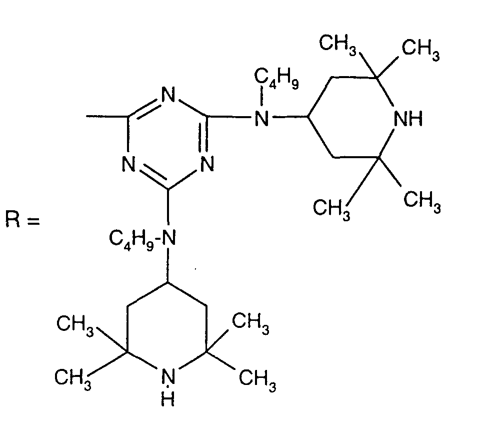
   76) 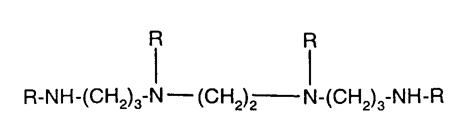 mit 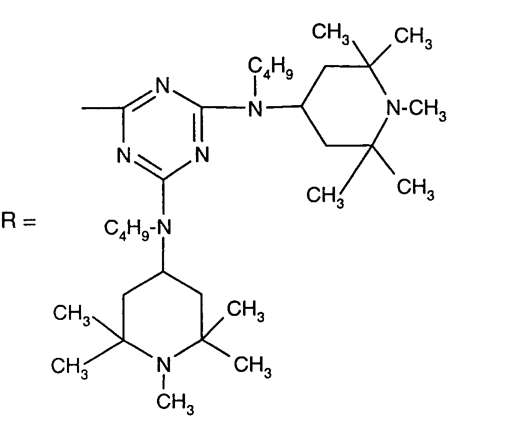
   77) 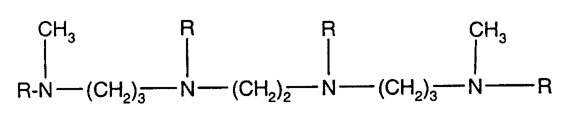 mit 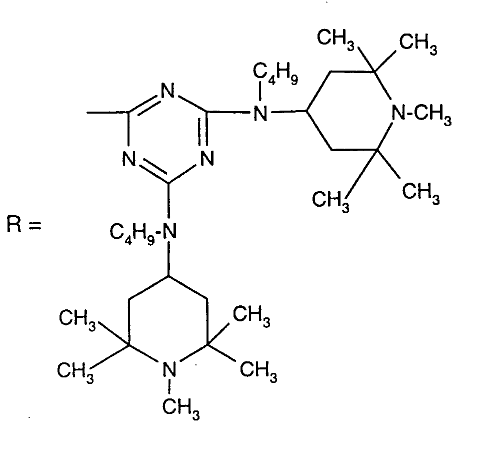
   77a) 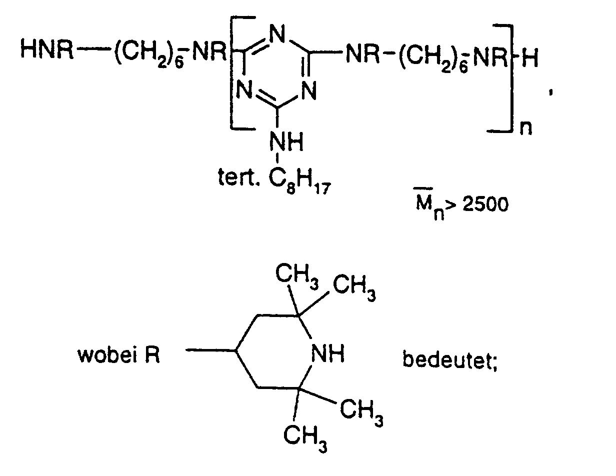
   78) 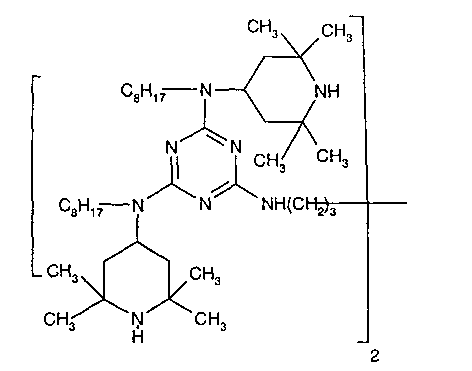
   79) 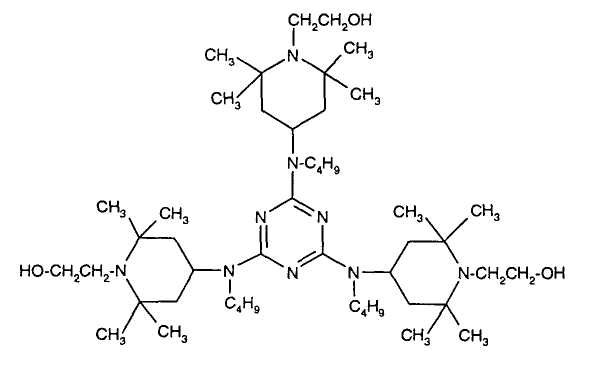
   80) 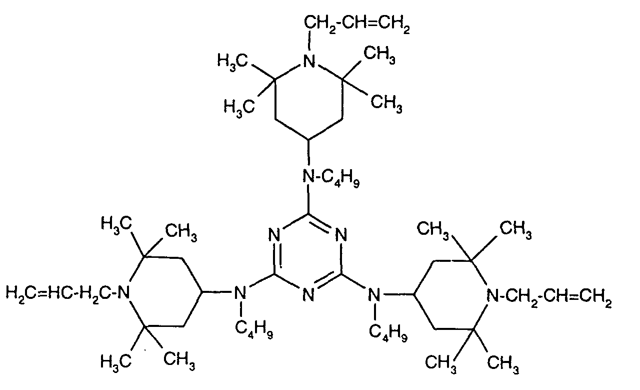
f) Oligomere oder polymere Verbindungen, deren wiederkehrende Struktureinheit einen oder mehrere 2,2,6,6-Tetraalkylpiperidinreste der Formel (XIII) enthält, insbesondere Polyester, Polyäther, Polyamide, Polyamine, Polyurethane, Polyharnstoffe, Polyaminotriazine, Poly(meth)acrylate, Polysiloxane, Poly(meth)acrylamide und deren Copolymeren, die solche Reste enthalten.
   Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet.
   81) 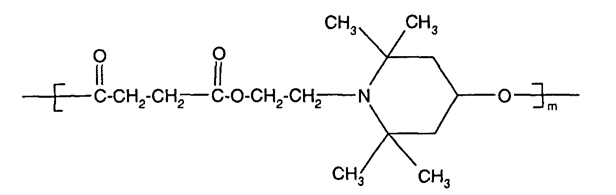
   82) 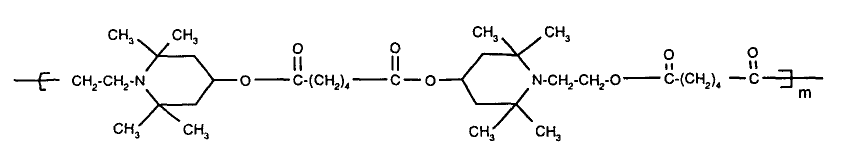
   83) 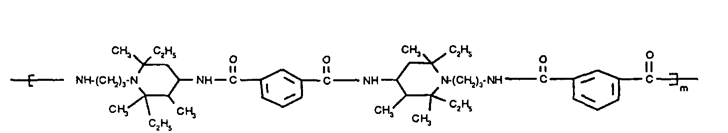
   84) 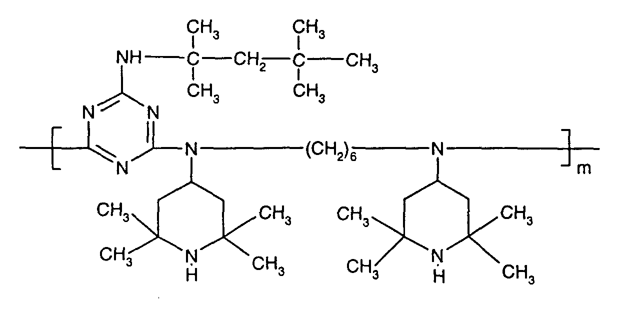
   85) 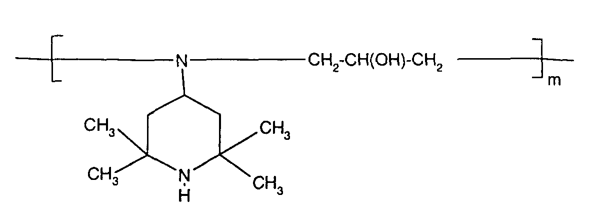
   86) 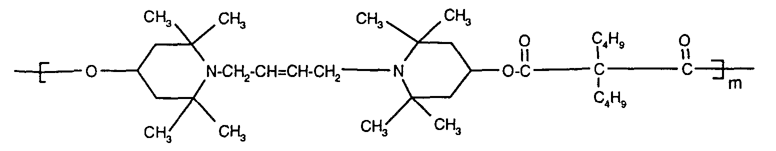
   87) 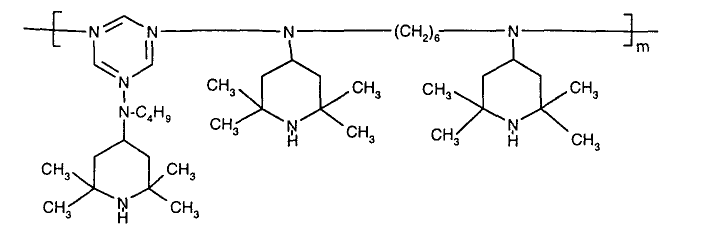
   88) 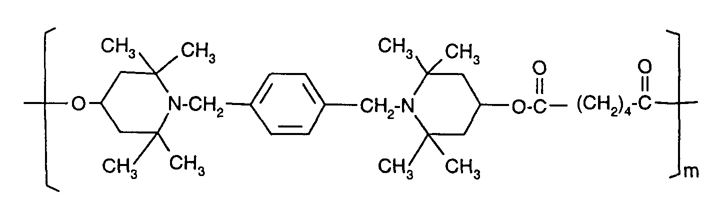
   89) 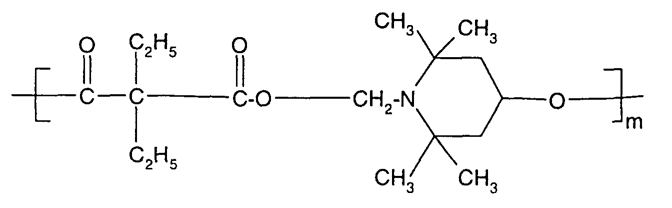
   90) 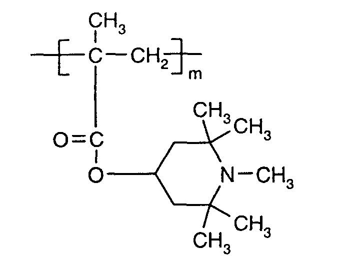
   91) 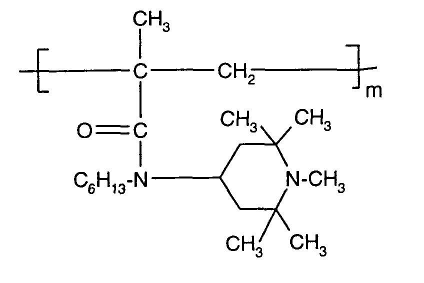
   92) 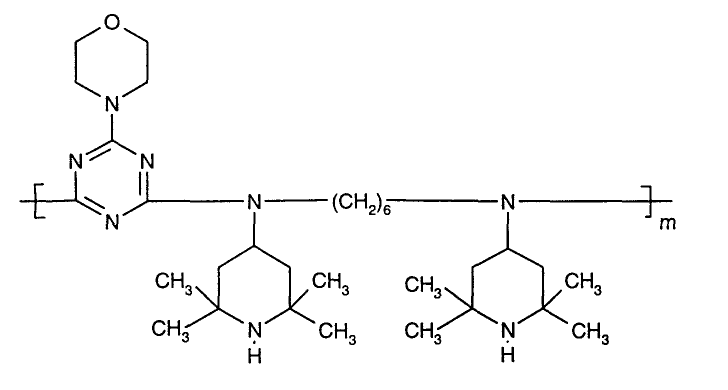
   93) 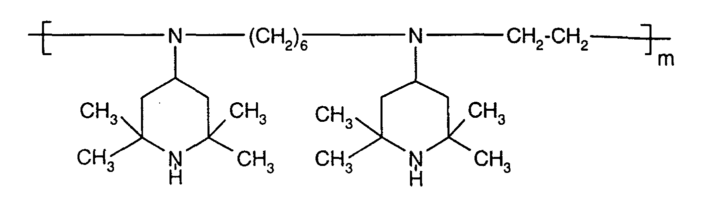
   94) 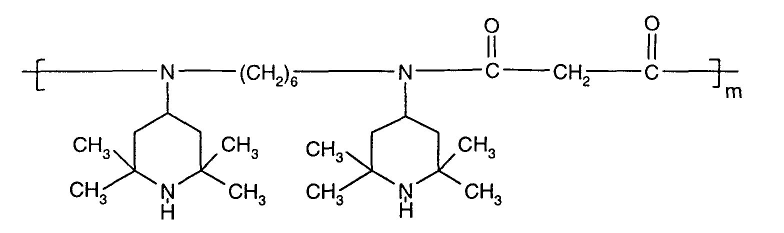
   95) 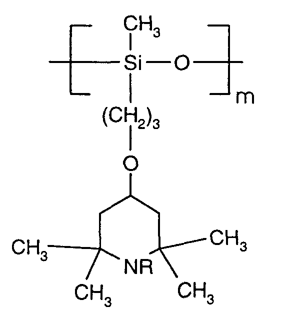 mit R = H oder CH₃
   96) 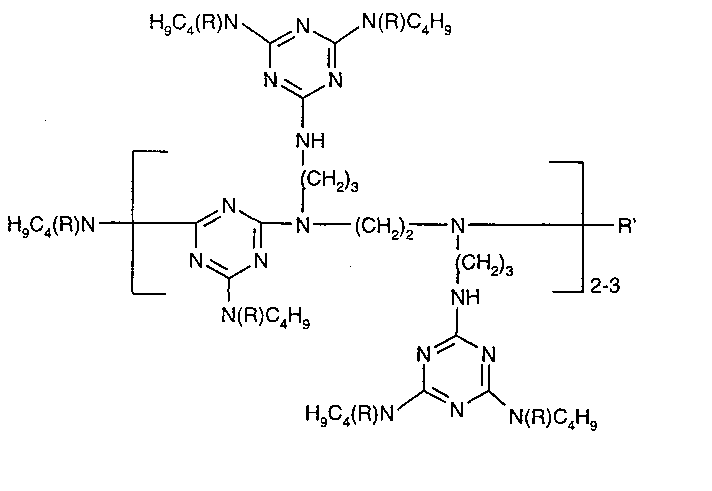 mit 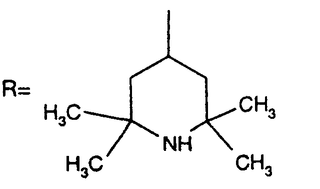 und 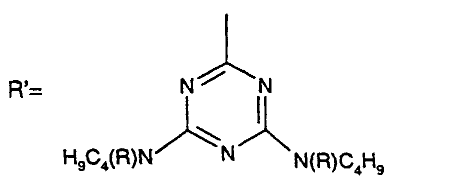 oder H
      {erhältlich durch Umsetzung des Reaktionsproduktes aus Trichlortriazin und NH₂-(CH₂)₃-NH-(CH₂)₂-(CH₂)₃-NH₂ mit 4-N-butyl-2,2,6,6-tetramethylpiperidin}

Von diesen Klassen sind die Klassen e) und f) besonders geeignet, insbesondere solche Tetraalkylpiperidinverbindungen, die s-Triazin-Gruppen enthalten. Weiterhin sind besonders geeignet die Verbindungen 74, 76, 84, 87, 92, 95 und 96.

Anstelle eines einzelnen sterisch gehinderten Amins kann im Rahmen der vorliegenden Erfindung auch ein Gemisch verschiedener sterisch gehinderter Amine verwendet werden.

Die Menge des Zusatzes des sterisch gehinderten Amins richtet sich nach dem gewünschten Grad der Stabilisierung. Im allgemeinen setzt man 0,01 bis 0,5 Gew.-%, insbesondere 0,05 bis 0,5 Gew.-%, bezogen auf das Polymer, zu.

Der erfindungsgemäss verwendbare Säurefänger ist bevorzugt eine unter den Reaktionsbedingungen kein Wasser freisetzende Verbindung aus der Reihe der Hydrotalcite, Zeolithe, Metallseifen, Metallcarbonate oder Metalloxide.

Besonders bevorzugt sind Hydrotalcite.

Die verwendbaren Verbindungen aus der Reihe der Hydrotalcite, Zeolithe, Metallseifen, Metallcarbonate oder Metalloxide sind sowohl die natürlich vorkommenden Mineralien wie auch synthetisch hergestellte Verbindungen.

Verbindungen aus der Reihe der Hydrotalcite können durch die allgemeine Formel XVIII,

M²⁺ ₁₋ₓ•M³⁺ ₓ•(OH)₂•(Aⁿ⁻)_{x/n}•mH₂O (XVIII)

wobei
- M²⁺: = Mg²⁺, Ca²⁺, Sr²⁺, Ba²⁺, Zn²⁺, Cd²⁺, Pb²⁺, Sn²⁺ und/oder Ni²⁺ ist,
- M³⁺: = Al³⁺, B³⁺ oder Bi³⁺ ist,
- Aⁿ⁻: ein Anion mit der Valenz n darstellt,
- n: eine Zahl von 1-4 ist,
- x: eine Zahl von 0-0,5 ist und
- m: eine Zahl von 0-20 ist, dargestellt werden.

Aⁿ⁻ ist bevorzugt OH⁻, Cl⁻, Br⁻, I⁻, ClO₄⁻, HCO₃⁻, CH₃COO⁻, C₆H₅COO⁻, CO₃²⁻, SO₄²⁻, [OC(O)C(O)O]²⁻, (CHOHCOO)₂²⁻, (CHOH)₄CH₂OHCOO⁻. C₂H₄(COO)₂²⁻, (CH₂COO)₂²⁻, CH₃CHOHCOO⁻, SiO₃²⁻. SiO₄⁴⁻, Fe(CN)₆³⁻, Fe(CN)₆⁴⁻ oder HPO₄²⁻.

Andere Hydrotalcite, die zweckmässig in dem Verfahren, wie oben beschrieben, eingesetzt werden können, sind Verbindungen mit der allgemeinen Formel

M²⁺ ₓ•Al₂(OH)_{2x+6nz}•(Aⁿ⁻)₂•mH₂O (XVIIIa)

wobei in vorliegender Formel XVlla M²⁺ wenigstens ein Metall aus der Reihe von Mg und Zn darstellt und Mg²⁺ bevorzugt ist, Aⁿ⁻ ein Anion, beispielsweise aus der Reihe von CO₃²⁻, [OC(O)C(O)O]²⁻, OH⁻ und S²⁻ darstellt, wobei n die Valenz des Anions ist, m eine positive Zahl, vorzugsweise von 0,5 bis 15, darstellt und x und z positive Zahlen darstellen, wobei x vorzugsweise 2 bis 6 ist und z kleiner als 2 ist.

Bevorzugte und kommerziell erhältliche Hydrotalcite sind z.B. DHT-4A und DHT-4C der Firma Kyowa, Japan.

Bevorzugt sind Verbindungen aus der Reihe der Hydrotalcite der allgemeinen Formel XVIII,

M²⁺ ₁₋ₓ•M³⁺ ₓ•(OH)₂•(Aⁿ⁻)_{x/n}•mH₂O (XVIII)

wobei M²⁺ die Bedeutung von Mg²⁺ oder einer festen Lösung von Mg und Zn hat, Aⁿ⁻ für CO₃²⁻ steht, x eine Zahl von 0 bis 0,5 ist und m eine Zahl von 0 bis 20 ist.

Ganz besonders bevorzugt sind Hydrotalcite der Formeln

Al₂O₃•6MgO•CO₂•12H₂O,

Mg_{4,5}•Al₂•(OH)₁₃•CO₃•3,5H₂O,

4MgO•Al₂O₃•CO₂•9H₂O,

4MgO•Al₂O₃•CO₂•6H₂O,

ZnO•3MgO•Al₂O₃•CO₂•8-9H₂O oder

ZnO•3MgO•Al₂O₃•CO₂•5-6H₂O.

Erfindungsgemäss können weiterhin Zeolithe der allgemeinen Formel (XIX)

M_{x/n}[(AlO₂)ₓ(SiO₂)_{y}] • wH₂O (XIX)

wobei n die Ladung des Kations M,
M ein Element der ersten oder zweiten Hauptgruppe,
y:x eine Zahl zwischen 0,8 und 1,2 und
w eine Zahl zwischen 0,5 und 30 ist,
verwendet werden.

Die bevorzugten an sich bekannten Zeolithe, welche im obigen Verfahren eingesetzt werden können, weisen einen durchschnittlichen wirksamen Porendurchmesser von 3-5Å auf, wobei jene vom Typ NaA, die einen durchschnittlichen wirksamen Porendurchmesser von 4Å besitzen, weshalb sie auch als Zeolithe 4A bezeichnet werden.

Beispiele für geeignete Zeolithe sind die Verbindungen:

Na₁₂[(AlO₂)₁₂(SiO₂)₁₂] • 12H₂O

Ca_{4,5}Na₃[(AlO₂)₁₂(SiO₂)₁₂] • 30H₂O

K₉Na₃[(AlO₂)₁₂(SiO₂)₁₂] • 27H₂O

Bevorzugte und kommerziell erhältliche Zeolithe sind Molekularsiebe.

Erfindungsgemäss können weiterhin Metallseifen verwendet werden. Bevorzugt sind Metallseifen zweiwertiger Metalle mit Fettsäuren, welche 8-28 Kohlenstoffatome aufweisen. Besonders bevorzugt sind Metallseifen des Calciums, wobei Calciumstearat und Calciumpelargonat ganz besonders bevorzugt ist.

Erfindungsgemäss können weiterhin Metallcarbonate oder Metalloxide verwendet werden. Bevorzugt sind Oxide zweiwertiger Metalle. Besonders bevorzugt sind Oxide der Metalle der zweiten Haupt- oder Nebengruppe, wobei Zink- und Magnesiumoxid ganz besonders bevorzugt ist.

Die erfindungsgemäss einsetzbaren Verbindungen werden zur Entfernung des nicht oder nur schwach gebundenen Wassers bei 50-800°C, bevorzugt 80-400°C, getrocknet, sofern sie nicht schon ausreichend getrocknet sind und unter Feuchtigkeitsausschluss gelagert wurden. Die Trocknung kann im Vakuum oder unter Inertgas erfolgen. Die Oberflächen der Substanzen können mit oberflächenaktiven Reagenzien, wie Carbonsäuren oder linearen Alkoholen mit 8 oder mehr C-Atomen, z.B. Stearinsäure, behandelt werden.

Anstelle eines einzelnen Säurefängers kann im Rahmen der vorliegenden Erfindung auch ein Gemisch verschiedener Säurefänger verwendet werden.

Die unter den Reaktionsbedingungen kein Wasser freisetzenden Verbindungen aus der Reihe der Hydrotalcite, Zeolithe, Metallseifen, Metallcarbonate, Metalloxide oder ähnlicher synthetisch hergestellter Verbindungen werden im allgemeinen in einer Menge von 0,005 bis 0,2 Gew.-%, bezogen auf das Polymere, zugesetzt, vorzugsweise in einer Menge von 0,01 bis 0,1 Gew.-%. Weiterhin ist ein Verfahren bevorzugt, in dem eine Phosphor(III)-verbindung, ein sterisch gehindertes Phenol und ein sterisch gehindertes Amin zugesetzt wird. Ganz besonders bevorzugt ist die Verwendung einer Kombination aus Phosphor(III)-verbindung, sterisch gehindertem Phenol, sterisch gehindertem Amin und Säurefänger. Für die genannten Kombinationen gilt, dass die bevorzugten Kombinationen aus den jeweils bevorzugten Einzelverbindungen bestehen.

Die Zugabe der Verbindungen, einzeln oder auch in Form von Mischungen, erfolgt üblicherweise nachdem mindestens 0,1 %, bevorzugt mindestens 1 % und besonders bevorzugt mindestens 10 %, des Umsatzes bezogen auf die Gesamtausbeute an Polymer erreicht sind.

Gegenstand der vorliegenden Erfindung ist auch die Verwendung mindestens einer der oben näher definierten Phosphor(III)-verbindungen und eines sterisch gehinderten Phenols in einem Verfahren zur Polymerisation von Olefinen an einem Übergangsmetallocenkatalysator zur Stabilisierung der so erhältlichen Polymeren. Die Bevorzugungen des Verfahrens gelten hierbei analog. Die erfindungsgemäss hergestellten Polyolefine eignen sich besonders zur Herstellung von Halbzeugen (Platten, Rohren und Profilen beliebigen Querschnittes) und für folgende Fertigungsverfahren: Rotationsformen, Schleudergiessen, Spritzgiessen, Thermoplastschaumguss, Spritzpressen, Pressen, Sintem, Kalandieren, Extrudieren, Hohlkörperblasformen, Extrusionsstreckblasen, Giessen von Hohlkörpern, Spinnen, Schäumen, Pulverbeschichten, Beschichten und Kabelummantelung.

Die Definitionen der Reste R₁-R₃₅, R', M₁, M₂, A, L, Q, X und der Indices a, n, m, p, q, y, z, w können in der Beschreibung mehrfach vorkommen, sie beziehen sich jeweils auf die unmittelbar vorher angegebene Formel.

Die folgenden Beispiele erläutern das Verfahren näher. Darin, sowie in der übrigen Beschreibung und in den Patentansprüchen, bedeuten Teile Gewichtsteile, % Gewichtsprozente, " 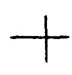 " einen tert.Butylrest und bei Zahlenintervallen sind die

Grenzwerte eingeschlossen soweit nicht anders angegeben.

### Beispiele 1,2

Herstellung des Katalysators: Unter Luftausschluss (in einer Drybox unter Argon) werden in einem 250 ml Rundkolben mit Hahn 18.5 ml einer 30%igen Methylaluminoxan-Lösung in Toluol vorgelegt. Danach werden 14 ml Toluol und 100 mg racemisches Dimethylsilandiyl-bis(2-methyl-4,5-benzo-indenyl)-zirconium-dichlorid zugegeben. Bei der Zugabe des Zirconocenkomplexes entsteht eine orange Lösung. Nach 20 minütigem Rühren bei Raumtemperatur werden 4 g SiO₂ (Grace 951, getrocknet bei 900°C) portionsweise zugegeben. Nach weiteren 30 Minuten wird das Lösungsmittel am Vakuum abgezogen, während der Kolben auf 70°C erwärmt und mit einem leichten Argonstrom durchflutet wird. Der Katalysator wird dann bei 70°C in einem Vakuum von 0.1 mbar ca. 12 Stunden getrocknet (Entfernen des Toluols aus den Poren). Danach wird der Katalysator in 100 ml Hexan suspendiert, ausserhalb der Drybox auf 0°C gekühlt, und unter Rühren mit einem geringen Ethylenfluss von ca. 20 ml/min durchströmt. Nach 30 Minuten wird der Kolben in die Drybox verbracht, das Lösungsmittel abfiltriert, der Katalysator mit Hexan kurz gewaschen und im Vakuum getrocknet. Es werden 16 g Katalysator erhalten.

Polymerisation: Die zu testenden Stabilisatoren, 9 ml 10%ige Triethylaluminium-Lösung (in Hexan) und 200 mg Katalysator werden bei 20°C unter Argon in einem gut getrockneten 3-1 Stahlautoklav (vgl. Beispiele 1-7) vorgelegt und der Autoklav verschlossen. 650 g Propylen werden in flüssiger Form zugegeben, gerührt und die Temperatur innerhalb von 3 Minuten auf 65°C erhöht. Nach 2 Stunden wird der Autoklav entspannt, 20 ml Isopropanol werden zugegeben und 15 Minuten bei 70°C gerührt. Danach wird der Autoklav entladen und das Polymer ca. 12 Stunden bei 70°C getrocknet.
Bestimmt werden der Yelloness Index (Yl) gemäss ASTM D 1925, der Melt Flow Wert (MF) (PP: 2.16 kg/230°C) nach ISO 1133-1981, der Schmelzpunkt (m.p.) mittels "Differential Scanning Calorimetry" (DSC) und der "Oxygen Induction Time"-Wert (OIT). Die OIT-Prüfung geschieht folgendermassen: ein Stück mit 5 mm Durchmesser wird aus einem 0.5 mm dicken gepressten Walzfell des zu testenden Polyolefins gestanzt. Die Probe wird in eine offene DSC Probenschale in der DSC-Zelle gelegt. Die Zelle wird mit Stickstoff gespült (50 ml/min) und auf 200°C erhitzt. Dann wird Sauerstoff eingeleitet (t=0) und die Zeit bis zum Beginn der Exothermie bestimmt. Je höher der Wert, desto besser ist die Stabilisierung deR getesten Probe.
Die getesten Stabilisatoren und Stabilisatormischungen, sowie die Testergebnisse sind der folgenden Tabelle 1 zu entnehmen.

**Tabelle 1**

| Beispiel | Additiv | Menge [mg] | Ausbeute PP [g] | Yl | OIT/200°C [min] | MF [g/10 min] | m.p. [°C] |
|---|---|---|---|---|---|---|---|
| | -- | -- | 130 | 1.8 | 0.17 | 66.6 | 150 |
| 1 | AO-1 | 100 | 111 | 2.4 | 2.48 | 62.1 | 149 |
| | P-1 | 200 | | | | | |
| 2 | AO-1 | 100 | 104 | 2.6 | 2.62 | 47.5 | 149 |
| | P-1 | 200 | | | | | |
| | HT-1 | 100 | | | | | |

In den Beispielen verwendete Additive:
- P-1:: Tris-(2,4-di-tert.butylphenyl)-phosphit (Irgafos® 168)
- AO-1:: Tris-1,3,5-(3,5-di-tert.butyl-4-hydroxybenzyl)-tri-2,4,6-methylbenzol (Irganox® 1330)
- HT-1:: DHT-4A Hydrotalcit der Firma Kyowa, Japan.

## Patentansprüche

1. Verfahren zur Herstellung von Olefinpolymeren durch Polymerisation an einem Übergangsmetallocenkatalysator, dadurch gekennzeichnet, dass man die Polymerisation in Gegenwart einer Phosphor(III)-verbindung und eines sterisch gehinderten Phenols durchführt, wobei die Zugabe erst erfolgt, wenn mindestens 0,1 % des Gesamtumsatzes bereits erfolgt sind.

2. Verfahren nach Anspruch 1, dadurch gekennzeichnet, dass als weitere Komponenten ein sterisch gehindertes Amin und/oder ein Säurefänger zugesetzt werden.

3. Verfahren nach Anspruch 1 oder 2, dadurch gekennzeichnet, dass die Zugabe erst erfolgt, wenn mindestens 1 % des Gesamtumsatzes bereits erfolgt sind.

4. Verfahren gemäss Anspruch 1 oder 2, dadurch gekennzeichnet, dass man 0,005 bis 1 Gew.-%, insbesondere 0,01 bis 0,5 Gew.-%, bezogen auf das Polymere, der Komponenten verwendet.

5. Verfahren nach Anspruch 1, dadurch gekennzeichnet, dass die Phosphor(III)-verbindung eine Verbindung der Formeln V, VI, Vll, VIII oder IX 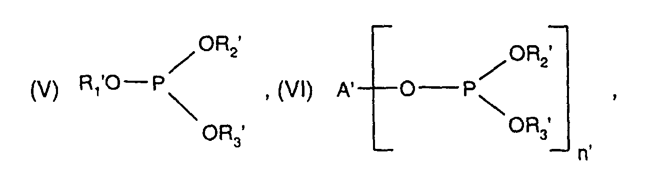 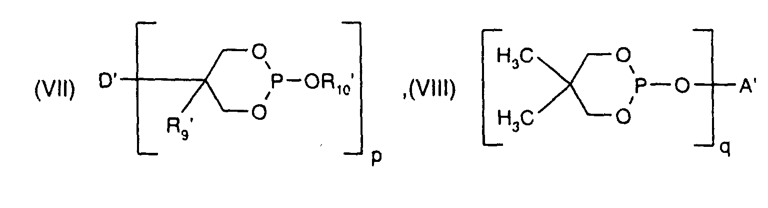 oder 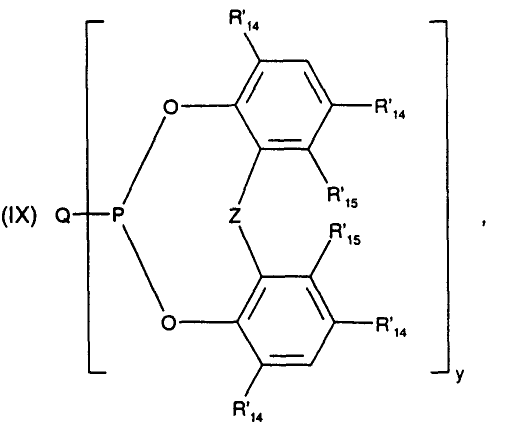 worin
R'₁, R'₂ und R'₃ unabhängig voneinander Alkyl mit 1 bis 18 Kohlenstoffatomen, mit Halogen, -COOR'₄, -CN oder -CONR'₄R'₄ substituiertes Alkyl mit 1 bis 18 Kohlenstoffatomen, durch -S-, -O- oder -NR'₄- unterbrochenes Alkyl mit 2 bis 18 Kohlenstoffatomen, Cycloalkyl mit 5 bis 8 Kohlenstoffatomen, Phenyl oder Naphthyl, mit Halogen, 1 bis 3 Alkylresten oder Alkoxyresten mit insgesamt 1 bis 18 Kohlenstoffatomen substituiertes Phenyl oder Naphthyl, 2,2,6,6-Tetramethylpiperid-4-yl, N-Allyl- oder N-Benzyl- oder N-Alkyl-2,2,6,6-tetramethylpiperid-4-yl mit 1 bis 4 Kohlenstoffatomen im Alkylteil oder N-Alkanoyl-2,2,6,6-tetramethylpiperid-4-yl mit 1 bis 4 Kohlenstoffatomen im Alkylteil, oder N-Alkylen-2,2,6,6-tetramethylpiperidyl oder N-Alkylen-4-alkoxy-2,2,6,6- tetramethylpiperidyl mit 1 bis 3 Kohlenstoffatomen im Alkylenteil und 1 bis 18 Kohlenstoffatomen im Alkoxyteil sind,
R'₄ beziehungsweise die Reste R'₄ unabhängig voneinander Wasserstoff, Alkyl mit 1 bis 18 Kohlenstoffatomen, Cycloalkyl mit 5 bis 12 Kohlenstoffatomen oder Phenylalkyl mit 1 bis 4 Kohlenstoffatomen im Alkylteil,
n' 2, 3 oder 4,
A', wenn n' oder q 2 ist, Alkylen mit 2 bis 12 Kohlenstoffatomen, durch -S-, -O- oder -NR'₄-unterbrochenes Alkylen mit 2 bis 12 Kohlenstoffatomen, worin R'₄ die angegebene Bedeutung hat, oder ein Rest der Formel 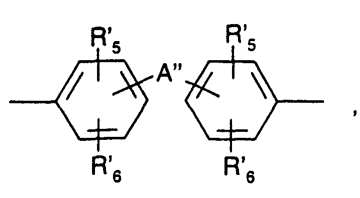 oder 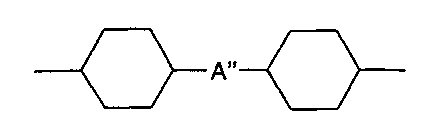 ist,
A', wenn n' oder q 3 ist, ein Rest der Formel CᵣH₂ᵣ₋₁- oder N(CH₂CH₂-)₃,
r 5 oder 6 ist,
A', wenn n' 4 ist, den Rest der Formel C(CH₂-)₄ bedeutet,
R'₅ und R'₆ unabhängig voneinander Wasserstoff oder Alkyl mit 1 bis 8 Kohlenstoffatomen sind,
A" ein Rest der Formel -CH₂-, -CHR'₄-, -CR'₁R'₄-, -S- oder eine direkte Bindung, worin R'₁ und R'₄ die angegebenen Bedeutungen haben,
p 1 oder 2,
D', wenn p 1 ist, Methyl und wenn p 2 ist, -CH₂OCH₂- ist,
R'₉ Methyl ist, und R'₁₀ die Bedeutung von R'₁ hat,
q 2 oder 3 ist,
y 1, 2 oder 3,
Q, wenn y 1 ist, Alkyl mit 1 bis 18 Kohlenstoffatomen, ein Rest der Formel -OR'₁₆, -NR'₁₇R'₁₈ oder Fluor ist,
Q, wenn y 2 ist, ein Rest der Formel -O-A"'-O- oder 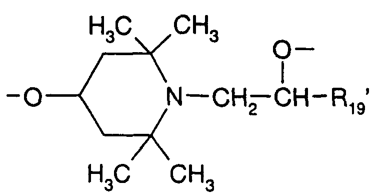 ist,
Q, wenn y 3 ist, ein Rest der Formel R'₄C(CH₂O-)₃, N(C₂H₄O-)₃ oder N(C₃H₆O-)₃ ist, worin
R'₄ die angegebene Bedeutung hat,
R'₁₆ die Bedeutung von R'₁ hat,
R'₁₇ und R'₁₈ unabhängig voneinander Alkyl mit 1 bis 18 Kohlenstoffatomen, Benzyl, Cyclohexyl, ein 2,2,6,6-Tetra- oder 1,2,2,6,6-Pentamethylpiperid-4-ylrest sind, oder R'₁₇ und R'₁₈ zusammen Butylen, Pentylen, Hexylen oder den Rest der Formel -CH₂CH₂-O-CH₂CH₂-bilden,
A"' die Bedeutung von A', wenn n' 2 ist, hat,
R'₁₉ Wasserstoff oder Methyl ist,
die Substituenten R'₁₄ unabhängig voneinander Wasserstoff, Alkyl mit 1 bis 9 Kohlenstoffatomen oder Cyclohexyl sind,
R'₁₅ Wasserstoff oder Methyl und
Z eine direkte Bindung, -CH₂-, -C(R'₁₄-)₂ oder -S- ist, worin die Substituenten R'₁₄ gleich oder verschieden sind und die angegebene Bedeutung haben
oder eine Verbindung der Formel X 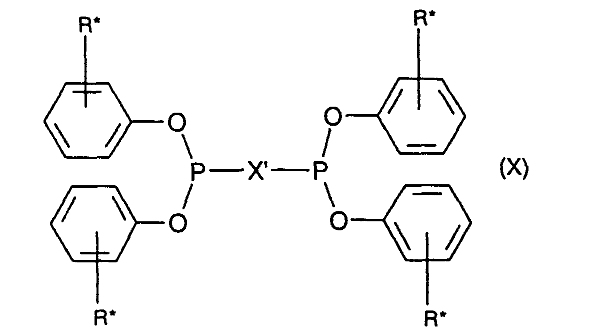 dargestellt werden, wobei R^{*} ein bis fünf C₁-C₈-Alkylreste;
X' ein Rest 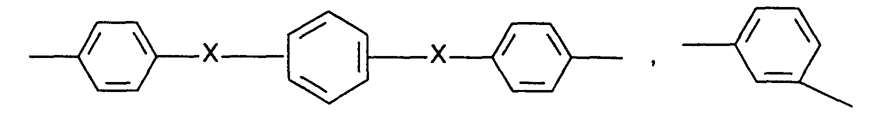 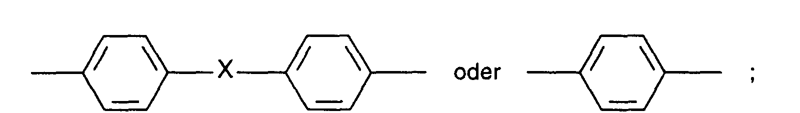 und X eine direkte Bindung, -(O)S(O)-, -C(O)-, -S-, -O- oder Arylen bedeutet; ist.

6. Verfahren nach Anspruch 1, dadurch gekennzeichnet, dass das sterisch gehinderte Amin eine Verbindung ist, die mindestens eine Gruppe der Formel XIII 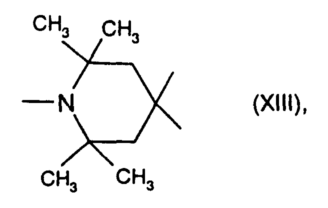 enthält.

7. Verfahren gemäss Anspruch 1, dadurch gekennzeichnet, dass das sterisch gehinderte Amin eine Verbindung der Formel 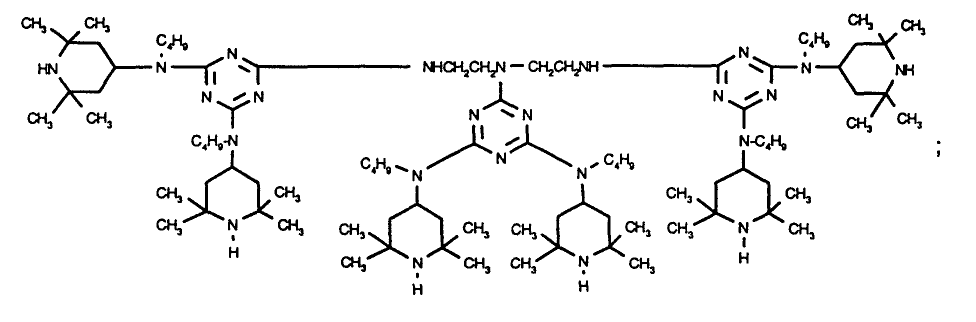 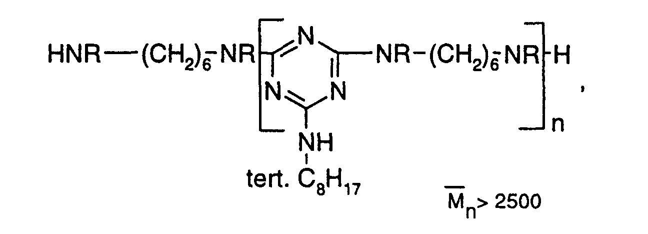 wobei 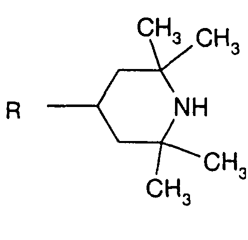 bedeutet; 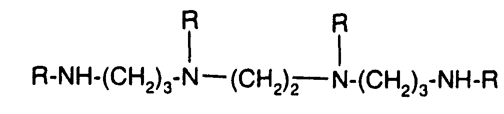 mit 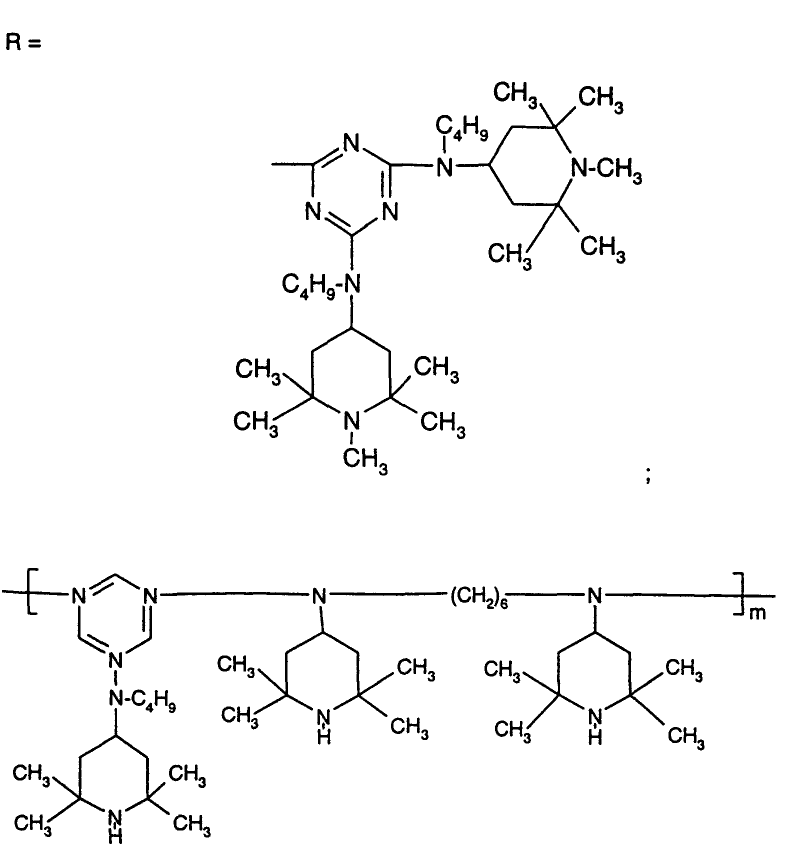 wobei m eine Zahl von 2-200 bedeutet; 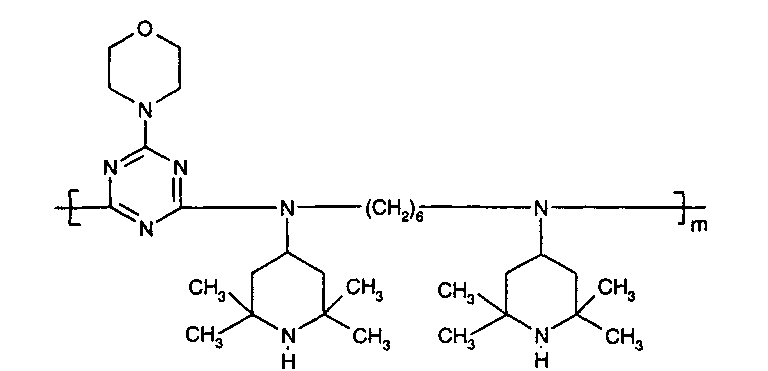 wobei m eine Zahl von 2-200 bedeutet; 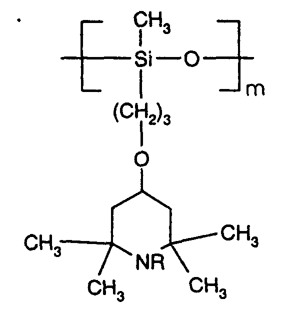 mit R = H oder CH₃; oder 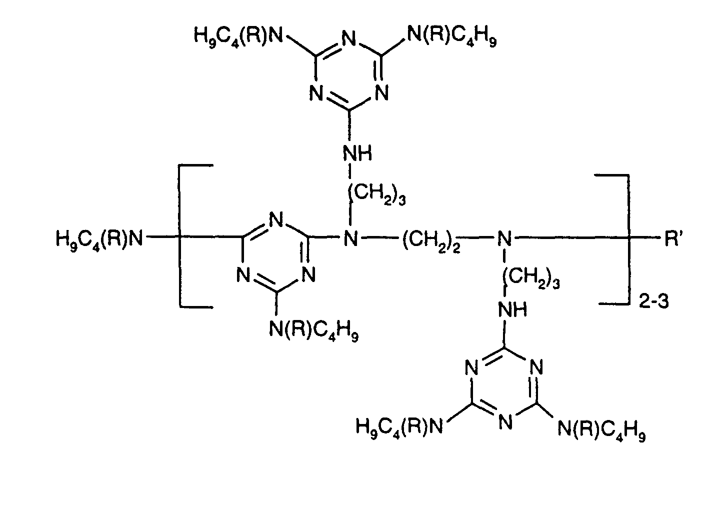 wobei 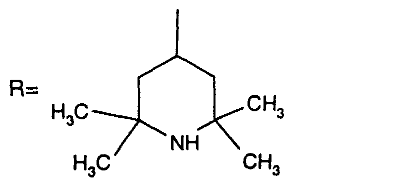 und 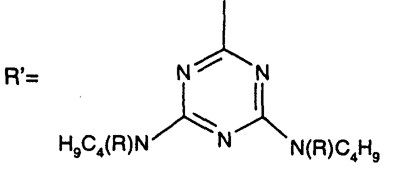 oder H {erhältlich durch Umsetzung des Reaktionsproduktes aus Trichlortriazin und NH₂-(CH₂)₃-NH-(CH₂)₂-(CH₂)₃-NH₂ mit 4-N-butyl-2,2,6,6-tetramethylpiperidin} ist.

8. Verfahren nach Anspruch 1, dadurch gekennzeichnet, dass das sterisch gehinderte Phenol eine Verbindung derFormel XII 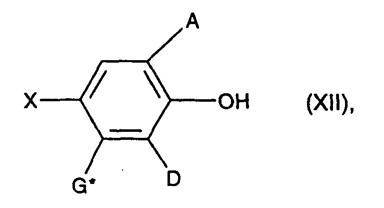 worin
A Wasserstoff, C₁-C₂₄-Alkyl, C₅-C₁₂-Cycloalkyl, Phenyl-C₁-C₄-alkyl, Phenyl oder eine Gruppe -CH₂-S-R₂₅ oder 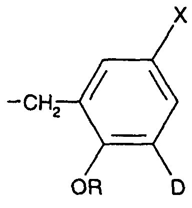 bedeutet,
D C₁-C₂₄-Alkyl, C₅-C₁₂-Cycloalkyl, Phenyl-C₁-C₄-alkyl, Phenyl oder eine Gruppe -CH₂-S-R₂₅ bedeutet,
x Wasserstoff, C₁-C₁₈-Alkyl oder eine der Gruppen -CₐH₂ₐ-S_{q}-R₂₆, -C_{b}H_{2b}-CO-OR₂₇, -C_{b}H_{2b}-CO-N(R₂₉)(R₃₀), -CH₂N(R₃₄)(R₃₅), 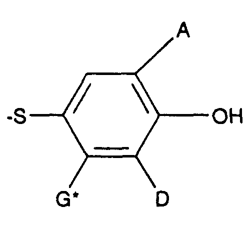 oder 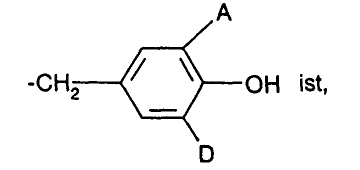
R Wasserstoff oder eine Gruppe der Formel -CO-CH=CH₂ ist,
G^{*} für Wasserstoff oder C₁-C₁₂-Alkyl steht,
R₂₅ C₁-C₁₈-Alkyl, Phenyl oder eine Gruppe -(CH₂)_{c}-CO-OR₂₈ oder -CH₂CH₂OR₃₃ bedeutet,
R₂₆ Wasserstoff, C₁-C₁₈-Alkyl, Phenyl, Benzyl oder eine Gruppe 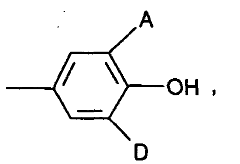 oder -(CH₂)_{c}-CO-OR₂₈ oder -CH₂-CH₂-OR₃₃ bedeutet,
R₂₇ C₁-C₃₀-Alkyl oder eine der Gruppen -CHR₃₁-CH₂-S-R₃₂, 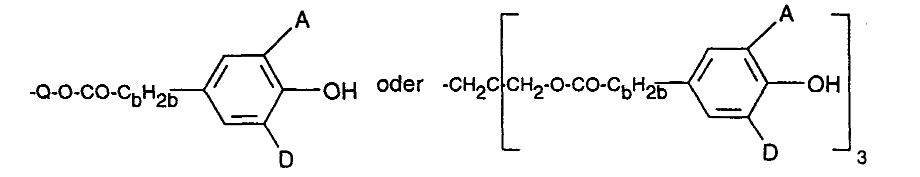 bedeutet, worin Q C₂-C₈-Alkylen, C₄-C₆-Thiaalkylen oder eine Gruppe -CH₂CH₂(OCH₂CH₂)_{d}-ist,
R₂₈ C₁-C₂₄-Alkyl bedeutet,
R₂₉ Wasserstoff, C₁-C₁₈-Alkyl oder Cyclohexyl bedeutet,
R₃₀ C₁-C₁₈-Alkyl, Cyclohexyl, Phenyl, durch C₁-C₁₈-Alkyl substituiertes Phenyl oder eine der Gruppen 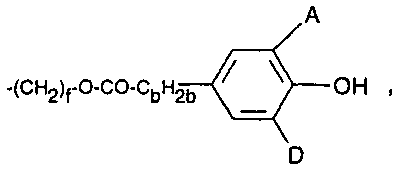 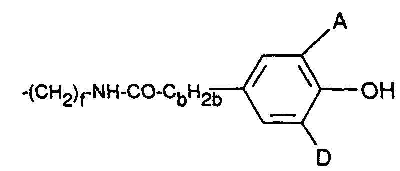 oder 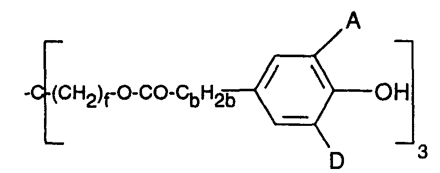 bedeutet,
oder
R₂₉ und R₃₀ zusammen C₄-C₈-Alkylen, das durch -O- oder -NH- unterbrochen sein kann, bedeuten,
R₃₁ Wasserstoff, C₁-C₄-Alkyl oder Phenyl bedeutet,
R₃₂ C₁-C₁₈-Alkyl bedeutet,
R₃₃ Wasserstoff, C₁-C₂₄-Alkyl, Phenyl, C₂-C₁₈-Alkanoyl oder Benzoyl bedeutet,
R₃₄ C₁-C₁₈-Alkyl, Cyclohexyl, Phenyl, durch C₁-C₁₈-Alkyl substituiertes Phenyl oder eine Gruppe 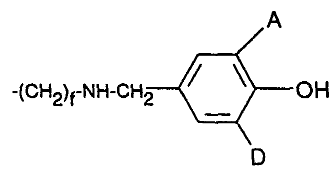 bedeutet,
R₃₅ Wasserstoff, C₁-C₁₈-Alkyl, Cyclohexyl, oder eine Gruppe 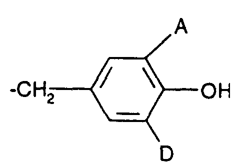 ist,
oder
R₃₄ und R₃₅ zusammen C₄-C₈-Alkylen, das durch -O- oder -NH-unterbrochen sein kann, bedeuten,
a 0, 1, 2 oder 3 ist, b 0, 1, 2 oder 3 ist, c 1 oder 2 ist, d 1 bis 5 ist, f 2 bis 8 ist und q 1, 2, 3 oder 4 ist; ist.

9. Verfahren gemäss Anspruch 1, dadurch gekennzeichnet, dass man als sterisch gehindertes Phenol β-(3,5-Di-tert.butyl-4-hydroxyphenyl)-propionsäure-octadecylester, Tocopherol oder 1,3,5-Tris-(3,5-di-tert.butyl-4-hydroxybenzyl)-2,4,6-trimethylbenzol verwendet.

10. Verfahren nach Anspruch 1, dadurch gekennzeichnet, dass man als Säurefänger eine unter den Reaktionsbedingungen kein Wasser freisetzende Verbindung aus der Reihe der Hydrotalcite, Zeolithe, Metallseifen, Metallcarbonate oder Metalloxide verwendet.

11. Verfahren gemäss Anspruch 1, dadurch gekennzeichnet, dass man als Säurefänger ein Hydrotalcit verwendet.

12. Verwendung einer Phosphor(III)-verbindung und eines sterisch gehinderten Phenols in einem Verfahren zur Polymerisation von Olefinen an einem Übergangsmetallocenkatalysator zur Stabilisierung der so erhältlichen Polymeren.

## Claims

1. A process for the preparation of olefin polymers by polymerization over a transition metallocene catalyst, which comprises carrying out the polymerization in the presence of a phosphorus(III) compound and a sterically hindered phenol with the addition taking place only when at least 0.1 % of the total conversion has already taken place.

2. A process according to claim 1, wherein a sterically hindered amine and/or an acid scavenger are added as further components.

3. A process according to claim 1 or 2, wherein the addition takes place only when at least 1 % of the total conversion has already taken place.

4. A process according to claim 1 or 2, wherein from 0.005 to 1% by weight, in particular from 0.01 to 0.5% by weight, based on the polymer, of the components is used.

5. A process according to claim 1, wherein the phosphorus(III) compound is a compound of the formula V, VI, VII, VIII or IX 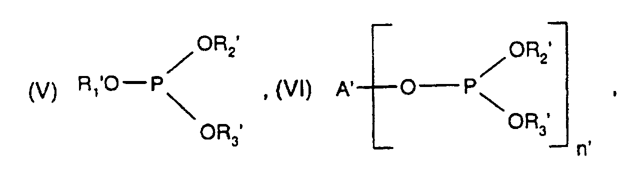 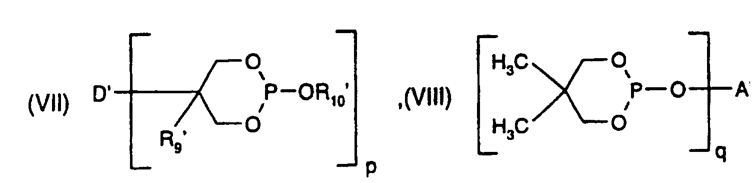 or 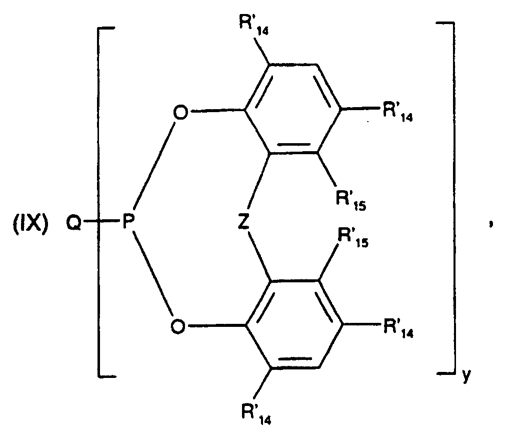 in which
R'₁, R'₂ and R'₃ independently of one another are alkyl having 1 to 18 carbon atoms, halogen-, -COOR'₄-, -CN- or -CONR'₄R'₄-substituted alkyl having 1 to 18 carbon atoms, alkyl having 2 to 18 carbon atoms which is interrupted by -S-, -O- or -NR'₄-, cycloalkyl having 5 to 8 carbon atoms, phenyl or naphthyl, phenyl or naphthyl which are substituted by halogen or by 1 to 3 alkyl or alkoxy radicals having a total of 1 to 18 carbon atoms, 2,2,6,6-tetramethylpiperid-4-yl, N-allyl- or N-benzyl- or N-alkyl-2,2,6,6-tetramethylpiperid-4-yl having 1 to 4 carbon atoms in the alkyl moiety or N-alkanoyl-2,2,6,6-tetramethylpiperid-4-yl having 1 to 4 carbon atoms in the alkyl moiety, or N-alkylene-2,2,6,6-tetramethylpiperidyl or N-alkylene-4-alkoxy-2,2,6,6-tetramethylpiperidyl having 1 to 3 carbon atoms in the alkylene moiety and 1 to 18 carbon atoms in the alkoxy moiety,
R'₄, or the radicals R'₄ independently of one another, is or are hydrogen, alkyl having 1 to 18 carbon atoms, cycloalkyl having 5 to 12 carbon atoms or phenylalkyl having 1 to 4 carbon atoms in the alkyl moiety,
n' is 2, 3 or 4,
A', if n' or q is 2, is alkylene having 2 to 12 carbon atoms, alkylene having 2 to 12 carbon atoms which is interrupted by -S-, -O- or -NR'₄-, in which R'₄ is as defined above, or a radical of the formula 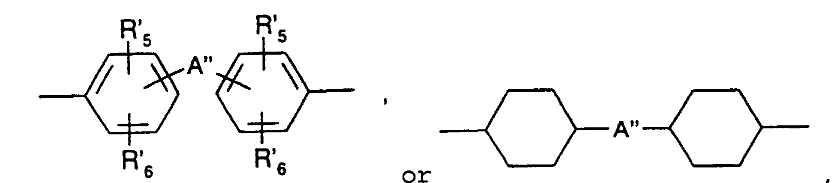
A', if n' or q is 3, is a radical of the formula CᵣH₂ᵣ₋₁- or N(CH₂CH₂-)₃,
r is 5 or 6,
A', if n' is 4, is the radical of the formula C(CH₂-)₄,
R'₅ and R'₆, independently of one another are hydrogen or alkyl having 1 to 8 carbon atoms,
A" is a radical of the formula -CH₂-, -CHR'₄-, -CR'₁R'₄-, -S-or a direct bond, where R'₁ and R'₄ are as defined,
p is 1 or 2,
D', if p is 1, is methyl and, if p is 2, is -CH₂OCH₂-,
R'₉ is methyl and R'₁₀ is as defined for R'₁,
q is 2 or 3,
y is 1, 2 or 3,
Q, if y is 1, is alkyl having 1 to 18 carbon atoms, a radical of the formula -OR'₁₆, -NR'₁₇R'₁₈ or fluorine,
Q, if y is 2, is a radical of the formula -O-A'''-O- or 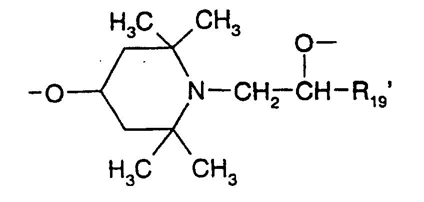
Q, if y is 3, is a radical of the formula R'₄C(CH₂O-)₃, N(C₂H₄O-)₃ or N(C₃H₆O-)₃, where
R'₄ is as defined,
R'₁₆ is as defined for R'₁,
R'₁₇ and R'₁₈ independently of one another are alkyl having 1 to 18 carbon atoms, benzyl, cyclohexyl or a 2,2,6,6-tetra- or 1,2,2,6,6-pentamethylpiperid-4-yl radical, or R'₁₇ and R'₁₈ together form butylene, pentylene, hexylene or the radical of the formula -CH₂CH₂-O-CH₂CH₂-,
A''' is as defined for A', if n' is 2,
R'₁₉ is hydrogen or methyl,
the substituents R'₁₄ independently of one another are hydrogen, alkyl having 1 to 9 carbon atoms or cyclohexyl, R'₁₅ is hydrogen or methyl, and
Z is a direct bond, -CH₂-, -C(R'₁₄-)₂ or -S-, where the substituents R'₁₄ are identical or different and are as defined
or a compound of the formula X 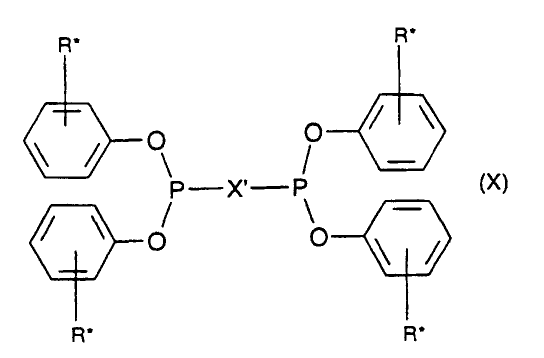
in which R^{*} is from one to five C₁-C₈ alkyl radicals;
X' is a radical 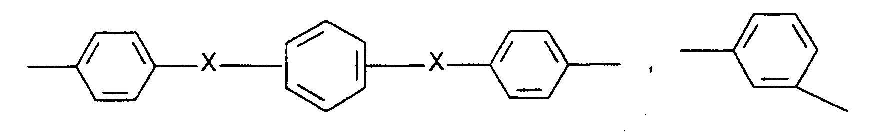 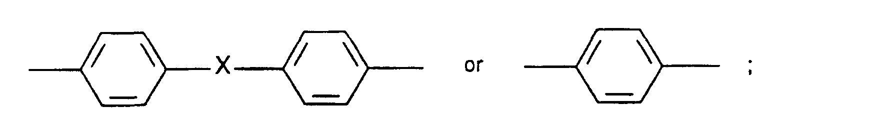 and X is a direct bond, -(O)S(O)-, -C(O)-, -S-, -O- or arylene.

6. A process according to claim 1, wherein the sterically hindered amine is a compound comprising at least one group of the formula XIII

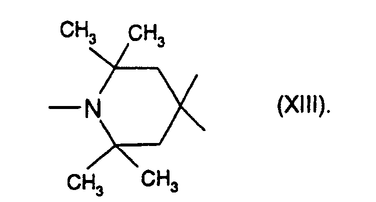

7. A process according to claim 1, wherein the sterically hindered amine is a compound of the formula 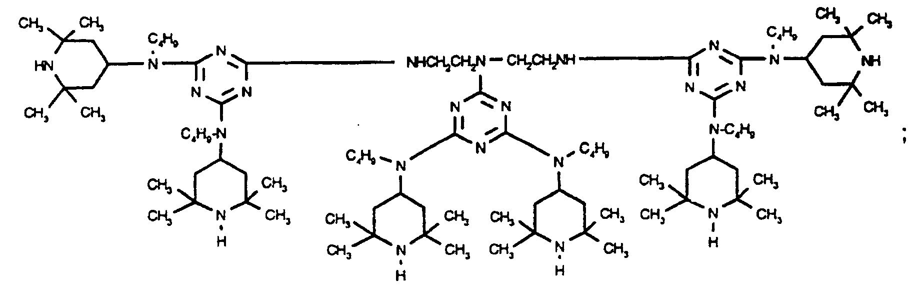 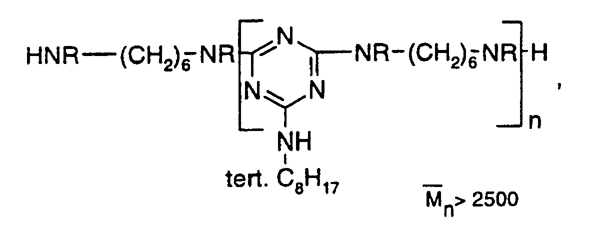 in which R is 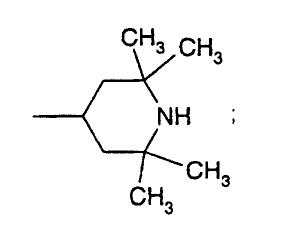 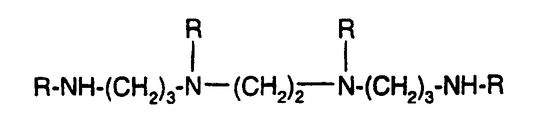 where R = 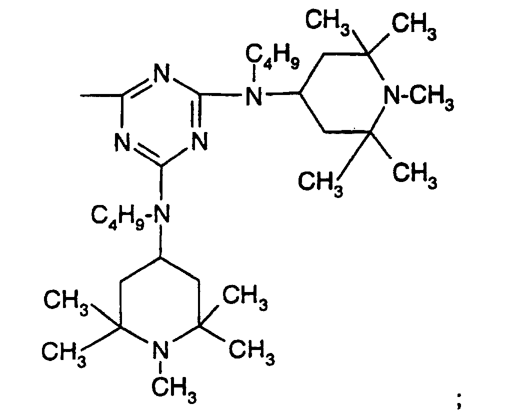 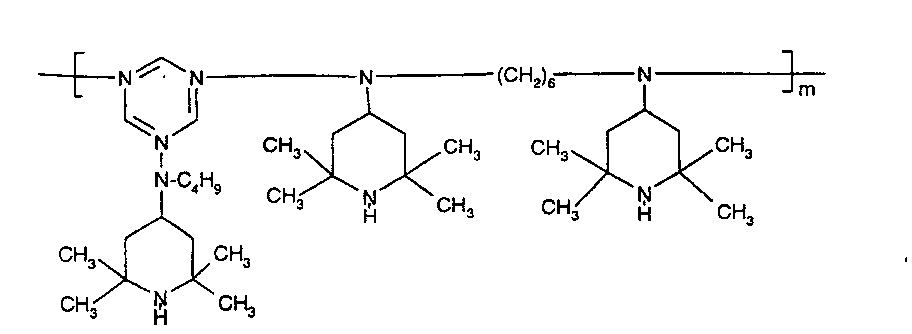 in which m is 2-200: 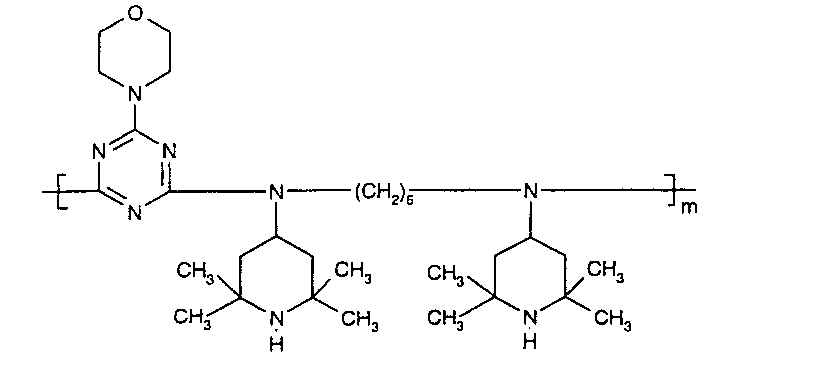 in which m is 2-200; 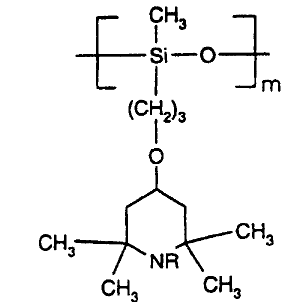 where R = H or CH₃: or 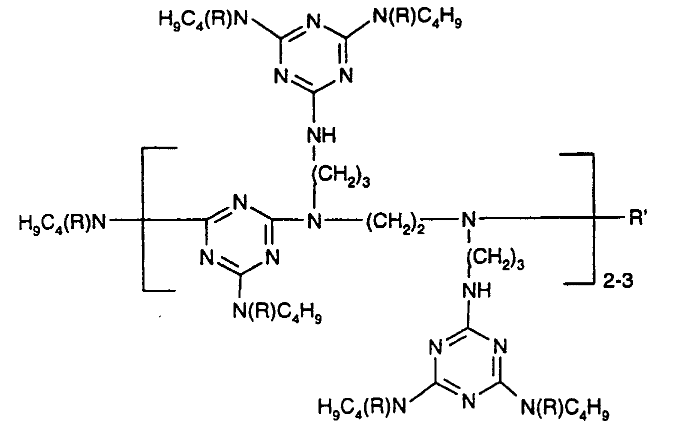 in which 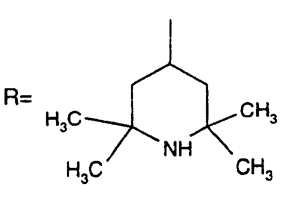 and 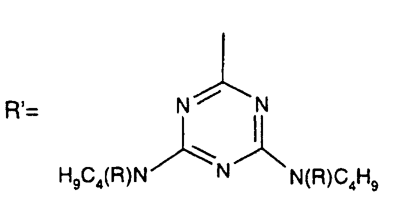 or H
{obtainable by reacting the product of reaction of trichlorotriazine and NH₂-(CH₂)₃-NH-(CH₂)₂-(CH₂)₃-NH₂ with 4-N-butyl-2,2,6,6-tetramethylpiperidine}.

8. A process according to claim 1, wherein the sterically hindered phenol is a compound of the formula XII 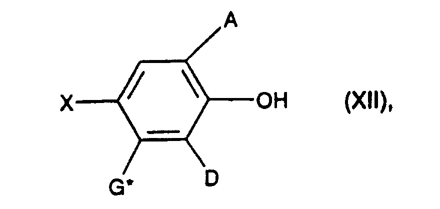 in which
A is hydrogen, C₁-C₂₄ alkyl, C₅-C₁₂ cycloalkyl, phenyl-C₁-C₄ alkyl, phenyl or a group or 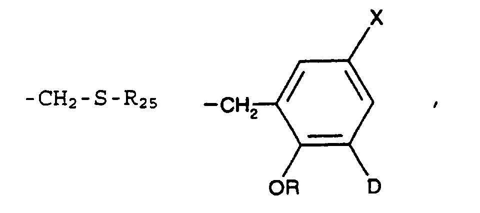
D is C₁-C₂₄ alkyl, C₅-C₁₂ cycloalkyl, phenyl-C₁-C₄ alkyl, phenyl or a group -CH₂-S-R₂₅,
X is hydrogen, C₁-C₁₈ alkyl or one of the groups -CₐH₂ₐ-S_{q}-R₂₆, -C_{b}H_{2b}-CO-OR₂₇, - C_{b}H_{2b}-CO-N(R₂₉) (R₃₀),-CH₂N (R₃₄) (R₃₅), 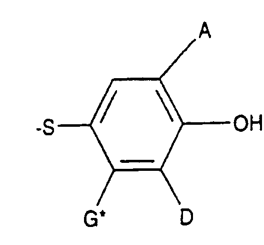 or 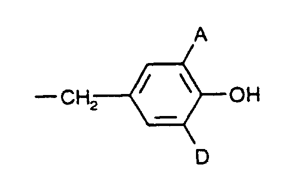
R is hydrogen or a group of the formula -CO-CH=CH₂,
G* is hydrogen or C₁-C₁₂ alkyl,
R₂₅ is C₁-C₁₆ alkyl, phenyl or a group -(CH₂)_{c}-CO-OR₂₈ or-CH₂CH₂OR₃₃,
R₂₆ is hydrogen, C₁-C₁₈ alkyl, phenyl, benzyl or a group 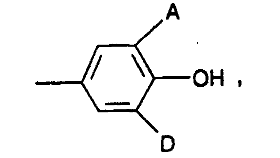 or is - (CH₂)_{c}-CO-OR₂₈ or -CH₂-CH₂-OR₃₃,
R₂₇ is C₁-C₃₀ alkyl or one of the groups -CHR₃₁-CH₂-S-R₃₂, 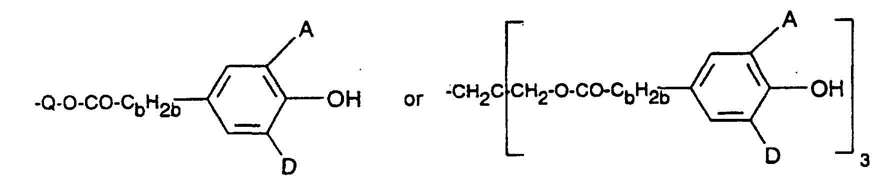 in which Q is C₂-C₈ alkylene, C₄-C₆ thiaalkylene or a group -CH₂CH₂(OCH₂CH₂)_{d}-,
R₂₈ is C₁-C₂₄ alkyl,
R₂₉ is hydrogen, C₁-C₁₈ alkyl or cyclohexyl,
R₃₀ is C₁-C₁₈ alkyl, cyclohexyl, phenyl, C₁-C₁₈ alkyl-substituted phenyl or one of the Groups 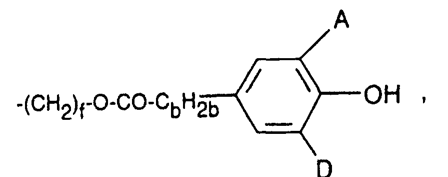 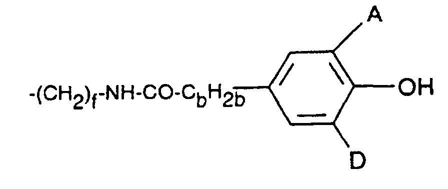 or 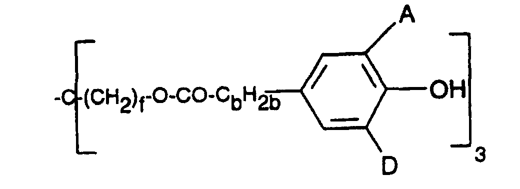 or R₂₉ and R₃₀ together are C₄-C₈alkylene which can be interrupted by -O- or -NH-,
R₃₁ is hydrogen, C₁-C₄alkyl or phenyl,
R₃₂ is C₁-C₁₈ alkyl,
R₃₃ is hydrogen, C₁-C₂₄ alkyl, phenyl, C₂-C₁₈ alkanoyl or benzoyl,
R₃₄ is C₁-C₁₈ alkyl, cyclohexyl, phenyl, C₁-C₁₈alkyl-substituted phenyl or a group 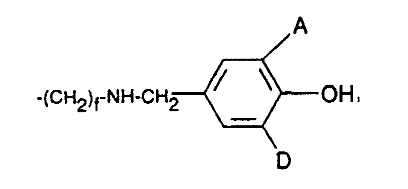
R₃₅ is hydrogen, C₁-C₁₈ alkyl, cyclohexyl or a group 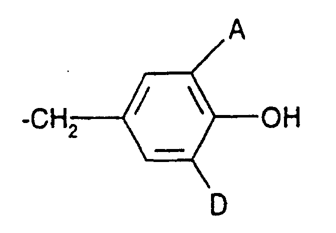
or R₃₄ and R₃₅ together are C₄-C₈ alkylene which can be interrupted by -O- or -NH-,
a is 0, 1, 2 or 3, b is 0, 1, 2 or 3, c is 1 or 2, d is 1 to 5, f is 2 to 8 and q is 1, 2, 3 or 4.

9. A process according to claim 1, wherein the sterically hindered phenol used is octadecyl β-(3,5-di-tert-butyl-4-hydroxyphenyl)propionate, tocopherol or 1,3,5-tris(3,5-di-tert-butyl-4-hydroxybenzyl)-2,4,6-trimethylbenzene.

10. A process according to claim 1, wherein the acid scavenger used is a compound which liberates no water under the reaction conditions and comes from the series consisting of the hydrotalcites, zeolites, metal soaps, metal carbonates or metal oxides.

11. A process according to claim 1, wherein a hydrotalcite is used as acid scavenger.

12. The use of 2 phosphorus(III) compound a sterically hindered phenol in a process for the polymerization of olefins over a transition metallocene catalyst, in order to stabilize the polymers which can be obtained in this way.

## Revendications

1. Procédé pour la fabrication de polymères oléfiniques par polymérisation sur un catalyseur métallocène de transition, caractérisé en ce que l'on réalise la polymérisation en présence d'un composé du phosphore (III) et d'un phénol à empêchement stérique, dans lequel on effectue l'addition seulement lorsque au moins 0,1% de la réaction globale a déjà été réalisé.

2. Procédé selon la revendication 1, caractérisé en ce qu'on ajoute comme autres composants une amine à empêchement stérique et/ou un fixateur d'acide.

3. Procédé selon la revendication 1 ou 2, caractérisé en ce qu'on effectue l'addition seulement lorsque au moins 1% de la réaction globale a déjà été réalisé.

4. Procédé selon la revendication 1 ou 2, caractérisé en ce qu'on utilise de 0,005 à 1% en poids, en particulier de 0,01 à 0,5% en poids des composants, par rapport au polymère.

5. Procédé selon la revendication 1, caractérisé en ce que le composé de phosphore (III) est un composé des formules V, VI, VII, VIII ou IX 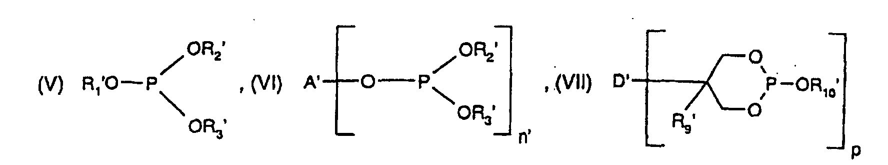 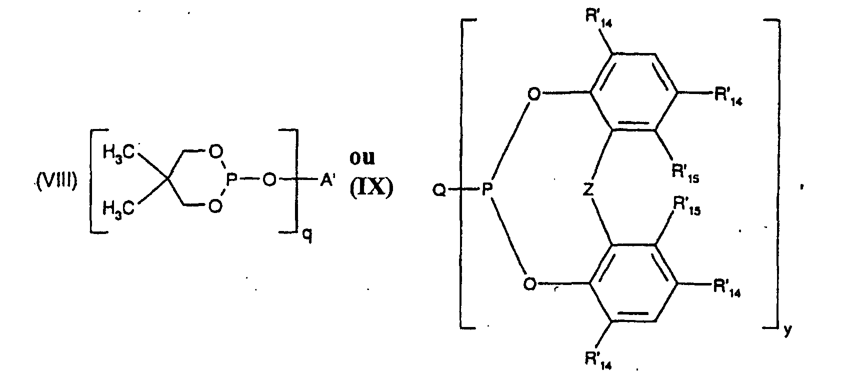 dans lesquelles
R'₁, R'₂ et R'₃ représentent indépendamment les uns des autres un groupe alkyle ayant de 1 à 18 atomes de carbone, un groupe alkyle ayant de 1 à 18 atomes de carbone substitué par des halogènes, -COOR'₄, -CN ou -CONR'₄R'₄, alkyle ayant de 2 à 18 atomes de carbone interrompu par -S-, -O- ou -NR'₄, cycloalkyle ayant de 5 à 8 atomes de carbone, phényle ou naphtyle, phényle ou naphtyle substitué par des halogènes, 1 à 3 groupes alkyle ou groupes alcoxy ayant en tout de 1 à 18 atomes de carbone, 2,2,6,6-tétraméthylpipérid-4-yle, N-allyl- ou N-benzyl- ou N-alkyl-2,2,6,6-tétraméthylpipérid-4-yle ayant de 1 à 4 atomes de carbone dans la partie alkyle ou N-alcanoyl-2,2,6,6-tétraméthylpipérid-4-yle ayant de 1 à 4 atomes de carbone dans la partie alkyle ou N-alkylèn-2,2,6,6-tétraméthylpipéridyle ou N-alkylèn-4-alcoxy-2,2,6,6-tétraméthylpipéridyle ayant de 1 à 3 atomes de carbone dans la partie alkyle et de 1 à 18 atomes de carbone dans la partie alcoxy,
R'₄ de préférence les groupes R'₄ représentent indépendamment les uns des autres un atome d'hydrogène, un groupe alkyle ayant de 1 à 18 atomes de carbone, cycloalkyle ayant de 5 à 12 atomes de carbone ou phényl-alkyle ayant de 1 à 4 atomes de carbone dans la partie alkyle,
n' est 2, 3 ou 4,
A', lorsque n' ou q est 2, représente un groupe alkylène ayant de 2 à 12 atomes de carbone, alkylène ayant de 2 à 12 atomes de carbone interrompu par -S-, -O- ou -NR'₄-, dans laquelle R'₄ a la signification indiquée, ou est un résidu de formule 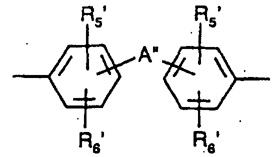 ou 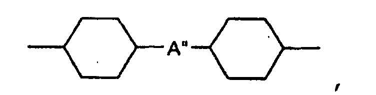
A', lorsque n' ou q est 3, représente un groupe de formule CᵣH₂ᵣ₋₁- ou N(CH₂CH₂-)₃,
r est 5 ou 6,
A', lorsque n' est 4, représente le groupe de formule C(CH₂-)₄,
R'₅ et R'₆ représentent indépendamment l'un de l'autre un atome d'hydrogène, un groupe alkyle ayant de 1 à 8 atomes de carbone,
A" est un groupe de formule -CH₂-, -CHR'₄-, -CR'₁R'₄-, -S- ou une liaison directe, formules dans lesquelles R'₁ et R'₄ ont les significations indiquées, p est 1 ou 2,
D', lorsque p est 1, et le méthyle et lorsque p est 2, est -CH₂OCH₂-,
R'₉ est le méthyle, et R'₁₀ a la signification de R'₁,
q est 2 ou 3,
y est 1, 2 ou 3,
Q, lorsque y est 1, représente un groupe alkyle ayant de 1 à 18 atomes de carbone, un résidu de formule -OR'₁₆-, -NR'₁₇R'₁₈ ou un atome de fluor,
Q, lorsque y est 2, représente un groupe de formule 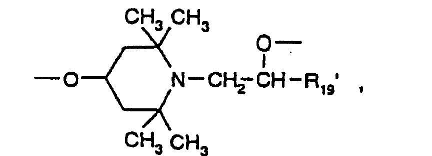 -O-A"'-O- ou
Q, lorsque y est 3, est un résidu de formule R'₄C(CH₂O-)₃, N(C₂H₄O-)₃ ou N(C₃H₆O-)₃, dans laquelle
R'₄ a la signification indiquée,
R'₁₆ a la signification de R'₁,
R'₁₇ et R'₁₈ représentent indépendamment l'un de l'autre un groupe alkyle ayant de 1 à 18 atomes de carbone, benzyle, cyclohexyle, 2,2,6,6-tétra- ou 1,2,2,6,6-penta-méthylpipérid-4-yle, ou R'₁₇ et R'₁₈ forment ensemble un groupe butylène, pentylène, hexylène ou le résidu de formule -CH₂CH₂-O-CH₂CH₂-,
A"' a la signification de A', lorsque n' est 2,
R'₁₉ est un atome d'hydrogène ou un groupe méthyle,
les substituants R'₁₄ sont indépendamment les uns des autres un atome d'hydrogène, un groupe alkyle ayant de 1 à 9 atomes de carbone ou cyclohexyle,
R'₁₅ représente un atome d'hydrogène ou un groupe méthyle et
Z est une liaison directe, -CH₂-, -C(R'₁₄-)₂ ou -S-, dans laquelle les substituants R'₁₄ sont identiques ou différents et ont les significations indiquées
ou un composé de formule X 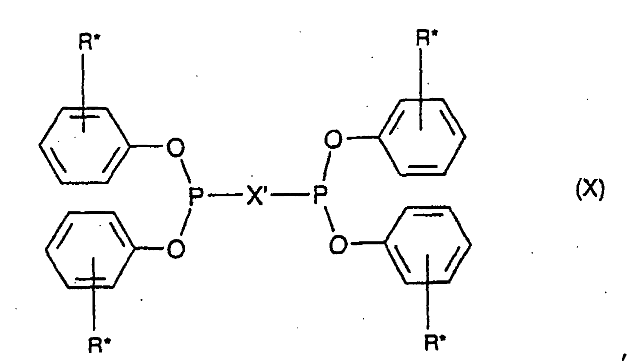
dans laquelle R^{*} représente de un à cinq groupes alkyle en C₁ à C₈ ;
X' un groupe, 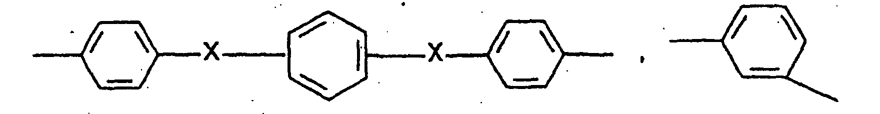 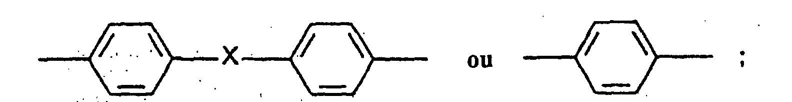
et X représente une liaison directe, -(O)S(O)-, -C(O)-, -S-, -O- ou un groupe arylène.

6. Procédé selon la revendication 1, caractérisé en ce que l'amine à empêchement stérique est un composé qui contient au moins un groupe de formule XIII

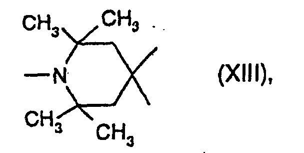

7. Procédé selon la revendication 1, caractérisé en ce que l'amine à empêchement stérique est un composé de formule 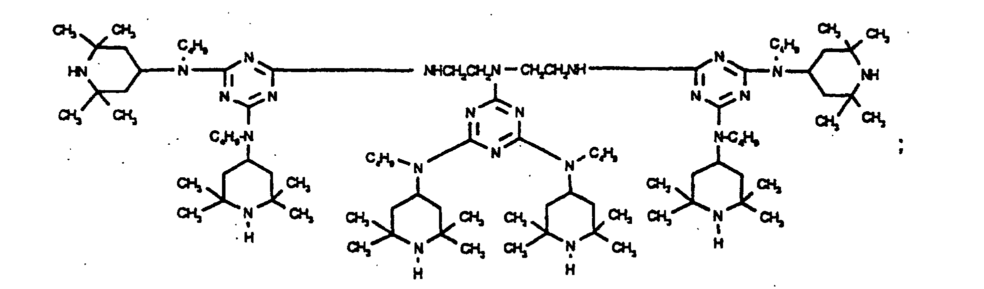 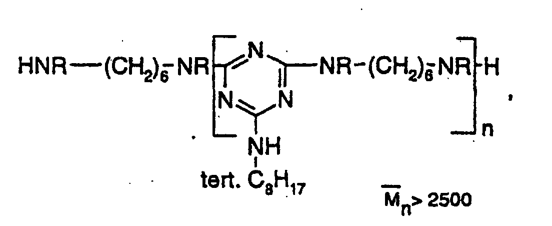 dans laquelle R représente 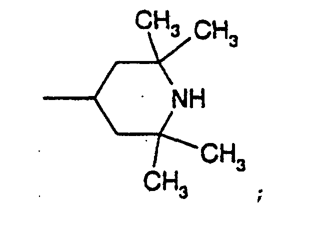 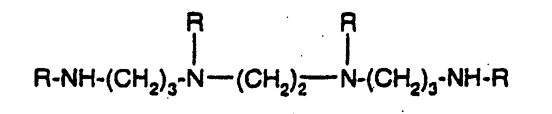 avec 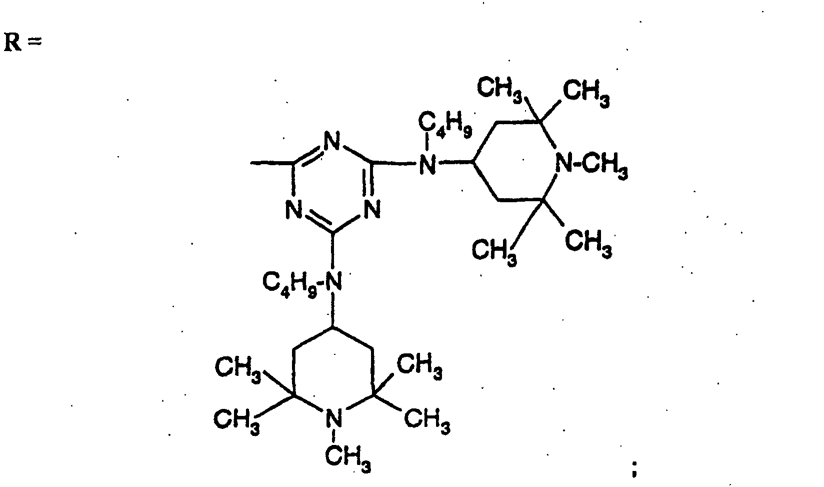 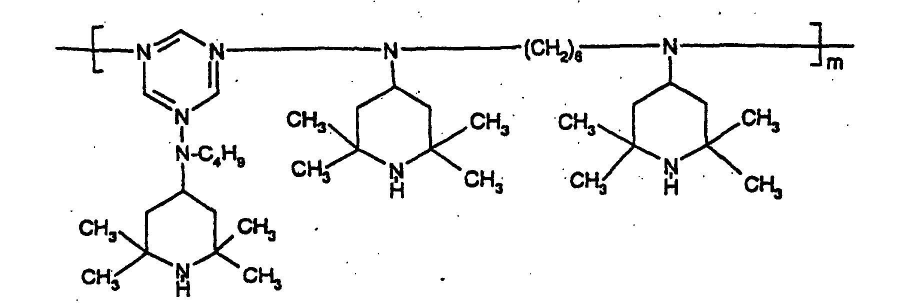 dans laquelle m représente un nombre de 2 à 200 ; 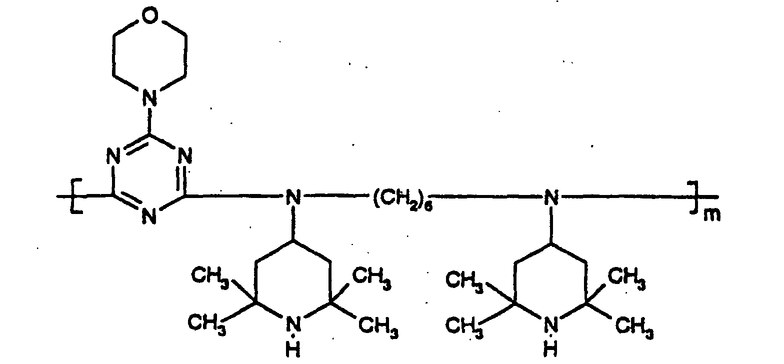 dans laquelle m représente un nombre de 2 à 200; 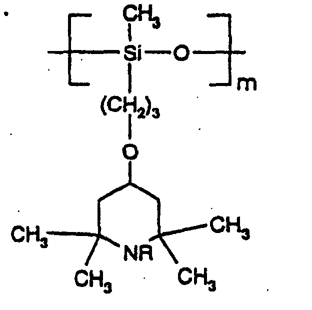 **avec R = H ou CH**_{**3**} **ou** 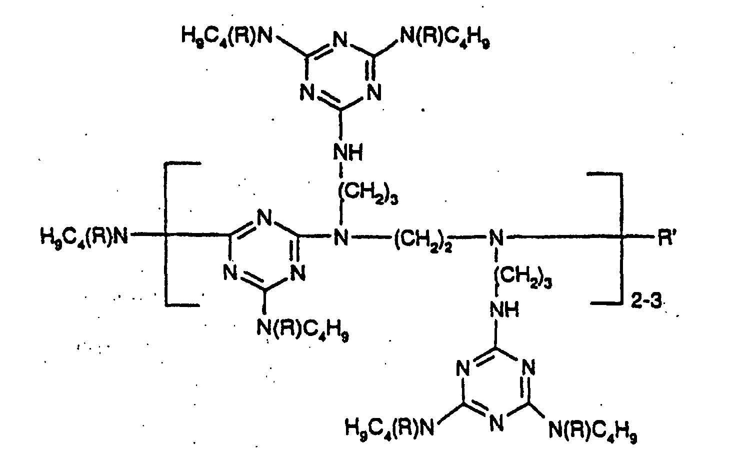 dans laquelle R = 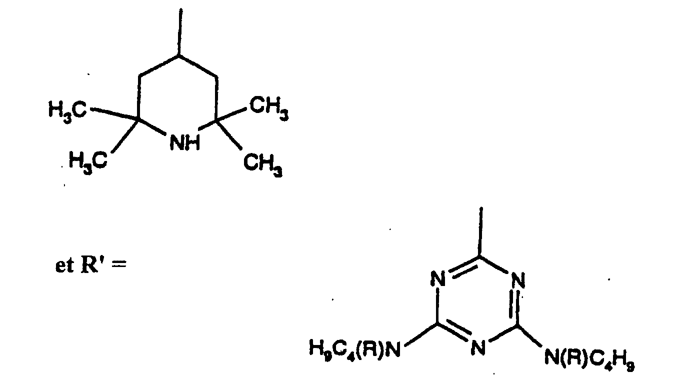 **ou H.**
(qu'on peut obtenir par réaction du produit de réaction de la trichlorotriazine et de NH₂-(CH₂)₃-NH-(CH₂)₂-(CH₂)₃-NH₂ avec la 4-N-butyl-2,2,6,6-tétraméthylpipéridine).

8. Procédé selon la revendication 1, caractérisé en ce que le phénol à empêchement stérique est un composé de formule XII 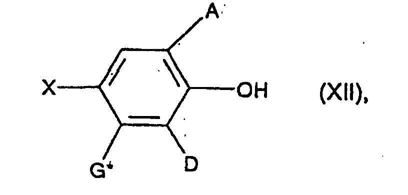 dans laquelle
A représente un atome d'hydrogène, un groupe alkyle en C₁ à C₂₄, cycloalkyle en C₅ à C₁₂, phényl-alkyle en C₁ à C₄, phényle ou un groupe -CH₂-S-R₂₅ ou 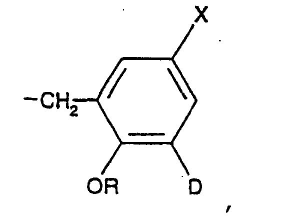
D représente un groupe alkyle en C₁ à C₂₄, cycloalkyle en C₅ à C₁₂, phényl-alkyle en C₁ à C₄, phényle ou un groupe -CH₂-S-R₂₅,
x représente un atome d'hydrogène, un groupe alkyle en C₁ à C₁₈ ou un des groupes -CₐH₂ₐ-S_{q}-R₂₆, -C_{b}H_{2b}-CO-OR₂₇, -C_{b}H_{2b}-CO-N(R₂₉) (R₃₀), -CH₂N(R₃₄) (R₃₅), 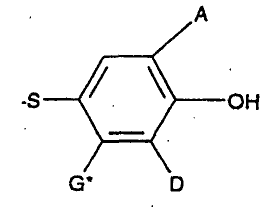 **ou** 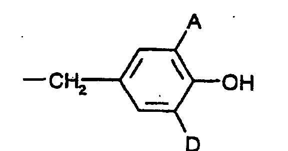
R représente un atome d'hydrogène ou un groupe de formule -CO-CH=CH₂,
G^{*} représente un atome d'hydrogène ou un groupe alkyle en C₁ à C₁₂,
R₂₅ représente un groupe alkyle en C₁ à C₁₈, phényle ou un groupe - (CH₂)_{c}-CO-OR₂₈ ou -CH₂CH₂OR₂₃,
R₂₆ représente un atome d'hydrogène, un groupe alkyle en C₁ à C₁₈, phényle, benzyle ou un groupe 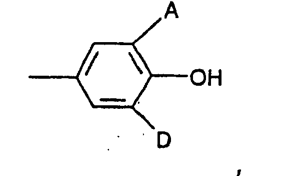 ou -(CH₂)_{c}-CO-OR₂₈ ou -CH₂-CH₂-OR₃₃,
R₂₇ représente un groupe alkyle en C₁ à C₃₀ ou l'un des groupes -CHR₃₁-CH₂-S-R₃₂, 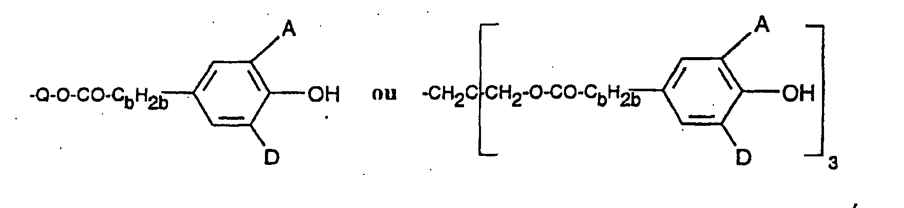 dans laquelle Q est un groupe alkylène en C₂ à C₈, thiaalkylène en C₄ à C₆ ou un groupe -CH₂CH₂(OCH₂CH₂)_{d}-,
R₂₈ représente un groupe alkyle en C₁ à C₂₄,
R₂₉ représente un atome d'hydrogène, un groupe alkyle en C₁ à C₁₈ ou cyclo-hexyle,
R₃₀ représente un groupe alkyle en C₁ à C₁₈, cyclohexyle, phényle, phényle substitué par un groupe alkyle en C₁ à C₁₈ ou l'un des groupes 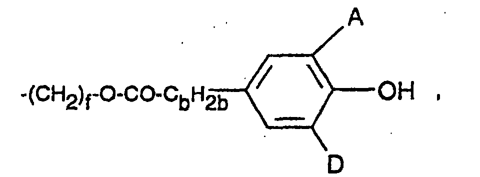 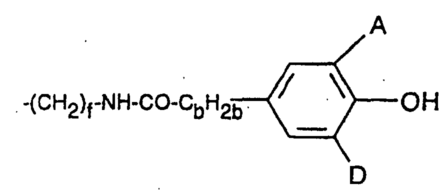 **ou** 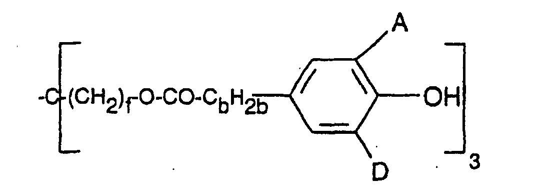
ou R₂₉ et R₃₀ représentent ensemble un groupe alkylène en C₄ à C₈, qui peut être interrompu par -O- ou -NH-,
R₃₁ représente un atome d'hydrogène, un groupe alkyle en C₁ à C₄ ou phényle,
R₃₂ représente un groupe alkyle en C₁ à C₁₈,
R₃₃ représente un atome d'hydrogène, un groupe alkyle en C₁ à C₂₄, phényle, alcanoyle en C₂ à C₁₈ ou benzoyle,
R₃₄ représente un groupe alkyle en C₁ à C₁₈, cyclohexyle, phényle, phényle substitué par un groupe alkyle en C₁ à C₁₈ ou un groupe 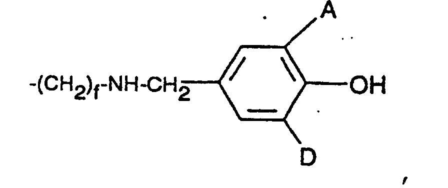
R₃₅ représente un atome d'hydrogène, un groupe alkyle en C₁ à C₁₈, cyclohexyle, ou un groupe 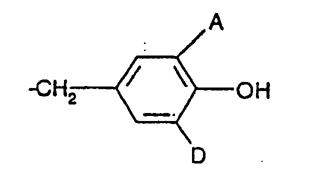 ou
R₃₄ et R₃₅ représentent ensemble un groupe alkylène en C₄ à C₈, qui peut être interrompu par -O- ou -NH-,
a est 0, 1, 2 ou 3, b est 0, 1, 2 ou 3, c est 1 ou 2, d est 1 à 5, f est 2 à 8, et q est 1, 2, 3 ou 4.

9. Procédé selon la revendication 1, caractérisé en ce que l'on utilise comme phénol à empêchement stérique l'ester octadécylique de l'acide [β-(3,5-di-tert.-butyl-4-hydroxyphényl)-propionique, le tocophérol ou le 1,3,5-Tris-(3,5-di-tert.-butyl-4-hydroxybenzyl)-2,4,6-triméthylbenzène

10. Procédé selon la revendication 1, caractérisé en ce que l'on utilise comme fixateur d'acide un composé ne libérant pas d'eau dans les conditions de réaction choisi parmi les hydrotalcites, les zéolites, les savons de métaux, les carbonates métalliques et les oxydes métalliques.

11. Procédé selon la revendication 1, caractérisé en ce qu'on utilise comme fixateur d'acide un hydrotalcite.

12. Utilisation d'un composé de phosphore (III) et d'un phénol à empêchement stérique dans un procédé pour la polymérisation d'oléfines sur un catalyseur métallocène de transition pour la stabilisation des polymères ainsi obtenus.
